# EUROPEAN PATENT APPLICATION

(11) **EP 1 469 331 A1**
(43) Date of publication of application: **20.10.2004**
(21) Application number: 03703049.1
(22) Date of filing: 24.01.2003
(51) Int. Cl.: G02B 6/42

(54) **OPTICAL TRANSMISSION/RECEPTION MODULE USING A FERRULE, OPTICAL TRANSMISSION/RECEPTION MODULE CONNECTION APPARATUS, AND OPTICAL TRANSMISSION/RECEPTION MODULE MANUFACTURING METHOD**

(30) Priority: 25.01.2002 JP 2002017359; 30.01.2002 JP 2002021105; 26.02.2002 JP 2002049982; 28.02.2002 JP 2002054393; 01.03.2002 JP 2002056080; 03.04.2002 JP 2002101359; 03.04.2002 JP 2002101484; 03.04.2002 JP 2002101677; 03.04.2002 JP 2002101699; 16.07.2002 JP 2002206978
(71) Applicant: MATSUSHITA ELECTRIC INDUSTRIAL CO., LTD., Kadoma-shi, Osaka 571-0050 (JP)
(72) Inventor: ITABASHI, Nobutaka, Yokohama-shi, Kanagawa 221-0861 (JP); KOBAYASHI, Masaki, Yokohama-shi, Kanagawa 226-0022 (JP); AKIYA, Nobuyuki, Yokohama-shi, Kanagawa 244-0812 (JP); TOUGOU, Hitomaro, Yokohama-shi, Kanagawa 226-0014 (JP)
(74) Representative: Grünecker, Kinkeldey, Stockmair & Schwanhäusser Anwaltssozietät
(86) International application number: PCT/JP2003/000666
(87) International publication number: WO 2003/062895

(57) **Abstract**

It is an object of the present invention to provide a light sending and receiving module by a ferrule, a connecting device of the light sending and receiving module and a method of manufacturing the light sending and receiving module characterized in that: the light sending and receiving module is interposed between the butting faces of the optical fibers without embedding an optical filter; deterioration of the optical characteristic can be prevented by eliminating a gap between the optical fiber and the optical filter; the number of ferrules is decreased so as to reduce the manufacturing cost; and further the size can be reduced by omitting an adapter.

According to the present invention, there are provided a ferrule joining member (1A), in which a portion or all of the circumferential face of an optical fiber (4) is exposed from an end portion of the ferrule in which the optical fiber (4) is embedded, and a guide sleeve (2A) for positioning into which the ferrule joining member (1A) is inserted. When end faces of the optical fibers (4) are butted to each other via an optical filter (5) so as to conduct light branching, the optical fibers (4) are optically coupled to each other. Due to the above structure, no gaps are formed between the optical fiber (4) and the optical filter (5). Therefore, the occurrence of irregular reflection can be prevented.

## Description

### <Technical Field>

The present invention relates to a communication device for connecting a central telephone station with a home by one optical fiber using a media converter. More particularly, the present invention relates to a light sending and receiving module by ferrules such as a light turnout or a light branching filter by which the manufacturing cost can be reduced and the deterioration of the optical characteristic can be prevented.

### <Background Art>

Recently, a communication system capable of conducting two-way high speed communication, in which an optical fiber is laid between a central telephone exchange and a common home, has been widely spread. In this communication system, in order to conduct two-way communication with one optical fiber, signals of different wave-lengths are made into multiple states and sent out to the optical fiber and converted into electric signals for each wavelength by a light sending and receiving modules provided in the central telephone exchange and home.

In this light sending and receiving module, signals of different wave-lengths are separated as follows. For example, an optical filter is provided in such a manner that the filter obliquely crosses the optical fiber. One of the signals of different wave-lengths is reflected or refracted by this filter, and the other signal is transmitted so that the signals of different wave-lengths can be separated.

Concerning this type system, for example, the official gazette of JP-A-8-179168 discloses an adapter, the adapter body of which is connected to a plug body of a plug having a ferrule, the adapter comprising: an alignment ferrule fixed in the optical axis direction in the adapter body; an optical fiber element wire extending in the optical axis direction in the alignment ferrule; and an optical filter embedded in the alignment ferrule in such a manner that the optical filter crosses the optical fiber element wire.
In the above well known example, the following problems may be encountered. Since a slit is formed in the alignment ferrule and the optical filter is embedded in this slit, it can not be avoided that a gap is formed between the optical filter and the slit. Further, it is very difficult to polish the slit. Therefore, the optical signals are irregularly reflected. Since the optical filter is provided in such a manner that it crosses the element wire of the optical fiber, only a signal of a single wave-length can be processed.

Further, not only the two ferrules, in which the optical fiber is embedded, but also the alignment ferrule is used, that is, three ferrules in total are required. Accordingly, the manufacturing cost is raised. Moreover, since the adapter is used, the size of the entire structure is extended.

Further, when the butting face is formed, the optical fiber rises to the surface by pressure given to the butting face. As a result, the cutting face of the optical fiber becomes rough. However, it is very difficult to polish this rough cutting face in the later process. Accordingly, irregular reflection of the optical signal is caused.

In the conventional light sending and receiving module, since the sizes of the light emitting element and the light receiving element are relatively large, when the light emitting element and the light receiving element are installed in a coupling section of the optical fiber, a large space is required for installation, which extends the size of the light sending and receiving module. Since it is difficult for the light emitting element and the light receiving element to be arranged close to the coupling section of the optical fiber, light is dispersed and the coupling efficiency is deteriorated. Further, since the prices of the light emitting element and the light receiving element are high, the light sending and receiving module becomes expensive.

In the structure in which the light emitting element and the light receiving element, which are previously mounted on a printed board, are arranged in a ferrule, it is necessary that the focuses of the light emitting element and the light receiving element are positioned at the center of the optical filter while the printed board is being moved along the optical fiber. Therefore, it takes much time and labor. Accordingly, the working efficiency is deteriorated in the process of assembling.

For example, in the case where the light receiving element is fixed to the ferrule joining member by adhesive, transmission of the optical signal between the optical fiber and the light receiving element is conducted via the adhesive layer. Therefore, it is necessary that the light receiving element is fixed by a highly transparent adhesive. Accordingly, the usable adhesive is limited.
When the end portions of the ferrule joining member and the optical fiber are obliquely cut, if the inclination angle θ of one ferrule joining member and that of the other ferrule joining member are erroneously different from each other when they are manufactured, in the case where both the ferrule joining members are butted to each other, end faces of the optical fibers are contacted with each other before the inclination faces tightly come close to each other. Therefore, stress concentration is caused on the end faces of the optical fibers and the optical characteristic is remarkably deteriorated.

Concerning the arrangement method of arranging the optical filter, a method is well known in which a slit is formed in the alignment ferrule and the optical filter is embedded in this slit. However, in this case, it is impossible to avoid the generation of a gap between the optical filter and the slit. Further, since it is very difficult to polish the slit, optical signals are irregularly reflected.

In the conventional optical correspondence module, in order to reinforce a core wire connecting portion of the optical fiber, a guide sleeve is used which is outwardly inserted into the joining portions of both the ferrules so as to join the ferrules to each other. In this case, adhesive, which has dripped from the dripping means located in an upper portion in which a window portion is arranged, is liable to flow downward by the self-weight from the joining face of the optical fiber before the adhesive is solidified.

As a result, there is a possibility that the adhesive accumulating in a bottom portion of the guide sleeve pushes up an end portion of the optical fiber on the joining portion side of the ferrule.

The present invention has been accomplished in view of the above problems of the prior art. It is an object of the present invention to provide a light sending and receiving module by a ferrule, a connecting device of the light sending and receiving module and a method of manufacturing the light sending and receiving module, characterized in that: the light sending and receiving module is interposed between the butting faces of the optical fibers without embedding an optical filter; deterioration of the optical characteristic can be prevented by eliminating a gap between the optical fiber and the optical filter; the number of ferrules is decreased so as to reduce the manufacturing cost; and further the size can be reduced by omitting an adapter.

The following points listed below are objects of the present invention.
(1) Irregular reflection of optical signals is prevented by forming a cutting face of the optical fiber into a smooth plane.
(2) Bare chips, especially a face light emitting element and a face light receiving element are used for the light emitting element and the light receiving element, the size can be reduced and the optical coupling efficiency can be enhanced.
(3) When a wiring pattern is formed on a ferrule, it is possible to provide a light sending and receiving module by ferrules in which a printed board is omitted. The present invention provide the light sending and receiving module and the manufacturing method thereof, so that the number of parts can be decreased and further the size can be reduced and furthermore the manufacturing cost can be reduced.
(4) It is possible to provide a wide selection of usable adhesive, and the optical coupling efficiency can be enhanced.
(5) In the case where the ferrule joining members are butted to each other, no end portions of the optical fibers are damaged and no gaps are generated between the end faces.
(6). The optical characteristic is excellent and the productivity is high.
(7) The printed board is eliminated. According to the elimination of the printed board, the number of parts is decreased and the size is reduced and further the manufacturing cost is lowered.
(8) When the ferrule joining portions, to which the optical fibers are attached, are joined and bonded to each other, no axial dislocation is caused in the optical fibers.
(9) The device housing is downsized and the number of parts is decreased so as to reduce the manufacturing cost.

### <Disclosure of the Invention>

First, the present invention provides a light sending and receiving module by ferrules formed by optically coupling the ferrules in which optical fibers are embedded, comprising: a ferrule joining member in which a portion or all of the circumferential face of the optical fiber is exposed from an end portion of each ferrule; and a guide sleeve used for positioning, into which the ferrule joining member is inserted, wherein the guide sleeve is composed so that the optical fibers can be optically coupled to each other when the end faces of the optical fibers are butted to each other via an optical filter or half mirror so as to conduct light-branching.

Accordingly, an optical filter or half mirror is interposed on the butting faces of the optical fibers without being embedded, and a gap between the optical fiber and the optical filter or between the optical fiber and the half mirror is eliminated so that the occurrence of irregular reflection can be prevented. Therefore, deterioration of the optical characteristic can be prevented.

Since the optical filter or half mirror is provided between the end faces of the optical fibers without being embedded, it is unnecessary to provide a ferrule for embedding the optical filter or half mirror. Accordingly, the manufacturing cost can be reduced.

Since the optical filter or half mirror is fixed by the optical fiber and further the optical fiber is fixed by the guide sleeve, no adapter is required. Therefore, the module can be downsized.

Secondly, the present invention provides a light sending and receiving module by ferrules, in which an end portion of the joining member of each ferrule is cut off, a step portion is formed in the end portion of each ferrule, and a portion or all of the circumferential face of the optical fiber is exposed from a flat face of the step portion.

Accordingly, it is possible to provide a light emitting element or light receiving element in the step portion in the first invention.

Thirdly, the present invention provides a light sending and receiving module by ferrules, in which a window portion is formed by cutting out the guide sleeve, and the window portion is located in an upper portion of the optical coupling portion of the optical fiber.

Due to the foregoing, in the case where the light emitting element or light receiving element is deteriorated in the second invention, the deteriorated parts can be replaced by the work conducted through the window portion. Therefore, the maintenance work can be easily performed.

Fourthly, the present invention provides a light sending and receiving module by ferrules, in which a light receiving element capable of receiving an optical signal which is optically branched by the optical filter or capable of receiving an optical signal optically turned out by the half mirror is attached to the window portion.

Due to the foregoing, in the third invention, a window portion is provided in the guide sleeve, and the light receiving element is attached to it. Therefore, it is possible to take out a specific signal out of the signals of different wave-lengths spreading in the optical fiber.

Fifthly, the present invention provides a light sending and receiving module by ferrules, in which a light emitting element or light receiving element is attached to the other end portion of the ferrule joining member.

Due to the foregoing, at the other end portion of the ferrule joining member, it becomes possible for the light emitting element to send out a signal or it is possible to for the light receiving element to compose a light turnout.

Sixthly, the present invention provides a light sending and receiving module by ferrules, in which laterally sectional shapes of the ferrule joining member and the guide sleeve are respectively formed circular or polygonal.

In the first to the fifth embodiment, when laterally sectional shapes of the ferrule and the guide sleeve are respectively formed circular, both can be easily assembled to each other.

Further, in the first to the fifth embodiment, when laterally sectional shapes of the ferrule joining member and the guide sleeve are respectively formed polygonal, the ferrule joining member can not be rotated with respect to the guide sleeve. Accordingly, there is no possibility that an end face of the step portion is dislocated in the circumferential direction at the time of butting.

Accordingly, the optical filter can be easily interposed between the ferrule joining members.

Seventhly, the present invention provides a light sending and receiving module by ferrules, in which the ferrule joining member includes ferrule joining members for joining one face in which one end portion of the ferrule is formed into a step portion and also includes ferrule joining members for joining both faces in which both end portions of the ferrule are formed into a step portion, the ferrule joining members for joining both faces are arranged in series and located at the central portion, the ferrule joining members for joining one face are arranged at both end portions of the ferrule joining members for joining both faces, and the optical fibers are optically coupled to each other when the ferrule joining members for joining, which are adjacent to each other, are inserted into the guide sleeve.

Accordingly, in the first to the sixth invention, the ferrule joining members can be arranged in series via the guide sleeve. Therefore, the module can be simplified and further downsized. Accordingly, the manufacturing cost can be reduced.

Eighthly, the present invention provides a light sending and receiving module by ferrules, in which units are arranged in series which are formed in such a manner that a pair of ferrule joining members for joining one face, in which one end portion of the ferrule is formed into a step portion, are inserted into the guide sleeve, and the units adjacent to each other are connected in series via the optical fiber.

Due to the foregoing, the ferrule joining members can be arranged in series via the guide sleeve. Therefore, the module can be simplified and further downsized. Accordingly, the manufacturing cost can be reduced. Moreover, the ferrule joining members can be arranged in series via the optical fiber. Therefore, the degree of freedom of setting a span between the ferrule joining members can be increased.

Ninthly, the present invention provides a light sending and receiving module by ferrules, in which the guide sleeve is mounted on a printed board.

Due to the foregoing, for example, when the light receiving element or light emitting element are mounted on the printed board, the light receiving portion or light emitting portion can be compactly accommodated in the sleeve.

Tenthly, the present invention provides a light sending and receiving module by ferrules, in which the ferrule joining member exposes a portion or all of the circumferential face of the optical fiber embedded.

Accordingly, in the first to the ninth invention, management of parts can be easily performed.

Eleventhly, the present invention provides a light sending and receiving module by ferrules, in which the ferrule joining member includes a substantially flat face, which is not perpendicular to the axial direction, formed at the end portion.

Accordingly, in the first to the tenth invention, end portions of the ferrules can be easily butted.

Twelfthly, the present invention provides a light sending and receiving module by ferrules comprising:
an insertion pore formed in the ferrule joining member so that the insertion pore can penetrate the ferrule joining member in the axial direction; and
a small width groove formed in the ferrule joining member so that the small width groove can cross the axial direction of the ferrule joining member, wherein the optical fibers are optically coupled to each other when an optical filter of half mirror is inserted into the small width groove and the end faces of the optical fibers are butted to each other via an optical filter or half mirror so as to conduct light-turnout.

Due to the foregoing, the window portion is abolished. When the small width groove is formed in the ferrule joining member, the periphery of the optical fiber is fixed to and held by the insertion pore. Therefore, a rise of the optical fiber by the pressure generated at the time of cutting is not caused, and a smooth cutting face can be formed. Accordingly, there is no possibility that irregular reflection is caused.

When it is composed in such a manner that the optical fiber can be inserted into and drawn out from the insertion pore after cutting, the cutting face can be polished. Due to the foregoing, the occurrence of irregular reflection of the optical signal can be positively prevented.

In the case where the optical fiber is returned into the insertion pore again, it is preferable that the optical fiber and the ferrule joining member are fixed to each other by adhesive.

Thirteenthly, the present invention provides a light sending and receiving module by ferrules comprising: an insertion pore formed in the ferrule joining member so that the insertion pore can penetrate the ferrule joining member in the axial direction; a window portion having a bottom formed in the ferrule joining member so that a portion of the circumferential faces of the pair of optical fibers inserted into the insertion pores can be exposed; a holding portion for holding the optical fiber when a bottom face of the window portion is formed being located on the opening side of the window portion compared with the axis of the optical fiber; and a small width groove formed in the ferrule joining member so that the small width groove can cross the axial direction of the ferrule joining member, wherein the optical fibers are optically coupled to each other when an optical filter of half mirror is inserted into the small width groove and the end faces of the optical fibers are butted to each other via an optical filter or half mirror so as to conduct light turnout.

Due to the foregoing, even when a portion of the circumferential face of the optical fiber is exposed from the ferrule joining member by forming the window portion, a bottom face of the window portion is located at a position closer to the opening side of the window portion than the neutral point of the optical fiber, and a holding portion for holding the optical fiber is formed. Therefore, even when the small width groove is formed in the ferrule joining member while the optical fiber is being inserted into the insertion pore, a smooth end face can be formed, and there is no possibility that the optical fiber rises up by the pressure generated at the time of forming the small width groove. Accordingly, no irregular reflection of the optical signal is caused.

When it is composed in such a manner that the optical fiber can be inserted into and drawn out from the insertion pore after cutting, the cutting face can be polished. Due to the foregoing, the occurrence of irregular reflection of the optical signal can be positively prevented. In the case where the optical fiber is returned into the insertion pore again, it is preferable that the optical fiber and the ferrule joining member are fixed to each other by adhesive. Fourteenthly, the present invention provides a light sending and receiving module by ferrules, in which the ferrule joining member is made of glass.

Due to the foregoing, when the ferrule joining member is composed so that light can be transmitted through the ferrule joining member in the twelfth or the thirteenth invention, even if the window portion is abolished, no problems are caused in the optical signal transmission in the ferrule joining member.

Fifteenthly, the present invention provides a light sending and receiving module by ferrules, in which a light receiving element capable of receiving an optical signal which is optically branched by the optical filter or capable of receiving an optical signal optically branched by the half mirror is attached to the window portion.

According to the present invention, since the light receiving element is attached to the window portion provided in the ferrule joining member in the twelfth to the fourteenth invention, a specific signal can be taken out from signals of different wave-lengths transmitted in the optical fiber.

Sixteenthly, the present invention provides a light sending and receiving module by ferrules, in which a light emitting element or light receiving element is attached to one end portion of the ferrule joining member.

Accordingly, in the twelfth to the fifteenth invention, at one end portion of the ferrule joining member, it is possible to send out a signal outside from the light emitting element and it is also possible to compose a light turnout by the light receiving element.

Seventeenthly, the present invention provides a light sending and receiving module by ferrules, in which the ferrule joining member is mounted on a printed board.

Due to the foregoing, for example, when the light receiving element or the light emitting element is mounted on the printed board, the light receiving portion or the light emitting portion can be compactly accommodated in the sleeve.

Eighteenthly, the present invention provides a light sending and receiving module by ferrules formed by optically coupling the ferrules in which optical fibers are embedded, comprising a ferrule joining member in which a portion or all of the circumferential face of the optical fiber is exposed from an end portion of each ferrule, wherein the ferrule joining members are optically coupled to each other when end faces of the optical fibers are butted to each other via an optical filter or half mirror, and a surface light emitting element or surface light receiving element is provided in the optical coupling portion.

Due to the above structure, when the small face light emitting element or the small face light receiving element is provided in the light coupling portion of the optical fiber, the light sending and receiving module can be downsized. Further, the optical fiber and the light emitting face of the light emitting element can be arranged close to each other and the optical fiber and the light receiving face of the light receiving element can be arranged close to each other. Therefore, it becomes possible to send and receive an optical signal before the diffusion of light.

Accordingly, the coupling efficiency can be enhanced. When the optical filter or the half mirror is interposed on the butting face of the optical fibers, no gap is formed between the optical fiber and the optical filter and between the optical fiber and the half mirror. Therefore, the occurrence of irregular reflection can be prevented. As a result, the optical characteristic can be prevented from being deteriorated.

Further, it becomes unnecessary to provide a ferrule for embedding the optical filter or the half mirror. Therefore, the manufacturing cost of the light sending and receiving module can be reduced.

Nineteenthly, the present invention provides a light sending and receiving module by ferrules, in which a bare chip is used as the surface light emitting element or surface light receiving element.

Due to the foregoing, the running cost can be reduced in the eighteenth invention.

Twentiethly, the present invention provides a light sending and receiving module by ferrules, in which a can package, in which a bare chip and condenser lens are integrated into one body, or a can package having no lens, in which a bare chip and condenser lens are provided differently from each other, are used as the surface light emitting element or surface light receiving element.

Due to the foregoing, even when a distance from the optical filter or the half mirror to the face light emitting element or the face light receiving element is large, the optical signal can be effectively sent and received.

Twenty-firstly, the present invention provides a light sending and receiving module by ferrules, in which the ferrule is made of transparent glass.

Accordingly, when the ferrule is made of transparent glass in the eighteenth to the twentieth invention, the face light emitting element and the face light receiving element can be provided on the outer circumference of the ferrule. Therefore, it become unnecessary to form a step portion in the ferrule.

Twenty-secondly, the present invention provides a light sending and receiving module by ferrules, in which the ferrule joining member includes ferrule joining members for joining one face in which one end portion of the ferrule is formed into a step portion and also includes ferrule joining members for joining both faces in which both end portions of the ferrule are formed into a step portion, the ferrule joining members for joining both faces are arranged in series and located at the central portion, the ferrule joining members for joining one face are arranged at both end portions of the ferrule joining members for joining both faces and inserted into the guide sleeve, so that the adjoining ferrule joining members are optically coupled to each other.

Due to the foregoing, the ferrule joining members can be arranged in series via the guide sleeve in the eighteenth to the twenty-first invention. Therefore, the module can be simplified and further downsized, and the manufacturing cost can be reduced. Since the ferrule joining members can be arranged in series via the optical fiber, the degree of freedom of setting a span between the ferrule joining members can be increased.

Twenty-thirdly, the present invention provides a light sending and receiving module by ferrules, in which the pair of ferrule joining members for joining one face, in which a step portion is formed at one end of the ferrule, are inserted into the guide sleeve so as to compose a plurality of units, and the adjoining units are connected to each other in series via the optical fiber.

Due to the foregoing, in the same manner as described above, the ferrule joining members can be arranged in series via the guide sleeve in the eighteenth to the twenty-first invention. Therefore, the module can be simplified and further downsized, and the manufacturing cost can be reduced. Since the ferrule joining members can be arranged in series via the optical fiber, the degree of freedom of setting a span between the ferrule joining members can be increased.

Twenty-fourthly, the present invention provides a light sending and receiving module by ferrules formed by optically coupling the ferrules in which optical fibers are embedded, comprising a ferrule joining member in which a portion or all of the circumferential face of the optical fiber is exposed from an end portion of each ferrule, wherein the optical fibers are optically coupled to each other when end faces of the optical fibers are butted to each other via an optical filter or half mirror, and a printed wiring for connecting a light emitting element or light receiving element, which is provided close to the optical coupling portion of the optical fiber, with an external device is formed in the ferrule joining member.

Due to the foregoing, it becomes unnecessary that the focuses of the light emitting element and the light receiving element are positioned at the center of the optical filter while the printed board is being moved along the optical fiber. Therefore, the working efficiency can be enhanced in the process of assembling.

It is unnecessary to provide a printed board apart from the ferrule. Therefore, the number of parts can be decreased and the structure can be simplified. Accordingly, the light sending and receiving module can be downsized and the manufacturing cost can be reduced.

Twenty-fifthly, the present invention provides a light sending and receiving module by ferrules, in which a bare chip is used as the light emitting element or light receiving element, and the bare chip is directly attached to the printed wiring.

Due to the foregoing, in the twenty-fourth invention, the light emitting element or the light receiving element can be efficiently mounted on the ferrule joining member in a short period of time.

Twenty-sixthly, the present invention provides a light sending and receiving module by ferrules, in which an amplifier is mounted on the printed wiring.

Due to the foregoing, since the amplifier is mounted on the printed wiring, the amplifier can be compactly accommodated in the sleeve.

Twenty-seventhly, the present invention provides a light sending and receiving module by ferrules, in which a terminal connected to the connector is provided at the end portion of the printed wiring.

Due to the foregoing, in the twenty-fourth to the twenty-sixth invention, the light emitting element and the external device can be easily connected to each other. Alternatively, the light receiving element and the external device can be easily connected to each other.

Twenty-eighthly, the present invention provides a light sending and receiving module by ferrules, in which the ferrule joining member is inserted into the guide sleeve so as to conduct positioning, a window portion is formed by cutting out the guide sleeve and the window portion is located in an upper portion of the optical coupling portion of the optical fiber.

Due to the foregoing, in the twenty-fourth to the twenty-seventh invention, alignment of each optical fiber can be conducted with high accuracy. Further, in the case of deterioration of the light emitting element or the light receiving element, parts can be replaced from the window portion. Therefore, the maintenance work can be easily performed.

Twenty-ninthly, the present invention provides a light sending and receiving module by ferrules characterized in that: when one end side of the ferrule, in which an optical fiber is embedded, is cut out, a plurality of ferrule joining members having a flat face, from which at least a portion of the optical fiber is exposed, are formed; an inclined face is formed on one end side of each ferrule joining member; when the inclined faces are butted to each other via the optical filter or the half mirror, the optical fibers are optically coupled; and when one end side of the ferrule is cut out, a portion of the optical fiber is cut out so as to form a cutout face, and a light receiving element or a light emitting element is joined to the cutout face.

Due to the foregoing, no adhesive layer is provided between the optical fiber and the light receiving element or between the optical fiber and the light emitting element. Therefore, it is possible to fix the light receiving element to the flat face by adhesive, the transparence property of which is low.

As a result, it is possible to have a wide selection of the usable adhesive material. Accordingly, the manufacturing cost can be reduced. Further, the optical fiber and the light receiving face of the light receiving element can be located close to each other, and the optical fiber and the light emitting face of the light emitting element can be located close to each other. Therefore, the light signal can be sent and received before it has diffused. As a result, the optical coupling efficiency can be enhanced.

Thirtiethly, the present invention provides a light sending and receiving module by ferrules, in which the ferrule joining member is inserted into a guide sleeve to conduct positioning, the guide sleeve has a window portion which has been cut out, and the window portion is located in an upper portion of the optical coupling portion of the optical fiber.

Due to the foregoing, in the twenty-ninth embodiment, each optical fiber can be highly accurately aligned. Further, when the light receiving element or the light emitting element is deteriorated, parts can be replaced from the window portion, that is, the maintenance work can be easily performed.

The thirty-firstly, the present invention provides a light sending and receiving module by ferrules in which a plurality of ferrule joining members are formed, each ferrule joining member has a flat face, from which at least a portion of an optical fiber is exposed, the flat face is formed when one end side of the ferrule in which the optical fiber is embedded is cut out, an inclined face is formed on one end side of each ferrule joining member, the optical fibers are optically coupled to each other by butting the inclined faces via an optical filter or a half mirror, and the flat face is formed higher than an outer circumferential face of the optical fiber.

Due to the above structure, when the inclined faces of the ferrule joining members, the end portions of which have been cut away, are butted to each other, forward end portions of the flat faces, which are located at a little higher position than the outer circumferential face of the optical fiber, first come into contact with each other, and stress concentration upon the end faces of the optical fibers can be prevented. Accordingly, there is no possibility that the optical fibers are damaged at the time of joining the ferrule joining members. Further, there is no possibility that large gaps are generated between the optical fibers.

Therefore, it is possible to prevent the optical characteristic of the optical coupling portion from deteriorating. Further, when step portion is formed in the ferrule, it is sufficient that the flat face is formed a little higher than the outer circumferential face of the optical fiber. Therefore, the manufacturing work can be easily performed, and the manufacturing cost can be reduced.

Thirty-secondly, the present invention provides a light sending and receiving module by ferrules, in which the inclination angle θ1 of the inclined face of one ferrule joining member and the inclination angle θ2 of the inclined face of the other ferrule joining member, one ferrule joining member and the other ferrule joining member are adjacent to each other, are set so that they can satisfy the inequality θ1 ≤ θ2.

Due to the foregoing, in the same manner as that of the thirty-first embodiment, when the inclined faces of the ferrule joining members, the end portions of which have been cut away, are butted to each other, forward end portions of the flat faces, which are located at a little higher position than the outer circumferential face of the optical fiber, first come into contact with each other, and stress concentration upon the end faces of the optical fibers can be prevented. Accordingly, there is no possibility that the optical fibers are damaged at the time of joining the ferrule joining members. Further, there is no possibility that large gaps are generated between the optical fibers.

Therefore, it is possible to prevent the optical characteristic of the optical coupling portion from deteriorating. Further, when step portion is formed in the ferrule, it is sufficient that the flat face is formed a little higher than the outer circumferential face of the optical fiber. Therefore, the manufacturing work can be easily performed, and the manufacturing cost can be reduced.

Thirty-thirdly, the present invention provides a light sending and receiving module by ferrules, in which a light receiving element or a light emitting element is provided on a flat face in an upper portion of the optical coupling portion of the optical fibers.

Due to the above structure, the light sending and receiving module can be downsized, and the optical fiber can come close to the light receiving element or the light emitting element. Accordingly, optical signals can be effectively sent and received before the diffusion of light.

Thirty-fourthly, the present invention provides a light sending and receiving module by ferrules, in which the ferrule joining member is positioned when it is inserted into a guide sleeve, a window portion is formed by cutting out the guide sleeve, and the window portion is located in an upper portion of the optical coupling portion of the optical fiber.

Due to the above structure, in the thirty-first to the thirty-third invention, each optical fiber can be highly accurately aligned. Further, when the light receiving element or the light emitting element is deteriorated, parts can be replaced from the window portion, that is, the maintenance work can be easily performed.

Thirty-fifthly, the present invention provides a light sending and receiving module by ferrules which is formed when a pair of ferrules, in which an optical fiber is embedded, are optically coupled to each other, comprising:
a ferrule joining member from which a portion or all of the circumferential face of the optical fiber is exposed from an end portion of each ferrule; and a guide sleeve for positioning into which the ferrule joining member is inserted, wherein the guide sleeve is composed so that the optical fibers can be optically coupled to each other when the end faces of the optical fibers are butted to each other via an optical filter or a half mirror in the guide sleeve so as to branch light, and
the optical filter or the half mirror is formed in an end portion of the ferrule joining member by laminating a plurality of thin filter films or thin mirror films so that the thin filter films or thin mirror films can cover an end face of the optical fiber.

Accordingly, since the optical filter is interposed between the butted faces without being embedded, no gaps are formed between the optical fiber and the optical filter or between the optical fiber and the half mirror. Therefore, the occurrence of irregular reflection can be prevented, and the optical characteristic can be prevented from being deteriorated.

Further, the optical filter is arranged between the end faces of the optical fibers without being embedded. Therefore, it is unnecessary to provide a ferrule used for embedding the optical filter. Accordingly, the manufacturing cost can be reduced. Further, the optical filter and others are fixed by the optical fibers, and the optical fibers are fixed by the guide sleeve. Therefore, no adapter is required, and the module can be downsized.

Since lamination is directly conducted on the end portion of the ferrule joining member, as compared with the conventional embedding method, assembling can be easily executed. Further, an area of the optical filter can be made to be the same as that of the end portion of the ferrule joining member. Therefore, the manufacturing cost can be reduced.

Thirty-sixthly, the present invention provides a light sending and receiving module by ferrules, in which an end portion of each ferrule is cut away so as to form a step portion in the end portion of each ferrule, and
a portion or all of the circumferential face of the optical fiber is exposed from the flat face of the step portion.

Accordingly, in the thirty-fifth embodiment, it becomes possible to provide a light receiving element in the step portion, and parts control can be easily performed.

Thirty-seventhly, the present invention provides a light sending and receiving module by ferrules, in which a window portion is formed in the guide sleeve by cutting out, and the window portion is located in an upper portion of the optical coupling portion of the optical fiber.

Accordingly, in the thirty-fifth or the thirty sixth invention, the window portion is provided in the guide sleeve, and the light receiving element is attached to the window portion. Therefore, it becomes possible to take out a specific signal out of the signals of different wavelengths spreading in the optical fiber.

Thirty-eighthly, the present invention provides a light sending and receiving module by ferrules, in which the window portion is attached with a light receiving element capable of receiving an optical signal which is optically branched by the optical filter or an optical signal which is optically turned out by the half mirror.

Due to the foregoing, in the thirty-seventh invention, the window portion is provided in the guide sleeve, and the light receiving element is attached to the window portion. Therefore, it becomes possible to take out a specific signal out of the signals of different wavelengths spreading in the optical fiber.

Thirty-ninthly, the present invention provides a light sending and receiving module by ferrules, in which a light emitting element or a light receiving element is attached to the other end portion of the ferrule.

Due to the foregoing, in the thirty-fifth to the thirty-eighth invention, in the other end portion of the ferrule joining member, signals can be sent outside from the light emitting element. Alternatively, it becomes possible to compose a light turnout by the light receiving element.

Fortiethly, the present invention provides a light sending and receiving module by ferrules, in which a lateral cross section of the ferrule and that of the guide sleeve are circular or polygonal.

Due to the foregoing, in the thirty-fifth to the thirty-ninth invention, when lateral cross sections of the ferrule and the guide sleeve are respectively formed to be circular, both can be easily assembled to each other. when lateral cross sections of the ferrule and the guide sleeve are respectively formed to be polygonal, the ferrule joining member can not be rotated with respect to the guide sleeve. Accordingly, there is no possibility that an end face of the step portion is dislocated in the circumferential direction at the time of butting. Therefore, the optical filter can be easily interposed between the ferrule joining members.

Forty-firstly, the present invention provides a light sending and receiving module by ferrules, in which the ferrule joining member includes a ferrule joining member for joining one face, in which one end portion of the ferrule is formed into a step portion, and also includes a ferrule joining member for joining both faces in which both end portions of the ferrule are formed into a step portion,
the ferrule joining members for joining both faces are arranged in series and located in the central portion, the ferrule joining members for joining one face are arranged at both end portions of the ferrule joining member for joining both faces, and when the adjoining ferrule joining members are inserted into the guide sleeve, the optical fibers are optically coupled to each other.

Due to the foregoing, in the thirty-sixth to the fortieth invention, the ferrule joining members can be arranged in series via the guide sleeve. Therefore, the module can be simplified and further downsized. Accordingly, the manufacturing cost can be reduced. Moreover, the ferrule joining members can be arranged in series via the optical fiber. Therefore, the degree of freedom of setting a span between the ferrule joining members can be increased.

Forty-secondly, the present invention provides a light sending and receiving module by ferrules, in which units formed by inserting a pair of ferrule joining members for joining one face, in which one end portion of the ferrule is formed into a step portion, into the guide sleeve are arranged in series, and the adjoining units are connected in series via an optical fiber.

Accordingly, in the thirty-fifth to the forty-first invention, since the ferrule joining members can be arranged in series via the guide sleeve, the module can be simplified and further downsized. Therefore, the manufacturing cost can be further reduced.

In the present invention, since the ferrule joining members can be arranged in series via the optical fiber, the degree of freedom of setting a span between the ferrule joining members can be increased.

Forty-thirdly, the present invention provides a light sending and receiving module by ferrules, in which a substantial plane not perpendicular to the axial direction is formed in the end portion of the ferrule.

Accordingly, in the thirty-fifth to the forty-second invention, the end portions of the ferrules can be easily butted to each other.

Forty-fourthly, the present invention provides a light sending and receiving module by ferrules, in which the guide sleeve is mounted on a printed board.

Due to the foregoing, in the thirty-fifth to the forty-second invention, for example, when the light receiving element or the light emitting element described above is mounted on a printed board, the light receiving portion or the light emitting portion can be compactly accommodated in the sleeve.

Forty-fifthly, the present invention provides a light sending and receiving module by ferrules comprising: a connecting portion in which the ferrules to which each end portion of a pair of optical fibers is fixed are butted to each other; and a receiving portion for taking out a signal ray from the optical fiber butting face composing the connecting portion via an optical filter or a half mirror, or a sending portion for sending out a signal ray from the connecting portion to the optical fiber, further comprising: a ferrule joining portion in which a portion or all of the outer circumferential face of the optical fiber is exposed from the end portion side composing the connecting portion of the pair of ferrules; and adhesive for bonding the end faces of the ferrule joining portion after the end faces are butted to each other, wherein a guide sleeve having a slit, which is formed by cutting the guide sleeve from one end to the other end in the axial direction, is externally inserted into an outer circumferential face of the ferrule, and surplus adhesive is discharged from the slit at the time of bonding the ferrule butting faces when the pair of ferrules are integrally covered and held, and a window portion is provided in the guide sleeve at a position, the positional phase of which is inverse to the position where the slit is formed, so that the receiving portion or the sending portion can be inserted and arranged from the window portion.

Due to the foregoing, when the connecting portions of the ferrules, to which the core wires of the optical fibers are attached, are joined to each other, the surplus adhesive is effectively discharged outside from the slit provided in the bottom portion of the guide sleeve. Therefore, no adhesive accumulates in the bottom portion of the guide sleeve. Accordingly, there is no possibility that the accumulated adhesive pushes up the ferrule end portion and that the optical axes of the optical fibers are dislocated.

Forty-sixthly, the present invention provides a light sending and receiving module by ferrules, in which the butting face of each ferrule joining portion is inclined by not a right angle but a predetermined angle with respect to the axial direction.

Due to the foregoing, in the forty-fifth invention, unnecessary reflection caused in the connecting portion can be effectively suppressed, and signal rays can be effectively taken out from the optical fiber.

Forty-seventhly, the present invention provides a light sending and receiving module by ferrules, in which the ferrule joining portion is composed in such a manner that an end portion side of the ferrule is cut away so as to form a step portion and a flat portion on the end portion side of each ferrule, and a portion or all of the outer circumferential face of the optical fiber is exposed from a flat face of the flat portion.

Due to the foregoing, in the forty-fifth or the forty-sixth invention, it is possible to arrange a light receiving portion in the step portion which has been cut out, which helps to downsize the module.

Forty-eighthly, the present invention provides a light sending and receiving module by ferrules, in which the receiving portion is provided with a light receiving element, which is arranged in the window portion of the guide sleeve, for receiving a signal ray which has been branched or turned out by an optical filter or a half mirror.

Due to the foregoing, in the forty-fifth to the forty-seventh invention, a signal ray of a desired wavelength can be taken out from the side of the optical fiber via the window portion of the guide sleeve when light-branching or light-turning-out is conducted by the light receiving element of the receiving portion.

Forty-ninthly, the present invention provides a light sending and receiving module by ferrules, in which the sending portion is provided with a light emitting element arranged on one end of the sending portion which is located on the side opposite to the other end composing the butting face of the ferrule joining portion.

Due to the foregoing, in the forty-fifth to the forty-eighth invention, the light receiving portion can be directly arranged in one end portion of the ferrule.

Fiftiethly, the present invention provides a light sending and receiving module by ferrules, in which a lateral cross section of the ferrule joining portion and that of the guide sleeve are substantially circular or polygonal.

Due to the foregoing, in the forty-fifth to the forty-ninth invention, when lateral cross sections of the ferrule joining portion and the guide sleeve are respectively formed into a substantial circle, the ferrule joining portion can be easily inserted into the guide sleeve.

When lateral cross sections of the ferrule joining portion and the guide sleeve are respectively formed into a substantial circle, the ferrule joining portion can not be rotated with respect to the guide sleeve. Therefore, at the time of butting, it is possible to prevent the occurrence of dislocation of the relative positions of the ferrule joining portion and the guide sleeve in the circumferential direction.

Fifty-firstly, the present invention provides a light sending and receiving module by ferrules, in which a printed board is arranged in the guide sleeve, and the light receiving element or the light emitting element is mounted on the printed board.

Due to the foregoing, in the forty-fifth to the fiftieth invention, the light receiving portion or the light emitting portion can be compactly accommodated in the sleeve.

Fifty-secondly, the present invention provides a light sending and receiving module by ferrules characterized in that: the board is cut off by a predetermined angle so that the optical fiber can be crossed under the condition that the optical fiber is accommodated in a V-shaped groove formed on the board; alignment is conducted on the optical fiber by inserting the guide means to the board under the condition that an optical filter or a half mirror is interposed between the cutting faces of the board and the optical fiber; and
the board, the optical fiber and the optical filter or the half mirror are bonded and integrated into one body by means of adhesion.

Due to the foregoing, the board and the optical fiber are cut off and divided. Therefore, the cutting faces of the board and the optical fiber can be polished easily and highly accurately. Accordingly, it is possible to easily obtain a light sending and receiving module by ferrules, the optical characteristic of which is excellent.

When the guide means is inserted onto the divided board, the optical fibers, which have been divided, can be highly accurately aligned. Therefore, it becomes unnecessary to conduct an optical axis adjustment which takes time and labor. Due to the foregoing, the productivity can be enhanced.

Fifty-thirdly, the present invention provides a light sending and receiving module by ferrules, in which the optical fiber is cut off in the intermediate portion and the covering portion is peeled off from the end portion so as to expose the optical fiber core wires, and the thus exposed optical fiber core wires are connected to each other and accommodated in the V-shaped groove of the board.

Due to the foregoing, in the fifty-second invention, it becomes possible to use a highly reliable optical fiber, the covering of which is so hard that it is difficult to peel the covering from an intermediate portion. Accordingly, usable optical fibers are not so limited. Therefore, the present invention can be widely used.

Fifty-fourthly, the present invention provides a light sending and receiving module by ferrules, in which the guide means includes a split sleeve having a light-shielding property.

Due to the foregoing, in the fifty-second or the fifty-third invention, a ray of light leaking out from the connecting portion of the optical fiber is shielded by the guide means. Accordingly, human bodies are seldom affected by the ray of light leaking out from the connecting portion of the optical fiber. Further, it becomes unnecessary to shield the light sending and receiving module from light after the installation of the light sending and receiving module. Accordingly, the installation work can be conducted easily.

Fifty-fifthly, the present invention provides a connecting device of a light sending and receiving module by ferrules comprising: a module side ferrule composing a light sending and receiving module by ferrules; a device side ferrule provided on the device housing side; an alignment sleeve for fixing the module side ferrule and the device side ferrule under the condition that the end faces of the module side ferrule and the device side ferrule are butted and optically coupled to each other; and a ferrule engaging portion provided in the receptacle arranged on the device housing side so that the alignment sleeve can be attached.

Due to the above structure, the light sending and receiving module side ferrule and the device side ferrule are directly optically coupled to each other by the alignment sleeve, and the alignment sleeve is attached to the ferrule engaging portion provided in the receptacle arranged on the device housing side. Accordingly, it is possible to abolish the conventionally used optical fiber cord for connecting the light sending and receiving module side ferrule with the device side ferrule.

As a result, it is possible to abolish the optical fiber cord lengthening means. Accordingly, the entire device can be downsized. For example, the entire device can be downsized to about 1/10 compared with the conventional device size.

Further, the conventional ferrule on the pigtail side can be abolished. At the same time, the optical fiber cord, the cost of which is so high that the cost of the entire device is mainly occupied by the cost of the optical fiber cord together with the cost of the ferrule on the light sending and receiving module side and that of the ferrule on the device side, can be abolished. Therefore, the number of parts can be reduced and the manufacturing cost can be reduced.

Fifty-sixthly. the present invention provides a connecting device of a light sending and receiving module by ferrules, in which the module side ferrule composing the light sending and receiving module includes a pair of ferrule joining members, from the end portion of which a portion or all of the circumferential face of the optical fiber is exposed so as to optically couple the embedded optical fiber and also includes a guide sleeve for positioning into which the ferrule joining member is inserted, and the optical fibers are optically coupled to each other when the end faces of the optical fibers are butted to each other via the optical filter or the half mirror by the guide sleeve so as to branch light.

Due to the foregoing, in the fifty-fifth invention, the optical filter is interposed between the butted faces of the optical fibers without being embedded. Therefore, no gaps are generated between the optical fiber and the optical filter. Accordingly, the occurrence of irregular reflection can be prevented.

Therefore, the deterioration of the optical characteristic can be prevented. Since the optical filter or the half mirror is arranged between the end faces of the optical fibers without being embedded, it becomes unnecessary to provide a ferrule for embedding the optical filter, and the manufacturing cost can be reduced.

According to the present invention, the optical filter is fixed and further the optical fiber is fixed by the guide sleeve. Therefore, no adapter is needed. Accordingly, the module can be downsized.

Fifth-seventhly, the present invention provides a connecting device of a light sending and receiving module by ferrules, in which the ferrule joining member is composed in such a manner that an end portion of the ferrule joining member is cut away so as to form a step portion on the end portion of each ferrule joining member, and a portion or all of the circumferential face of the optical fiber is exposed from a flat face of the step portion.

Due to the foregoing, in the fifty-sixth invention, it becomes possible to provide a light receiving element and others in the step portion. Therefore, when the light receiving element and others are provided in the step portion, it is possible to make the light receiving element and others come very close to the optical filter or the half mirror.

Accordingly, an optical signal sent from the optical fiber can be spread from the optical filter or the half mirror to the light receiving element and others without causing diffusion, and the light sending efficiency can be enhanced so that the module of the present invention can cope with a wide range of frequency. For example, the module of the present invention can cope with a range of frequency from 1 GHz in the case of 80µ waves to 20 GHz in the case of 40µ waves.

Fifty-eighthly, the present invention provides a connecting device of a light sending and receiving module by ferrules, in which a window portion is formed in the guide sleeve by cutting out, and the window portion is located in an upper portion of the optical coupling portion of the optical fiber.

Due to the foregoing, a window portion is provided in the guide sleeve, and the light receiving element is attached to it in the fifty-sixth or the fifty-seventh invention. Therefore, it is possible to take out a specific signal out of the signals of different wave-lengths spreading in the optical fiber.

Fifty-ninthly, the present invention provides a connecting device of a light sending and receiving module by ferrules, in which the window portion is attached with a light receiving element capable of receiving an optical signal which is optically branched by the optical filter or an optical signal which is optically turned out by the half mirror.

Due to the foregoing, a window portion is provided in the guide sleeve, and the light receiving element is attached to it in the fifty-eighth invention. Therefore, it is possible to take out a specific signal out of the signals of different wavelengths spreading in the optical fiber.

Sixtiethly, the present invention provides a connecting device of a light sending and receiving module by ferrules, in which a light emitting element or a light receiving element is attached to the other end portion of the ferrule on the module side.

Due to the foregoing, in the fifty-sixth to the fifty-ninth invention, in the other end portion of the ferrule joining member, a signal can be sent out from the light emitting element. Alternatively, a light turnout can be composed of the light receiving element.

Sixty-firstly, the present invention provides a connecting device of a light sending and receiving module by ferrules, in which a lateral cross section of the module side ferrule and that of the guide sleeve are circular or polygonal.

Due to the foregoing, in fifty-sixth to the sixtieth invention, when lateral cross sections of the module side ferrule and the guide sleeve are respectively formed into a substantial circle, both can be easily incorporated to each other.

When cross sections of the ferrule joining member and the guide sleeve are respectively formed polygonal, the ferrule joining member can be prevented from rotating with respect to the guide sleeve.

Therefore, the end face of the step portion is not dislocated in the circumferential direction at the time of butting. Accordingly, the optical filter can be easily interposed between the ferrule joining members.

Sixty-secondly, the present invention provides a connecting device of a light sending and receiving module by ferrules, in which the ferrule joining member includes a ferrule joining member for joining one face, in which one end portion of the ferrule is formed into a step portion, and also includes a ferrule joining member for joining both faces in which both end portions of the ferrule are formed into a step portion, the ferrule joining members for joining both faces are arranged in series and located in the central portion, the ferrule joining members for joining one face are arranged at both end portions of the ferrule joining member for joining both faces, and when the adjoining ferrule joining members are inserted into the guide sleeve, the optical fibers are optically coupled to each other.

Due to the foregoing, in the fifty-sixth to the sixty-first invention, since the ferrule joining members can be arranged in series via the guide sleeve, the module can be simplified and further downsized, and the manufacturing cost can be reduced.

In the present invention, the ferrule joining members can be arranged in series via the optical fiber. Therefore, the degree of freedom of setting a span between the ferrule joining members can be increased.

Sixty-thirdly, the present invention provides a connecting device of a light sending and receiving module by ferrules, in which units are formed by inserting a pair of ferrule joining members for joining one face, in which one end portion of the ferrule is formed into a step portion, into the guide sleeve, and arranged in series, and the adjoining units are connected in series via an optical fiber.

Due to the foregoing, in the fifty-sixth to the sixty-second invention, since the ferrule joining members can be arranged in series via the guide sleeve, the module can be simplified and further downsized, and the manufacturing cost can be reduced. Moreover, the ferrule joining members can be arranged in series via the optical fiber. Therefore, the degree of freedom of setting a span between the ferrule joining members can be increased.

Sixty-fourthly, the present invention provides a connecting device of a light sending and receiving module by ferrules, in which the guide sleeve is mounted on a printed board.

Due to the foregoing, in the fifty-fifth to the sixty-second invention, for example, when the above light receiving element or the light emitting element is mounted on a printed board, the light receiving portion or the light emitting portion can be compactly accommodated in the sleeve.

Sixty-fifthly, the present invention provides a connecting device of a light sending and receiving module by ferrules, in which a portion or all of the circumferential face of the optical fiber embedded in the ferrule is exposed.

Due to the foregoing, in the fifty-sixth to the sixty-fourth invention, parts control can be easily executed.

Sixty-sixthly, the present invention provides a connecting device of a light sending and receiving module by ferrules, in which a substantial plane not perpendicular to the axial direction is formed in the ferrule end portion on the module side.

Due to the foregoing, in the fifty-sixth to the sixty-fifth invention, the ferrule end portion on the module side can be easily butted.

Sixty-seventhly, the present invention provides a method of manufacturing a light sending and receiving module by ferrules comprising: a first step of removing a covering portion from an optical fiber; a second step of fitting a ferrule into a portion from which the covering portion has been removed; a third step of cutting out an end portion of the ferrule to form a step portion and exposing a portion of the circumferential face of the optical fiber from a flat face of the step portion; a fourth step of obliquely cutting away an end face of the step portion to form an inclined face so that a ferrule joining member can be formed; and a fifth step of inserting the ferrule joining member into a guide sleeve for positioning and butting end faces of the optical fibers to each other via an optical filter.

Accordingly, the manufacturing process can be shortened, and the manufacturing cost can be reduced.

Sixty-eighthly, the present invention provides a method of manufacturing a light sending and receiving module by ferrules comprising: a first step of forming a window portion having a bottom in the ferrule joining member so that an insertion pore penetrating in the axial direction of the ferrule joining member can be opened; a second step of forming a small width groove, which crosses the axial direction of the insertion pore, on a bottom face of the window portion in the ferrule joining member; and a third step of inserting the pair of optical fibers into the insertion pore, a third step of inserting an optical filter, which conducts light turnout when end faces of the optical fibers are butted to each other, into the small width groove, alternatively inserting a half mirror which conducts light branching when end faces of the optical fibers are butted to each other so that the optical fibers can be optically coupled to each other, and a third step of holding the optical fibers by a holding portion formed so that the bottom face of the window portion can be located on the opening side of the window portion compared with the axis of the optical fibers when the optical fibers are inserted into the insertion pore.

Due to the foregoing, in the light sending and receiving module formed out of the thus obtained ferrule joining member, before the optical fiber is inserted into the insertion pore, a small width groove crossing the insertion pore is formed in the ferrule joining member. Therefore, it is possible to prevent the occurrence of a rise of the optical fiber which is caused in the conventional structure.

Since the optical fiber is inserted into the insertion pore of the ferrule joining member after the small width groove has been formed, the end face of the optical fiber can be previously formed into a precise smooth face by means of grinding. Accordingly, there is no possibility that an optical signal is irregularly reflected after the completion of optical coupling.

It is preferable that the optical fiber is fixed by adhesive to the ferrule joining member in the insertion pore after the optical fiber has been inserted into the insertion pore again.

Sixty-ninthly, the present invention provides a method of manufacturing a light sending and receiving module by ferrules comprising:
a first step of inserting an optical fiber into an insertion pore penetrating in the axial direction of the ferrule joining member; a second step of forming a window portion in the ferrule joining member, the cross section of which is a substantial C-shape, so that a portion of the circumferential face of the optical fiber can be exposed, and a second step of forming a holding portion for holding the optical fiber while a bottom face of the window portion is being located on the opening side of the window portion compared with the neutral point of the optical fiber;
a third step of forming a small width groove in the ferrule joining member so that the small width groove can cross the axial direction of the ferrule joining member; and a fourth step of inserting an optical filter, which conducts light turnout when end faces of the optical fibers are butted to each other, into the small width groove, alternatively inserting a half mirror which conducts light branching when end faces of the optical fibers are butted to each other so that the optical fibers can be optically coupled to each other, and a fourth step of holding the optical fibers by a holding portion formed so that a bottom face of the window portion can be located on the opening side of the window portion compared with the axis of the optical fibers when the optical fibers are inserted into the insertion pore.

Due to the above structure, in the light sending and receiving module formed out of the thus obtained ferrule joining member, even if a portion of the circumferential face of the optical fiber is exposed from the ferrule joining member when the window portion is formed, since a bottom face of the window portion is located at a position on the opening side of the window portion compared with the axis of the optical fiber and the holding portion for holding the optical fiber is formed, even if the small width groove is formed in the ferrule joining member while the optical fiber is being inserted into the insertion pore, no optical fibers rise up by the pressure given when the small width groove is formed. Therefore, a smooth cutting face can be formed on the end face side of the optical fiber. Accordingly, the optical signal can not be irregularly reflected.

When it is composed so that the optical fiber can be inserted into and drawn out from the insertion pore after the small width groove has been formed, it becomes possible to grind the end face. Therefore, irregular reflection of the optical signal can be more positively prevented.

It is preferable that the optical fiber and the ferrule joining member are fixed to each other by adhesive in the case where the optical fiber is returned into the insertion pore again.

Seventiethly, the present invention provides a method of manufacturing a light sending and receiving module by ferrules comprising:
a first step of removing a covering portion from an optical fiber;
a second step of fitting a ferrule into a portion from which the covering portion has been removed; a third step of cutting out an end portion of the ferrule to form a step portion and exposing a portion of the circumferential face of the optical fiber from a flat face of the step portion; a fourth step of forming an inclined face on the end face of the ferrule joining member by obliquely cutting away an end face of the step portion; a fifth step of inserting the ferrule joining member into a guide sleeve for positioning and butting end faces of the optical fibers to each other via an optical filter or a half mirror; and a sixth step of providing a face light emitting element or a face light receiving element on the optical coupling portion of the optical fibers.

Due to the foregoing, the manufacturing process can be shortened, and the manufacturing cost can be reduced.

Seventy-firstly, the present invention provides a method of manufacturing a light sending and receiving module by ferrules comprising: a first step of removing a covering portion from an optical fiber; a second step of fitting a ferrule into a portion from which the covering portion has been removed; a third step of cutting out an end portion of the ferrule to form a step portion and exposing a portion of the circumferential face of the optical fiber from a flat face of the step portion;
a fourth step of forming a printed board on the step portion and the flat face;
a fifth step of obliquely cutting away an end face of the step portion to form an inclined face so that a ferrule joining member can be formed; and
a sixth step of positioning the ferrule joining member and butting end faces of the optical fibers to each other via an optical filter or a half mirror.

Due to the foregoing, the manufacturing process can be shortened, and the manufacturing cost can be reduced.

Seventy-secondly, the present invention provides a method of manufacturing a light sending and receiving module by ferrules comprising:
a first step of removing a covering portion from an optical fiber;
a second step of fitting a ferrule into a portion from which the covering portion has been removed; a third step of forming a step portion and a flat face in the end portion of the ferrule and also forming a cutout face in the optical fiber by cutting out an end portion of the ferrule and by cutting out a portion of the optical fiber; a fourth step of forming an inclined face in each ferrule joining member by obliquely cutting away an end face of the step portion; a fifth step of positioning the ferrule joining member and butting end faces of the optical fibers to each other via an optical filter or a half mirror; and a sixth step of coupling a light receiving element or a light emitting element to the cutout face of the optical fiber.

Due to the foregoing, the manufacturing process can be shortened, and the manufacturing cost can be reduced.

Seventy-thirdly, the present invention provides a method of manufacturing a light sending and receiving module by ferrules comprising: a first step of removing a covering portion from an optical fiber; a second step of fitting a ferrule into a portion from which the covering portion has been removed; a third step of exposing a portion of the circumferential face of the optical fiber from the flat face when a step portion having a flat face a little higher than the outer circumferential face of the optical fiber is formed by cutting out the end portion of the ferrule; a fourth step of forming an inclined face in each ferrule joining member by obliquely cutting away an end face of the step portion; and a fifth step of positioning the ferrule joining member and butting end faces of the optical fibers to each other via an optical filter or a half mirror.

Due to the foregoing, the manufacturing process can be shortened, and the manufacturing cost can be reduced.

Seventy-fourthly, the present invention provides a method of manufacturing a light sending and receiving module by ferrules comprising:
a first step of removing a covering portion from an optical fiber;
a second step of fitting a ferrule into a portion from which the covering portion has been removed; a third step of cutting out an end portion of the ferrule to form a step portion and exposing a portion of the circumferential face of the optical fiber from a flat face of the step portion; a fourth step of forming an inclined face by obliquely cutting away an end face of the step portion so as to form a ferrule joining member; and a fifth step of inserting the ferrule joining member into a guide sleeve for positioning and butting end faces of the optical fibers to each other via an optical filter which is formed by laminating a plurality of thin film filters on one end face, or via a half mirror which is formed by laminating a plurality of
thin film mirrors.

Due to the foregoing, the manufacturing process can be shortened, and the manufacturing cost can be reduced.

Seventy-fifthly, the present invention provides a method of manufacturing a light sending and receiving module by ferrules, the light sending and receiving module by ferrules including a connecting portion in which the ferules to which end portions of a pair of optical fibers are fixed are butted to each other and also including a receiving portion for taking out a signal ray from an optical fiber butting face composing the connecting portion or including a sending portion for sending out a signal ray from the connecting portion to the optical fiber,
the method of manufacturing the light sending and receiving module by ferrules comprising the steps of: forming a ferrule joining portion for fixing the optical fiber, in the pair of ferrules while a portion or all of the outer circumference of the optical fiber is being exposed from the end portion side composing the connecting portion; providing an optical filter or a half mirror on the end face from which the optical fiber fixed to the ferrule joining portion is exposed; inserting outwardly a guide sleeve having a slit, which is cut out from one end to the other end in the central axis direction, onto an outer circumferential face of the ferrule joining portion when end faces of the ferrule joining members are butted and fixed to each other via the optical filter or the half mirror; dripping adhesive from a window portion, which is formed being cut out in the guide sleeve at a position of an inverse positional phase to the positional phase of the slit or being cut out in the neighborhood of this position in order to insert and arrange the receiving portion, to between the end faces on which the ferrule joining members corresponding to the connecting portion are butted to each other; and discharging and removing the surplus adhesive outside from the slit arranged at the lower position of the guide sleeve.

Due to the foregoing, in the case of joining the ferrule joining portion attached with the optical fiber core wire, the surplus adhesive is effectively discharged outside from the slit provided in the bottom portion of the guide sleeve. Therefore, it is possible to prevent the surplus adhesive from accumulating in the bottom portion of the guide sleeve.

Accordingly, it is possible to prevent the occurrence of such a problem that the accumulated adhesive pushes up the ferrule end portion so that the optical axis of the optical fiber is dislocated.

Seventy-sixthly, the present invention provides a method of manufacturing a light sending and receiving module by ferrules, in which the butting faces of the ferrule joining portion, which are butted to each other and coupled in the connecting portion, are inclined faces which are inclined by a predetermined angle not perpendicular to the axial direction.

Due to the foregoing, it is possible to prevent the occurrence of an unnecessary reflection caused in the connecting portion. Therefore, a signal ray can be effectively taken out from the optical fiber.

Seventy-seventhly, the present invention provides a method of manufacturing a light sending and receiving module by ferrules comprising the steps of: cutting off a board by a predetermined angle so that an optical fiber can be crossed by the cutting face under the condition that the optical fiber is accommodated in a V-shaped groove formed on the board; conducting alignment on the optical fiber by inserting a guide means onto the board under the condition that a filter is interposed between the cutting faces of the board and the optical fiber after the cutting faces of the board and the optical fiber have been polished; and bonding and integrating the board, optical fiber and filter by means of adhesion.

Due to the foregoing, the board and the optical fiber are cut off and the thus obtained cutting faces are polished. Therefore, the cutting faces of the board and the optical fiber can be highly accurately polished. As a result, it is possible to obtain a light sending and receiving module, the optical characteristic of which is excellent.

When the guide means is inserted onto the divided board, the optical fibers, which have been cut apart, can be highly accurately aligned. Therefore, it becomes unnecessary to conduct an optical axis adjustment which takes time and labor. Due to the foregoing, the manufacturing process can be reduced, and the productivity can be enhanced.

### <Brief Description of the Drawings>

Fig. 1(A) is a partially sectional view of a ferrule joining member of the light sending and receiving module by ferrules of the present invention and Fig. 1(B) is a side view of the same;
Fig. 2(A) is a sectional view of a guide sleeve of the same and Fig. 2(B) is a side view of the same;
Fig. 3(A) is a sectional view showing a state in which the ferrule joining member is inserted into a guide sleeve of the same and Fig. 3(B) is a side view of the same;
Fig. 4 is a partially sectional view corresponding to Fig. 1 showing a variation of the ferrule joining member of the same and Fig. 4(B) is a side view of the same;
Fig. 5(A) is a sectional view corresponding to Fig. 2 showing a variation of the guide sleeve of the same and Fig. 5(B) is a side view of the same;
Fig. 6 is a sectional view corresponding to Fig. 2 showing a state in which the ferrule joining member of Fig. 4 is inserted into the guide sleeve of Fig. 5;
Fig. 7(A) is a partially sectional view corresponding to Fig. 1 showing another variation of the ferrule joining member and Fig. 7(B) is a side view of the same;
Fig. 8(A) is a sectional view corresponding to Fig. 2 showing another variation of the guide sleeve and Fig. 8(B) is a side view of the same;
Fig. 9 is a sectional view corresponding to Fig. 2 showing a state in which the ferrule joining member of Fig. 7 is inserted into the guide sleeve of Fig. 8 of the same;
Fig. 10 is a sectional view showing the second embodiment;
Fig. 11 is a sectional view showing the third embodiment;
Fig. 12 is a schematic illustration of an optical fiber showing the first step of the method of manufacturing a light sending and receiving module by ferrules of the present invention;
Fig. 13 is a sectional view showing an optical fiber in a ferrule engaging state showing the second step;
Fig. 14(A) is a sectional view showing a step portion forming state in the third step and Fig. 14(B) is a side view of the same;
Fig. 15 is a partially sectional view showing an inclined face forming state in the fourth step of the same;
Fig. 16 is a partially sectional view showing a state in which the ferrule joining member is inserted into the guide sleeve;
Fig. 17 is a laterally sectional view showing the fifth embodiment of the present invention;
Fig. 18 is a longitudinally sectional view of the same;
Fig. 19 is a laterally sectional view showing a completed product of the fifth embodiment of the present invention;
Fig. 20 shows a manufacturing method of the sixth embodiment of the present invention, wherein Fig. 20(A) is a view showing a preparation step, and Figs. 20(B) to 20(D) are process drawings showing the first to the third step;
Fig. 21 shows another manufacturing method of the sixth embodiment of the present invention, wherein Fig. 21(A) is a process drawing showing a preparation step and Figs. 21(B) to 21(D) are process drawings showing the first step to the fourth step in order;
Fig. 22 is a laterally sectional view showing the seventh embodiment of the present invention;
Fig. 23 is a longitudinally sectional view of the same;
Fig. 24 is a laterally sectional view corresponding to Fig. 3 showing a variation of the fifth embodiment of the present invention;
Fig. 25 is a laterally sectional view corresponding to Fig. 3 showing another variation of the fifth embodiment of the present invention;
Fig. 26(A) is a sectional view showing a state in which a ferrule joining member composing a light sending and receiving module by ferrules of the tenth embodiment of the present invention is inserted into a guide sleeve and Fig. 26(B) is a side view of the same;
Fig. 27(A) is a sectional view showing a light emitting element (having a lens) or a light receiving element used for a light sending and receiving module by ferrules of the tenth embodiment of the present invention, and Fig. 27(B) is a sectional view showing a light emitting element (having no lens) or a light receiving element used for a light sending and receiving module by ferrules of the same;
Fig. 28 is a sectional view showing a light sending and receiving module by ferrules of the eleventh embodiment of the present invention;
Fig. 29 is a sectional view showing a light sending and receiving module by ferrules of the twelfth embodiment of the present invention;
Fig. 30 is a sectional view showing a variation of the light sending and receiving module by ferrules of the tenth embodiment of the present invention;
Fig. 31 is a sectional view showing another variation of the light sending and receiving module by ferrules of the tenth embodiment of the present invention;
Fig. 32 is a sectional view showing still another variation of the light sending and receiving module by ferrules of the tenth embodiment of the present invention;
Fig. 33 is a perspective view showing a ferrule joining member composing a light sending and receiving module by ferrules of the thirteenth embodiment of the present invention;
Fig. 34(A) is a sectional view showing a state in which a ferrule joining member composing a light sending and receiving module by ferrules of the thirteenth embodiment of the present invention is inserted into a guide sleeve and Fig. 34(B) is a side view of the same;
Fig. 35 is a perspective view showing a variation of the ferrule joining member composing the light sending and emitting module by ferrules of the thirteenth embodiment of the present invention;
Fig. 36 is a perspective view showing another variation of the ferrule joining member composing the light sending and emitting module by ferrules of the thirteenth embodiment of the present invention;
Fig. 37 is a sectional view showing a light sending and receiving module by ferrules of the fourteenth embodiment of the present invention;
Fig. 38 is a sectional view showing a light sending and receiving module by ferrules of the fifteenth embodiment of the present invention;
Fig. 39 is a view showing a structure of the optical fiber in the first step of the method of manufacturing a light sending and receiving module by ferrules of the sixteenth embodiment of the present invention;
Fig. 40 is a schematic illustration showing a ferrule engaging state in the second step of the method of manufacturing a light sending and receiving module by ferrules of the same;
Fig. 41(A) is a partially sectional view showing a step portion forming state in the third and the fourth step of the method of manufacturing a light sending and receiving module by ferrules of the same and Fig. 41(B) is a side view of the same;
Fig. 42 is a partially sectional view showing an inclined face forming state in the fifth step of the method of manufacturing a light sending and receiving module by ferrules of the same;
Fig. 43 is a partially sectional view showing a light sending and receiving module manufactured by the method of manufacturing a light sending and receiving module by ferrules of the same;
Fig. 44 is a partially sectional view showing a light sending and receiving module manufactured by the method of manufacturing a light sending and receiving module by ferrules of the seventeenth embodiment of the present invention;
Fig. 45(A) is a sectional view of the ferrule joining member composing the light sending and receiving module by ferrules of the same and Fig. 45(B) is a side view of the same;
Fig. 46(A) is a sectional view of the guide sleeve composing the light sending and receiving module by ferrules of the same and Fig. 46(B) is a side view of the same;
Fig. 47(A) is a sectional view showing a state in which a ferrule joining member composing a light sending and receiving module by ferrules of the same is inserted into a guide sleeve and Fig. 47(B) is a side view of the same;
Fig. 48 is a sectional view showing a light sending and receiving module by ferrules of the eighteenth embodiment of the present invention;
Fig. 49 is a sectional view showing a light sending and receiving module by ferrules of the nineteenth embodiment of the present invention;
Fig. 50 is a view showing a structure of the optical fiber in the first step of the method of manufacturing a light sending and receiving module by ferrules of the twentieth embodiment of the present invention;
Fig. 51 is a schematic illustration showing a ferrule engaging state in the second step of the method of manufacturing a light sending and receiving module by ferrules of the same;
Fig. 52(A) is a partially sectional view showing a step portion forming state in the third step of the method of manufacturing a light sending and receiving module by ferrules of the same and Fig. 52(B) is a side view of the same;
Fig. 53 is a partially sectional view showing an inclined face forming state in the fourth step of the method of manufacturing a light sending and receiving module by ferrules of the same;
Fig. 54 is a partially sectional view showing a coupling state of the optical fiber in the fifth step of the method of manufacturing a light sending and receiving module by ferrules of the same;
Fig. 55(A) is a partially sectional view showing a ferrule joining member composing a light sending and receiving module by ferrules of the twenty-first embodiment of the present invention and Fig. 55(B) is a side view of the same;
Fig. 56 is a sectional view of the ferrule joining member composing a light sending and receiving module by ferrules of the same;
Fig. 57(A) is a sectional view showing a state in which a ferrule joining member composing a light sending and receiving module by ferrules of the same is inserted into a guide sleeve and Fig. 57(B) is a side view of the same;
Fig. 58 is a sectional view showing a variation of a light sending and receiving module by ferrules of the twenty-first embodiment of the present invention;
Fig. 59 is a sectional view showing another variation of a light sending and receiving module by ferrules of the twenty-first embodiment of the present invention;
Fig. 60(A) is a partially sectional view showing a step portion forming state in the third step of the method of manufacturing a light sending and receiving module by ferrules of the twenty-second embodiment of the present invention and Fig. 60(B) is a side view of the same;
Fig. 61 is a partially sectional view showing an inclined face forming state in the fourth step of the method of manufacturing a light sending and receiving module by ferrules of the same;
Fig. 62 is a partially sectional view showing a light sending and receiving module manufactured by the method of manufacturing a light sending and receiving module by ferrules;
Fig. 63(A) is a sectional view showing a state in which a ferrule joining member of a light sending and receiving module by ferrules of the twenty-third embodiment of the present invention is inserted into a guide sleeve and Fig. 63(B) is a side view of the same;
Fig. 64 shows a case in which an optical filter is mounted on an end face of the ferrule of the same, wherein Fig. 64(A) is a view showing a process of mounting and Fig. 64(B) is a schematic illustration showing a state of completion of the optical filter;
Fig. 65 is a partially sectional view showing the fifth step of the method of manufacturing a light sending and receiving module by ferrules of the twenty-fourth embodiment of the present invention;
Fig. 66 is a sectional view showing a primary structure of the light sending and receiving module by ferrules of the twenty-fifth embodiment of the present invention;
Fig. 67 is an exploded perspective view showing a ferrule and guide sleeve of the light sending and receiving module by ferrules of the same;
Fig. 68 is a schematic illustration showing the sixth step of the method of manufacturing a light sending and receiving module by ferrules of the twenty-sixth embodiment of the present invention;
Fig. 69 is a schematic illustration showing the seventh and the eighth step of the method of manufacturing a light sending and receiving module by ferrules of the same, wherein Fig. 69(A) is a sectional side view and Fig. 69(B) is a longitudinal sectional view;
Fig. 70 is a plan view showing a light sending and receiving module by ferrules of the twenty-seventh embodiment of the present invention;
Fig. 71 is a front view showing a light sending and receiving module by ferrules of the same;
Fig. 72 is a side view showing a light sending and receiving module by ferrules of the same;
Fig. 73 is a view showing a method of manufacturing a light sending and receiving module by ferrules of the twenty-eighth embodiment of the present invention;
Fig. 74 is a perspective view showing the second and the third step of the method of manufacturing a light sending and receiving module by ferrules of the same;
Fig. 75 is a perspective view showing the fourth step of the method of manufacturing a light sending and receiving module by ferrules of the same;
Fig. 76 is a sectional view showing a connecting structure of the light sending and receiving module by ferrules of the twenty-ninth embodiment of the present invention;
Fig. 77(A) is a sectional view showing a state in which the ferrule joining member of a light sending and receiving module, which is used for the connecting structure of the light sending and receiving module by ferrules, is inserted into the guide sleeve and Fig. 77(B) is a side view of the same;
Fig. 78 is a sectional view showing a variation of the light sending and receiving module by ferrules of the twenty-ninth embodiment;
Fig. 79 is a sectional view showing another variation of the light sending and receiving module by ferrules of the twenty-ninth embodiment; and
Fig. 80 is a partially sectional view showing the fifth step of the method of manufacturing a light sending and receiving module used for the connecting structure of the light sending and receiving module by ferrules of the thirtieth embodiment of the present invention.

In this connection, in the drawings, reference numeral 1 is a ferrule, reference numerals 1A, 1B, 1 C are ferrule joining members, reference numeral 1D is a ferrule joining member for joining both faces, reference numeral 1E is a ferrule joining member for joining one face, reference numeral 1F is a ferrule joining member of one body type, reference numeral 12 is a step portion, reference numerals 13, 17 are flat portions (flat faces), reference numeral 13A is a small width groove, reference numeral 14 is a holding portion, reference numeral 15 is an inclined face, reference numeral 15A is an upper corner portion, reference numeral 15B is a lower corner portion, reference numeral 16 is an insertion pore, reference numeral 2A is a guide sleeve, reference numeral 21 is a window portion, reference numeral 21A represents both sides, reference numeral 22 is a slit, reference numeral 3 is a light emitting element (sending portion), reference numerals 31, 32 are face light emitting elements, reference numeral 31A is a first face light emitting element, reference numeral 31B is a second face light emitting element, reference numeral 32A is a light emitting portion, reference numeral 4 is an optical fiber, reference numeral 4A is a covering portion, reference numeral 4B is an optical fiber core wire, reference numeral 4C is an inclined face, reference numeral 40 is a cutout face, reference numeral 5 is an optical filter, reference numerals 5A, 5B, ··· are thin film filters, reference numeral 6 is a light receiving element (receiving portion), reference numerals 61, 62 are face light receiving elements, reference numeral 61A is a first face light receiving element, reference numeral 61B is a second face light receiving element, reference numeral 62A is a light receiving portion, reference numeral 62B is a condenser lens, reference numeral 62C is a lead wire, reference numeral 7 is a printed wiring board, reference numeral 70 is an amplifier, reference numeral 71 is a wiring pattern, reference numeral 72 is a terminal, reference numeral 10 is a unit, reference numeral 110 is a printed board, reference numeral 120 is a dripping means, reference numeral 200 is a glass board, reference numeral 210 is a V-shaped groove, reference numeral 220 is a step portion, reference numeral 230 is an inclined face, reference numeral 300 is a guide sleeve (guide means), reference numeral 310 is an attaching face (upper face), reference numeral 320 is a slit, reference numeral 400 is a light sending and receiving module, reference numeral 410 is a module side ferrule, reference numeral 420 is an attaching fitting, reference numeral 500 is a device housing, reference numeral 600 is a receptacle, reference numeral 610 is a main body portion, reference numeral 620 is a connector portion, reference numeral 630 is an extended diameter flange portion, reference numeral 640 is a screw, reference numerals 650, 660 are engaging legs, reference numeral 670 is an inner diameter portion, reference numeral 680 is a ferrule engaging portion, reference numeral 700 is a module side ferrule, reference numeral 800 is a device side ferrule, and reference numeral 900 is an alignment sleeve.

### <Most Preferred Embodiments>

Referring to the accompanying drawings, embodiments of the present invention will be explained in detail as follows.

### (First Embodiment)

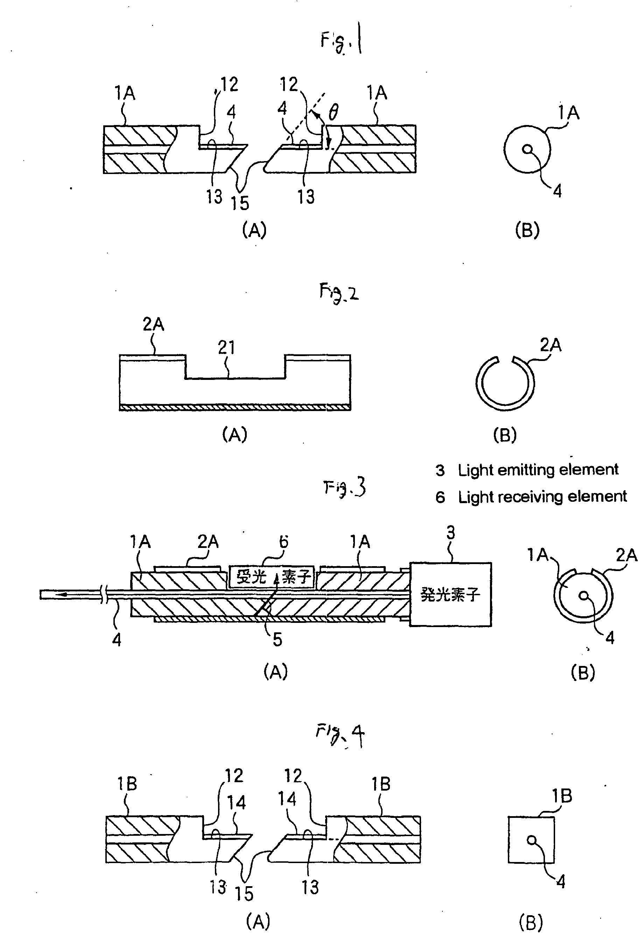

Fig. 1 is a view showing a pair of ferrule joining members to be optically coupled in a light sending and receiving module by ferrules of the first embodiment of the present invention.

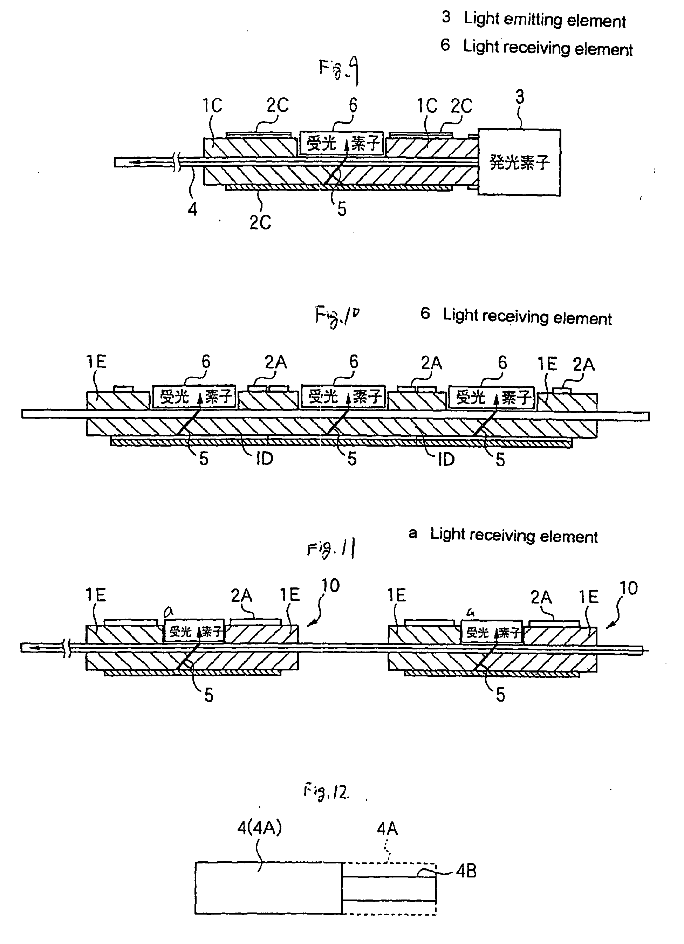

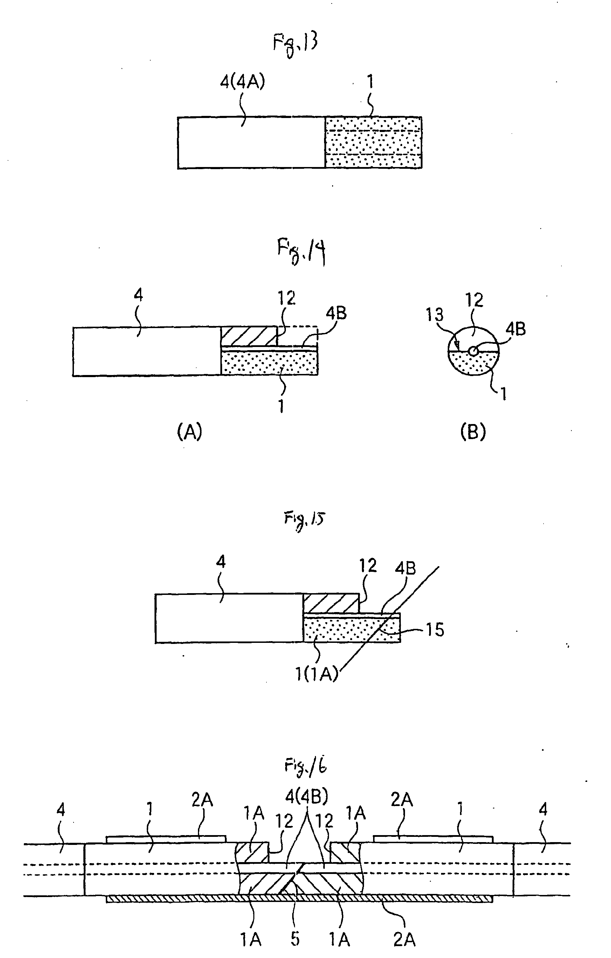

In the ferrule joining member 1A, the step portion 12 is formed in such a manner that an upper half portion of one end portion of the ferrule not shown, the shape of which is columnar, in which the optical fiber 4 is embedded, is cut out, and the optical fiber 4 (the core wire 4B of the optical fiber shown in Fig. 12 described later) is somewhat exposed from the flat portion 13 of the step portion 12. End faces of the step portion 12 and the optical fiber 4 are inclined and formed into the inclined face 15. Concerning the direction of inclination of the end faces, the end faces with respect to one ferrule joining member 1A are inclined upward, and the end faces with respect to the other ferrule joining member 1 A are inclined downward. Therefore, when both the inclined faces are butted to each other, no gaps are generated between them. In this connection, it is preferable that the angle θ of inclination is approximately 60° so that the angle θ of inclination can be fitted to the angle of inclination of the optical filter 5 described later.

Fig. 2 is a view showing a guide sleeve 2A used for positioning the ferrule joining member 1A to be inserted. Corresponding to the cross section of the ferrule joining member 1A, the guide sleeve 2A is formed into a cylindrical shape, the cross section of which is a C-shape directed upward. It is preferable that the window portion 21 is formed in this guide sleeve 2A when an upper central portion of the guide sleeve 2A is cut out into a C-shape directed upward.

Fig. 3 is a view showing a state in which the ferrule joining members 1A are inserted into the guide sleeve 2A. In other words, one ferrule joining member 1A is inserted from one end face of the guide sleeve 2A, and the other ferrule joining member 1A is inserted from the other end face of the guide sleeve 2A while the step portions 12 are being opposed to each other. The optical filter 5, which is a light branching means, is interposed between the inclined faces 15 (the optical coupling portion) of both the ferrule joining members 1A. Therefore, both the ferrule joining members 1A are butted to each other via the optical filter 5 so that end faces of both the optical fibers 4 can be joined to each other.

Examples of the optical filter 5 are: a polarization filter having a characteristic of making plane polarization by selectively absorbing some components of the electromagnetic waves that are transmitted; an extinction filter having a characteristic of reducing a quantity of light; and a wave-length division filter described later.

After both the ferrule joining members 1A have been butted to each other, the butted faces are bonded by adhesive which is melted by the exposure to ultraviolet rays. The butted faces are located at the substantial center of the guide sleeve 2A, and the window portion 21 is located in an upper portion of the butted faces.

In this connection, in the case of forming the window portion 21 in the guide sleeve 2A, the light receiving element 6 is attached to this window portion 21. In other words, the window portion 21 is provided for arranging the light receiving element 6. In the case of arranging the light receiving element 6 in the window portion 21, a wave-length division filter is used as the optical filter 5. This wave-length division filter is characterized in that: a specific signal in the signals transmitted in the optical fiber, the wave-lengths of which are different from each other, is separated by reflection or diffraction in the wavelength division filter. When the light receiving element 6 receives the thus separated optical signal, the specific signal is branched so that the light branching filter can be composed.

In this connection, when a half mirror is used as this optical filter 5, since the half mirror is characterized in that a substantially half of the signals of the same wave-length transmitted in the optical fiber 4 are separated being reflected or diffracted, a specific signal is turned out when the thus separated optical signal is received by the light receiving element 6, so that a light turnout can be composed.

The light emitting element 3 capable of sending out a signal to the optical fiber 4 is attached to the other end portion of the ferrule joining member 1A of this embodiment. However, it is possible to attach a light receiving element instead of the light emitting element 3.

Figs. 4 and 5 are views showing a variation of the ferrule joining member and the guide sleeve. In the structure shown in Fig. 1, the ferrule joining member 1A is formed by cutting out a columnar ferrule. However, in the structure shown in Fig. 4, the ferrule joining member 1B is formed by cutting out a square pole. Other points of the structure are the same as those of Fig. 1. Therefore, explanations are omitted here.

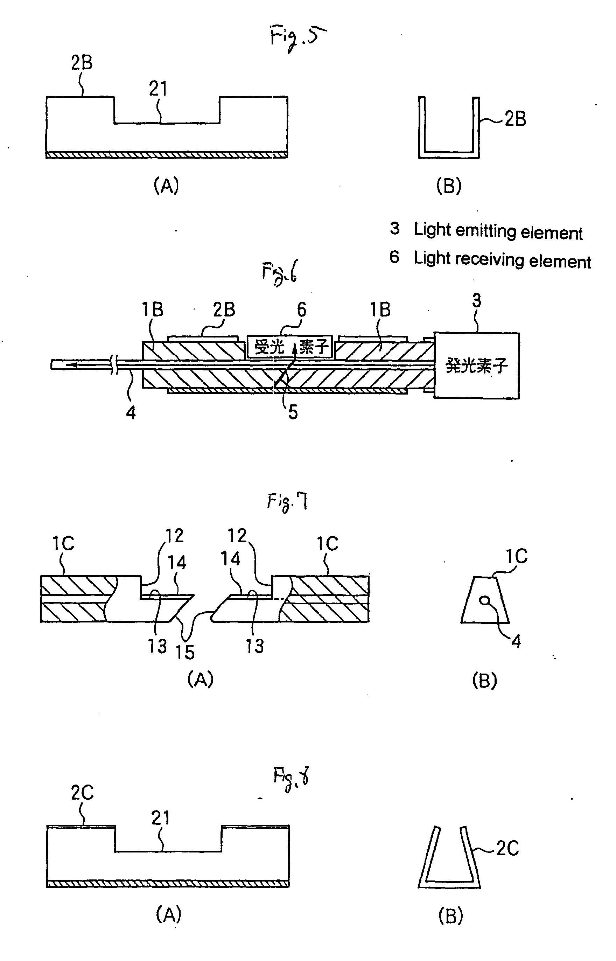

In the structure shown in Fig. 2, the cross section of the guide sleeve 2A is formed into a C-shape, however, in the structure shown in Fig. 5, the cross section of the guide sleeve 2B is formed into a U-shape directed upward. Other points of the structure are the same as those of Fig. 2. Therefore, explanations are omitted here. In the same manner, Fig. 6 is a view showing a state in which the ferrule joining member 1B shown in Fig. 4 is inserted into the guide sleeve 2B shown in Fig. 5. Other points of the structure are the same as those of Fig. 3. Therefore, explanations are omitted here.

Figs. 7 and 8 are views showing another variation of the ferrule joining member and the guide sleeve. In the structure shown in Fig. 1, the ferrule joining member is formed when a columnar ferrule is cut out. However, in the structure shown in Fig. 7, the ferrule joining member is formed when a trapezoidal ferrule is cut out. Other points of the structure are the same as those of Fig. 1.

Therefore, explanations are omitted here. In the same manner, in the structure shown in Fig. 2, the cross section of the guide sleeve 2A is formed into a C-shape. However, in the structure shown in Fig. 8, the cross section of the guide sleeve 2C is formed into a trapezoidal cylindrical shape. Other points of the structure are the same as those of Fig. 2. Therefore, explanations are omitted here.

Fig. 9 is a view showing a state in which the ferrule joining member 1C shown in Fig. 7 is inserted into the guide sleeve 2C shown in Fig. 8. Other points of the structure are the same as those of Fig. 3. Therefore, explanations are omitted here.

When the cross sections of the ferrule joining member and the guide sleeve are formed into a square or trapezoid as shown in the above two variations, the ferrule joining members 1B, 1C can be prevented from rotating with respect to the guide sleeves 2B, 2C. Therefore, at the time of butting the ferrule joining members 1B, 1C to each other, the inclined faces 15 are not dislocated in the circumferential direction, and positioning can be positively made. Accordingly, the optical filter 5 can be easily interposed between the ferrule joining members. In this case, the cross section is not limited to the square or trapezoid described above. As long as the cross section is polygonal, the same operational effect can be provided.

### (Second Embodiment)

Referring to Fig. 10, explanations will be made into a light sending and receiving module by ferrules of the second embodiment of the present invention.

As shown in Fig. 10, the light sending and receiving module by ferrules of the second embodiment is composed in such a manner that a plurality of ferrule joining members 1 are arranged in series. In this embodiment, the ferrules are arranged as follows. The ferrule joining members 1D for joining both faces, in which the step portions are formed at both end portions of the ferrules, are arranged in the central portion in series, and the ferrule joining members 1E for joining one face, in which the step portion is formed at one end portion of each ferrule, are arranged at both end portions of the ferrule joining members 1D for joining both faces.

As described above, in this embodiment, when the adjoining ferrule joining members are inserted into the guide sleeve 2A, the end faces of the optical fibers 4 are butted to each other and optically coupled via the optical filter 5.

### (Third Embodiment)

Referring to Fig. 11, explanations will be made into a light sending and receiving module by ferrules of the third embodiment of the present invention.

As shown in Fig. 11, the light sending and receiving module by ferrules of this embodiment is composed as follows. A pair of ferrule joining members 1E for joining one face, which are formed at the step portions by cutting out one end portion of the ferrule, are inserted into the guide sleeves 2A. In this way, four end faces of the optical fibers are butted to each other via the optical filters 5 so as to form the units 10. These units 10 are arranged in series, and the optical fibers 4 of the adjoining units 10 are optically coupled to each other. Due to the above structure, the present embodiment can be utilized for WDM system (Wavelength Division Multiplexing System) in which three or more wavelengths such as four wavelengths or eight wavelengths can be transmitted being multiplexed.

In this connection, in Figs. 10 and 11, the ferrule joining member and the guide plate shown in Figs. 1 and 2 are used. However, the ferrule joining member and the guide plate are not necessarily limited to those shown in Figs. 1 and 2. The ferrule joining members and the guide plates shown in Figs. 4, 5, 7 and 8 may be used.

The light sending and receiving modules shown in Figs. 3, 6 and 9 explained before can be mounted on a printed board.

### (Fourth Embodiment)

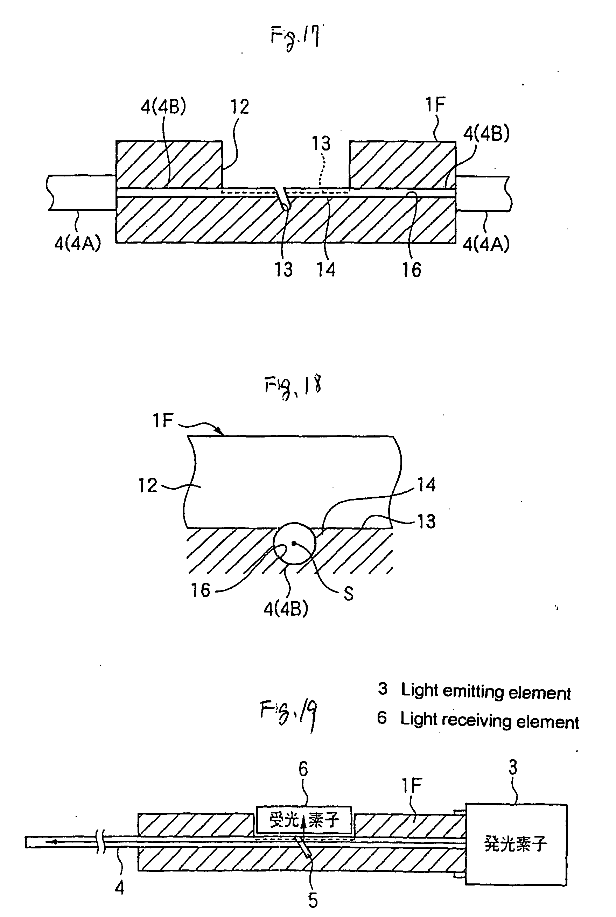

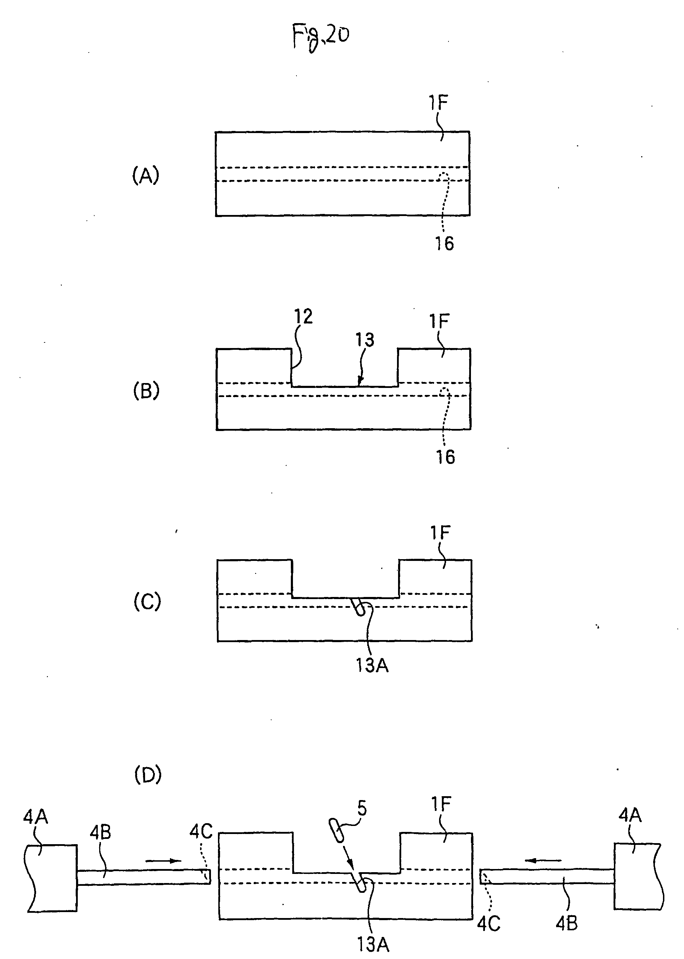

Referring to Figs. 12 to 16, explanations will be made into a method of manufacturing a light sending and receiving module by ferrules of the fourth embodiment of the present invention. In this embodiment, a method of manufacturing the light sending and receiving modules shown in Figs. 1 to 3 is explained in this embodiment.
(1) First of all, in the first step, the covering portion 4A is peeled off from the optical fiber 4 as shown in Fig. 12.
(2) In the second step, as shown in Fig. 13, the ferrule 1 is fitted to the core wire portion of the optical fiber 4B which is uncovered after the covering portion 4A has been peeled off.
(3) In the third step, as shown in Fig. 14, the step portion 12 is formed at an end portion of the ferrule 1. At this time, concerning the cutting blade, a saw referred to as a blade attached with pieces of diamond is used. There are provided a wide blade and narrow blade. The wide blade is used for rough cutting and the narrow blade is used for polishing with high accuracy.
   (i) First, after an upper portion of the end of the ferrule 1 has been cut in the radial direction by the wide blade, the blade is moved in the axial direction and the end portion of the ferrule 1 is cut out so that the step portion 12 can be roughly formed. In the process of cutting out, the optical fiber 4 is somewhat exposed from the flat portion 13 of the step portion 12. In this case, even when the clad of the optical fiber 4 is somewhat shaved, no problems are caused as long as the blade does not reach the core.
   (ii) Next, the step portion 12 is accurately polished by the narrow blade.
(4) In the fourth step, as shown in Fig. 15, cutting is obliquely conducted downward on the end face of the step portion 12 so that the inclined face 15 can be formed. After that, the inclined face 15 is polished. In this way, the ferrule joining member 1A is formed.
(5) In the fifth step, as shown in Fig. 16, a pair of ferrule joining members 1 A are prepared in which the inclined faces 15 formed in the first to the fourth step are provided being opposed to each other in such a manner that the inclined faces 15 are inversely directed to each other. These ferrule joining members 1A are inserted into the guide sleeve 2A used for positioning, and the end faces of the optical fibers 4 are butted to each other via the optical filter 5.
(6) In the sixth step, after both the ferrule joining members 1 A have been butted to each other, the butted faces are bonded to each other by adhesive which is melted when it is exposed to ultraviolet rays. Due to the foregoing, the optical sending and receiving module is completed. In this connection, this butted face is located at the substantial center of the guide sleeve 2A, and the window portion 21 is composed so that it can be located in an upper portion of the butted face. Therefore, when this window portion 21 is utilized, for example, when adhesive is dripped from the right above portion of the window portion, bonding can be easily performed.

As explained above, according to the first to the third embodiment, the optical filter is interposed between the butted faces without being embedded, so that no gaps are formed between the optical fiber and the optical filter. Therefore, the occurrence of irregular reflection can be prevented, and the optical characteristic can be prevented from being deteriorated. Further, without being embedded, the optical filter is arranged between the end faces of the optical fibers. Therefore, it is unnecessary to provide a ferrule used for embedding the optical filter. Accordingly, the manufacturing cost can be reduced.

According to the method of manufacturing a light sending and receiving module of the fourth embodiment, an end portion of the ferrule, which is fitted into the portion of the optical fiber from which the cover portion has been removed, is cut out and the step portion is formed, and an end face of this step portion is obliquely cut off. The thus composed ferrule joining member is inserted into the guide sleeve, and the end faces of the optical fibers are butted to each other via the optical filter. Since the light sending and receiving module is manufactured in this way, the manufacturing step can be shortened, and the manufacturing cost can be reduced.

### (Fifth Embodiment)

Fig. 17 is a laterally sectional view showing a light sending and receiving module by ferrules of the fifth embodiment of the present invention, and Fig. 18 is a longitudinally sectional view of the same.

The light sending and receiving module by ferrules of the fifth embodiment is different from that of the first embodiment, and the insertion pore (central hole) 16 is formed in the one body type ferrule joining member 1F so that the insertion pore 16 can penetrate the ferrule joining member 1F in the axial direction.

This insertion pore 16 is formed so that a pair of optical fiber core wires 4B, which are in an uncovered state since the covering portion 4A has been peeled off, can be inserted into and drawn out from the insertion pore 16, and the end faces of the optical fiber core wires 4B are butted to each other.

In an upper central portion of the ferrule joining member 1F, a C-shaped window portion (referred to as a step portion hereinafter) 12, which is open upward, is formed being cut out so that a portion of the optical fiber core wire 4B on the upper circumferential side can be exposed. On the flat bottom face (referred to as a flat portion hereinafter) 13 of the step portion 12, the holding portion 14 for holding the optical fiber core wire 4B is formed being located on the opening side of the step portion 12 compared with the axis S (shown in Fig. 18) of the optical fiber core wire 4B.

Further, in the flat portion 13 of the step portion 12, the small width groove 13A is formed so that it can cross the axis S of the ferrule joining member 1F in the insertion pore 16. This small width groove 13A is formed being inclined with respect to the axis S of the ferrule joining member 1F. It is preferable that the inclination angle is approximately 60° so that it can be fitted to the inclination angle of the optical filter 5 described later. Each end face of the pair of optical fiber core wires 4B may be ground before the pair of optical fiber core wires 4B are inserted into the insertion pore 16 or under the condition that the optical fiber core wires 4B are once drawn out from the insertion pore 16 after the pair of optical fiber core wires 4B have been inserted into the insertion pore 16. After that, both the optical fiber core wires 4B are inserted into the insertion pore 16, and then the optical fiber core wires 4B are accurately guided by the insertion pore 16 which is highly precisely machined, and the optical axes of both the end faces can be made to agree with each other.

When the optical fiber core wires 4B are attached to the ferrule joining members 4B, as shown in Fig. 19, the optical filter 5 is interposed between both end faces of the optical fiber core wires 4B. When the end faces of the optical fiber core wires 4B are butted to each other via the optical filter 5 so as to conduct light-turnout, the optical fibers 4B can be optically coupled. After that, the optical fiber core wires 4B are fixed in the insertion pore 16 with adhesive.

In this connection, concerning the optical filter 5, the same optical filter as that of the first embodiment is used. Examples of the optical filter 5 are: a polarization filter having a characteristic of making plane polarization by selectively absorbing some components of the electromagnetic waves that are transmitted; an extinction filter having a characteristic of reducing a quantity of light; and a wave-length division filter characterized in that a specific signal in the signals, the wave-lengths of which are different from each other, which are transmitted in the optical fiber, is separated by reflection or diffraction.
As shown in Fig. 19, in the step portion 12 provided in the ferrule joining member 1F, the light receiving element 6 is arranged being opposed to the optical filter 5. In the case where the light receiving element 6 is arranged, a wave-length division filter is used as the optical filter 5. This wave-length division filter, which is used as the optical filter 5, is characterized in that: a specific signal in the signals transmitted in the optical fiber, the wave-lengths of which are different from each other, is separated by reflection or diffraction. When the separated optical signal is received by the light receiving element, the specific signal can be branched and the light branching filter can be composed.

In the same manner as the first embodiment, when a half mirror is used as this optical filter 5, since the half mirror is characterized in that a substantially half of the signals of the same wave-length transmitted in the optical fiber 4 are separated being reflected or diffracted, a specific signal is turned out when the thus separated optical signal is received by the light receiving element 6, so that a light turnout can be composed.

The outer end of one of the optical fibers 4 is attached with the light emitting element 3 capable of sending out a signal to the optical fiber 4, so that optical correspondence can be conducted on the outer end of the other optical fiber 4. In this case, the light receiving element can be provided instead of the light emitting element 3.

### (Sixth Embodiment)

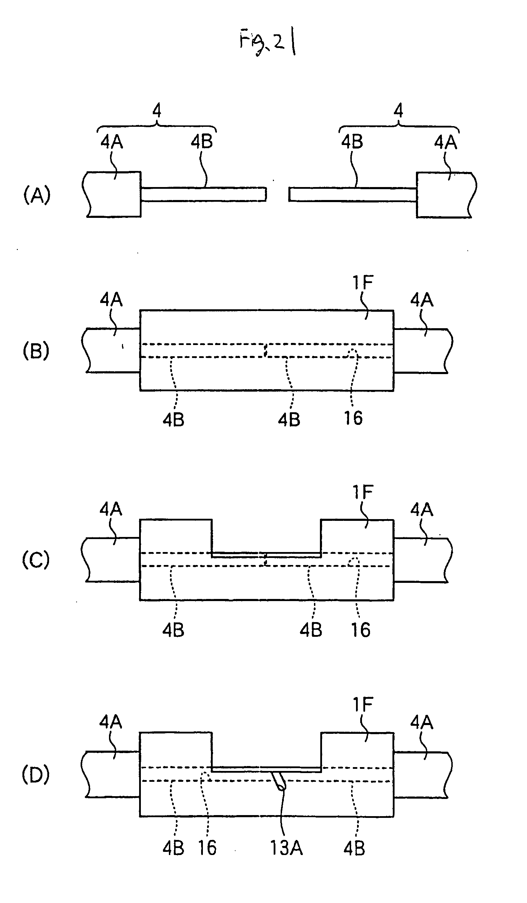

Next, referring to Figs. 20 and 21, a method of manufacturing the light sending and receiving module by ferrules of the sixth embodiment described above will be explained below.
(I) First, a case shown in Fig. 20, in which an optical fiber is attached later, will be explained.
   (1) In the preparation step, the ferrule joining member 1F, in which the insertion pore 16 is previously formed penetrating in the axial direction, is prepared as shown in Fig. 20(A).
   (2) In the first step, the step portion 12 having a bottom is formed in the ferrule joining member 1F so that the insertion pore 16, which penetrates the ferrule joining member 1F in the axial direction, can be open to this step portion 12 as shown in Fig. 20(B).
      Next, in the second step, the small width groove 13A is formed on the bottom face 13 of the step portion 12 in the ferrule joining member 1F so that the small width groove 13A can cross the axial direction of the insertion pore 16 as shown in Fig. 20(C).
   (4) Next, in the third step, from the outer end sides of the insertion pore 16, the optical fiber core wires 4B, the cover portions 4A at one end of which are peeled off, are respectively inserted into the insertion pore 16. At the same time, the optical filter 5 (or the half mirror), which conducts light-turnout when end faces of the optical fiber core wires 4B are butted to each other, is inserted into the small width groove 13A, so that the optical fiber core wires 4B can be optically coupled as shown in Fig. 20(D).

   In this connection, in order to provide the optical filter 5, the end face of the optical fiber core wire 4B is formed into an inclined face 4C. In this case, in order to optically couple the optical fiber core wires 4B to each other more positively, it is preferable that this inclined face 4C is ground. Since the end face of the optical fiber core wire 4B is ground while the optical fiber core wire 4B is being detached from the insertion pore 16, it is possible to obtain a more accurate smooth inclined face. When the optical filter 5 is formed in such a manner that a thin filter film is laminated on the inclined face 4C, it is possible to omit the insertion of the optical filter 5.
   The holding portion 14 for holding the optical fiber core wire 4B is formed so that the flat portion 13 of the step portion 12 can be located on the opening side of the step portion 12 compared with the axis of the optical fiber core wire 4B when the optical fiber core wire 4B is inserted into the insertion pore 16.
(II) Next, a case shown in Fig. 21, in which the optical fiber is attached beforehand, will be explained below.
   (1) In the preparation step, the cover portion 4A on one end side of the optical fiber 4 is previously peeled off, that is, the optical fiber core wire 4B is previously uncovered.
   (2) In the first step, the optical fibers 4 are inserted into both end sides of the insertion pore 2 penetrating the ferrule joining member 1F in the axial direction as shown in Fig. 21(A).
   (3) Next, in the second step, the ferrule joining member 1F is cut in the radial direction by a wide blade and then moved in the axial direction. In this way, the step portion 12, the cross section of which is a substantial C-shape, is formed in the ferrule joining member 1F so that a portion of the circumferential face of the optical fiber core wire 4B can be exposed. Then, the holding portion 14 is formed in which the flat portion 13 of the step portion 12 is located on the opening side of the step portion 12 compared with the intermediate point of the optical fiber core wire 4B. The holding portion 14 holds the optical fiber core wire 4B as shown in Fig. 21(B). In this case, at the time of forming the step portion 12, even when the clad of the optical fiber 4B is somewhat shaved, no problems are caused as long as the blade does not reach the core. The important point is that the flat portion 13 is ground by using the narrow blade after the step portion 12 has been formed.
   (4) Next, in the third step, the small width groove 13A, which crosses the axial direction of the ferrule joining member 1F, is formed in the flat portion 13 of the step portion 12 so that an end face of the optical fiber 4B in the insertion pore 16 can be cut. In this connection, in this third step, an end face of the optical fiber core wire 4B is also cut into an inclined face. In order to provide a more smooth face of the inclined face, the optical fiber core wire 4B is drawn out from the ferrule joining member 1F, and then the end face is ground. After that, the optical fiber core wire 4B is inserted into the insertion pore 16 again.
   (5) Next, in the fourth step, the optical filter 5, by which light-turnout is conducted when the cut faces of the optical fiber core wires 4B are butted to each other, is inserted into the small width groove 13A. Alternatively, the half mirror, by which light-turnout is conducted when the end faces of the optical fiber core wires 4B are butted to each other, is inserted into the small width groove 13A. In this way, the optical fiber core wires 4B can be optically coupled to each other as shown in Fig. 21(D).

According to the above embodiment, even if a portion of the circumferential face of the optical fiber core wire 4B is exposed from the ferrule joining member 1F when the step portion 12 is formed, the flat portion 13 of the step portion 12 is located on the opening side of the step portion 12 compared with the axis S of the optical fiber core wire 4B, so that the holding portion 14 for holding the optical fiber core wire 4B can be formed. Due to the foregoing, even if the small width groove 13A is formed in the ferrule joining member 2F while the optical fiber core wire 4B is being inserted into the insertion pore 16, there is no possibility that the optical fiber core wire 4B is raised by the pressure of forming the small width groove 13A. Accordingly, the end face of the optical fiber core wire 4B can be smoothly cut, and no irregular reflection of the optical signal is caused.

Since it is composed that the optical fiber core wire 4B can be inserted into and drawn out from the insertion pore 16 after cutting, the end face can be ground. Therefore, irregular reflection of the optical signal can be positively prevented. In the case where the optical fiber core wire 4B is returned into the insertion pore 16 again, it is preferable that the optical fiber core wire 4B and the ferrule joining member 1F are fixed to each other by adhesive.

### (Seventh Embodiment)

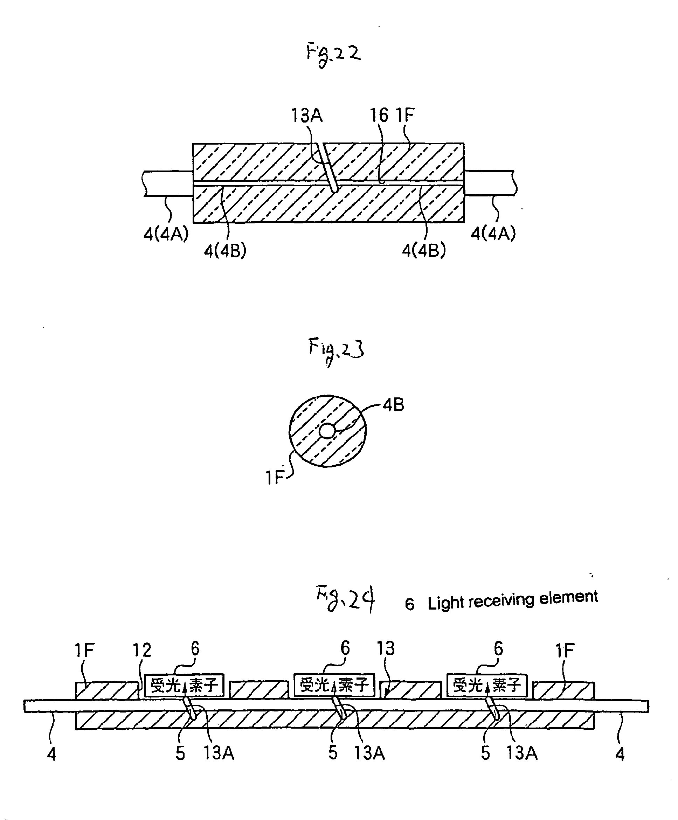

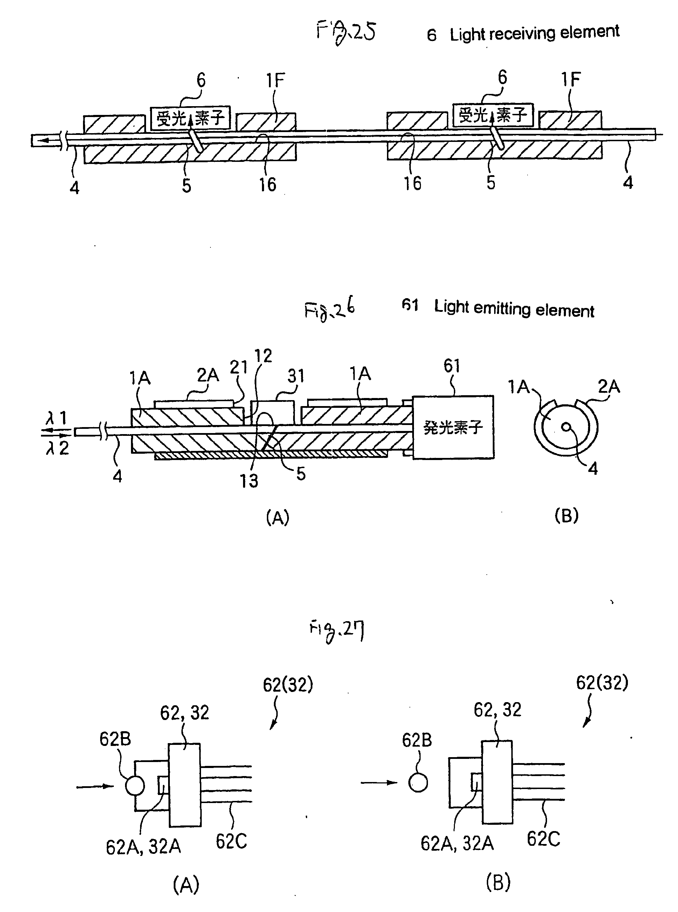

Referring to Figs. 22 and 23, a light sending and receiving module by ferrules of the seventh embodiment of the present invention will be explained below.

In the seventh embodiment, a transparent board made of glass is used as the ferrule joining member 1F. Since the ferrule joining member 1F itself has a light transmitting property, the step portion 12 is abolished, and the small width groove 13A is formed penetrating an upper portion of the ferrule joining member 1F. The above points are different from the embodiment described before. The light receiving element 6 or the light emitting element 3 is provided on an upper face side of the ferrule joining member 1F on the opening side of the small width groove 13A.

Due to the above structure, when the small width groove 13A is formed in the ferrule joining member 1F, the periphery of the optical fiber core wire 4B is fixed and held by the insertion pore 16. Therefore, even if the small width groove 13A is formed while the optical fiber core wire 4B is inserted into the insertion pore 16, the optical fiber core wire 4B is not raised by the pressure of forming the small width groove 13A, and a smooth end face can be formed. Accordingly, there is no possibility that irregular reflection is caused. Since the optical fiber core wire 4B can be drawn out from the insertion pore 16 after the small width groove 6 has been formed, the end face can be ground. Due to the foregoing, irregular reflection of the optical signal can be more positively prevented. In the case where the optical fiber core wire 4B is returned into the insertion pore 16 again, it is preferable that the optical fiber core wire 4B and the ferrule joining member 1F are fixed to each other by adhesive.

### (Eighth Embodiment)

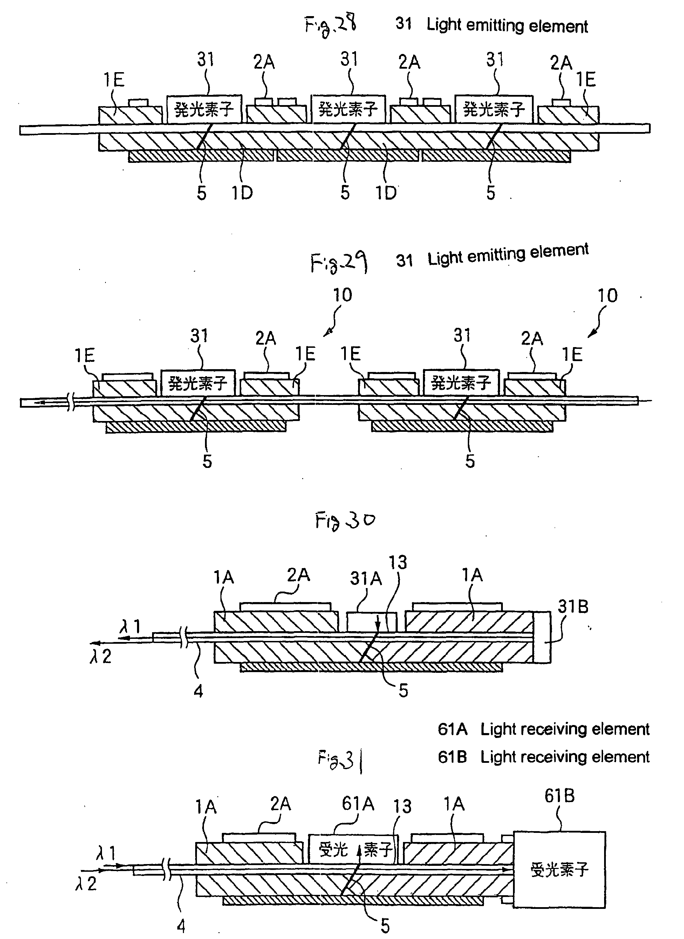

Fig. 24 is a view showing a light sending and receiving module by ferrules of the eighth embodiment of the present invention in which a plurality of light receiving elements 6 are arranged in series in the single ferrule joining member 1F.

In this embodiment, in an upper portion of the ferrule joining member 1F, a plurality of C-shaped step portions 12, which are open upward, are formed being cut out so that the plurality of C-shaped step portions 12 can continue to each other in the axial direction S and a portion of the upper circumferential face of the optical fiber 4 can be exposed. Each step portion 12 is provided with a light receiving element 6. In the flat portion 13 of each step portion 12, the small width groove 13A is formed by cutting the optical fiber 4 in the insertion pore 16 so that the small width groove 13A can be opposed to the light receiving element 6 and the small width groove 13A can cross the axial direction of the ferrule joining member 1F. The optical filter 5 is attached to each small width groove 13A. When end faces of the optical fibers 4 are butted to each other via the optical filter 5, the optical fibers 4 are optically coupled to each other.

### (Ninth Embodiment)

Fig. 25 is a view showing a light sending and receiving module by ferrules of the ninth embodiment of the present invention in which a pair of ferrule joining members 1F are used, wherein each light receiving element 6 is arranged in the step portion 12. The small width groove 13A is formed in each ferrule joining member 1F, and the optical filter 5 is arranged. Due to the above structure, the present embodiment can be utilized for WDM system in which three or more wavelengths such as four wavelengths or eight wavelengths can be transmitted being multiplexed.

It is possible to mount the modules of the embodiments shown in Figs. 19, 23, 24 and 25 on a printed board.
In the fifth to the ninth embodiment explained above, when the small width groove is formed in the ferrule joining member by cutting the optical fiber, even if the optical fiber is not inserted into the insertion pore or the optical fiber is inserted into the insertion pore, the optical fiber is held by the holding portion, so that the optical fiber can be suppressed by the ferrule joining member. Therefore, the optical fiber is not raised by the pressure of forming the small width groove, and a smooth cutting face can be formed. Accordingly, there is no possibility that the optical signal is irregularly reflected.

In these embodiments, when the optical fiber is drawn out from the insertion pore after the small width groove has been formed, it becomes possible to grind the end faces. Due to the foregoing, irregular reflection of the optical signal can be more positively prevented. When the optical fiber is returned into the insertion pore again, it is preferable that the optical fiber and the ferrule joining member are fixed to each other by adhesive.

### (Tenth Embodiment)

Referring to Figs. 26 and 27, a light sending and receiving module by ferrules of the tenth embodiment of the present invention will be explained in detail below. In this connection, like reference numerals and signs are used to indicate like parts in the first and the tenth embodiment, and duplicate explanations are omitted here.

In the same manner as that of the first embodiment, a light sending and receiving module by ferrules of the tenth embodiment of the present invention includes: a pair of ferrule joining members 1A to be optically connected to each other; and a guide sleeve 2A. In the flat portion (flat face) 13 in the step portion 12 of the ferrule joining member 1A which faces the guide sleeve 2A, a face light emitting element (VCSL: Vertical Cavity Surface-Emitting Laser) is arranged.

In this connection, concerning the optical filter 5, the same optical filter as that of the first embodiment is used. Examples of the optical filter 5 are: a polarization filter having a characteristic of making plane polarization by selectively absorbing some components of the electromagnetic waves that are transmitted; an extinction filter having a characteristic of reducing a quantity of light; and a wave-length division filter described later.
In the case of manufacturing the light sending and receiving module by ferrules of this embodiment, in the same manner as that of the first embodiment, after both the ferrule joining members 1A have been butted to each other, the butted faces are bonded by adhesive which is melted by the exposure to ultraviolet rays. The butted faces are located at the substantial center of the guide sleeve 2A, and the window portion 21 is located in an upper portion of the butted faces. After that, the face light emitting element 31 is inserted from the window portion 21, and then the optical coupling portion and the face light emitting element 31 are positioned to each other. Then, the face light emitting element 31 is fixed to the flat portion 13 by adhesive.

Concerning the face light emitting element 31, when a bare chip, which has been cut out from a wafer, is used, the face light emitting element 31 can be downsized, and when the bare chip is directly attached to the flat portion 13 of the step portion 12 of the ferrule joining member 1A, diffusion of light can be reduced. For the above reasons, the face light emitting element 31 can be excellently coupled to the optical fiber 4. As a result, a signal outputted from the face light emitting element 31 can be effectively sent into the optical fiber 4.

The other end portion of the ferrule joining member 1A is attached with the light receiving element 6 capable of receiving an optical signal transmitted in the optical fiber 4. This light receiving element 6 may be composed of the face light receiving element 61.

Next, an action of the sending and receiving module by ferrules of the tenth embodiment composed as described above will be explained below referring to Fig. 26.

An optical signal, the wavelength of which is λ1, which is outputted from the face light emitting element 31 provided in the step portion 12 of the ferrule joining member 1A, is reflected by the optical filter 5 and sent into the optical fiber 4 and then sent out to a home or a telephone exchange being transmitted in the optical fiber 4.

On the other hand, an optical signal, the wavelength of which is λ2, which is sent from the telephone exchange or home, is transmitted through the optical filter 5 and received and converted into an electric signal by the light receiving element 6 attached to the other end portion of the ferrule joining member 1A. The thus converted electric signal is inputted into a communication device not shown in the drawing. In this way, two-way high speed correspondence can be conducted.

In this connection, when a bare chip is used for the light receiving element 6, it is possible to downsize the light receiving element 6. However, the face light receiving element 62 and the face light emitting element 32 respectively shown in Figs. 27(A) and 27(B) may be used.

The face light receiving element 62 or the face light emitting element 32 shown in Fig. 27(A) is composed in such a manner that the condenser lens 62B is arranged in the front of the light receiving portion 62A or the light emitting portion 32A, and the light receiving portion 62A or the light emitting portion 32A is integrated with the condenser lens 62B into one body so that a can package having the lens can be formed. A signal converted into an electric signal by the light receiving portion 62A is outputted through the lead wire 62C. On the other hand, the signal inputted through the lead wire 62C is outputted from the light emitting portion 32A.

The face light receiving element 62 or the face light emitting element 32 shown in Fig. 27(B) is composed in such a manner that the light receiving portion 62A or the light emitting portion 32A is provided being different from the condenser lens 62B so that a can package having no lens can be formed. Although the size of the face light receiving element 62 or the face light emitting element 32 is extended, the function is the same as that of the element shown in Fig. 27(A).

As explained above, in this tenth embodiment, the face light emitting element 31 is provided in the window portion 21 of the guide sleeve 2A. However, the light receiving element 6 may be provided in the window portion 21. In the case where the light receiving element 6 is provided in the window portion 21, a wavelength division filter is used as the optical filter 5.

This wavelength division filter is characterized in that a specific signal in the signals of different wavelengths spreading in the optical fiber 4 is reflected or diffracted so that the specific signal can be separated. When the thus separated optical signal is received by the light receiving element 6, the specific signal can be branched, that is, a light branching filter can be composed.
When a half mirror is used as the optical filter 5, since the half mirror is characterized in that a substantial half of signals in the signals of the same wavelength spreading in the optical fiber 4 are reflected or diffracted so that the signals can be separated. Therefore, when the thus separated optical signal is received by the light receiving element 6, the specific signal can be turned out, that is, a light turnout can be composed.

In this connection, in this embodiment, it is possible to use a ferrule joining member by cutting out a square-pole-shaped ferrule. In the same manner, a guide sleeve, the cross section of which is formed into a U-shape upward, may be used. It is possible to adopt such a structure that a trapezoidal ferrule is cut out so as to form a ferrule joining member, and a guide sleeve, the cross section of which is trapezoidal, is formed.

### (Eleventh Embodiment)

In the same manner as that of the second embodiment shown in Fig. 10, the eleventh embodiment shown in Fig. 28 is composed in such a manner that a plurality of ferrule joining members are inserted into the guide sleeve 2A in series. The ferrule joining members 1D for joining both faces and the ferrule joining members 1E for joining one face are joined in such a manner that the end faces of the optical fibers are butted to each other via the optical filter 5 or the total reflection mirror so as to be optically coupled. In the flat portion, not the light receiving element but the face light emitting element 31 is provided.

### (Twelfth Embodiment)

In the twelfth embodiment shown in Fig. 29, in the same manner as that of the third embodiment shown in Fig. 11, when a pair of ferrule joining members 1E for joining one face are inserted into the guide sleeve 6, end faces of the optical fibers 4 are butted to each other via the optical filter 5 so that the unit 10 can be composed. These units 10 are composed in such a manner that the optical fibers 4 of the units 10, which are arranged in series and adjacent to each other, are optically coupled to each other. Due to the above structure, the present embodiment can be utilized for WDM system in which three or more wavelengths such as four wavelengths or eight wavelengths can be transmitted being multiplexed.

In this connection, in the eleventh and the twelfth embodiment shown in Figs. 28 and 29 described above, the cross sections of the ferrule joining member and the guide sleeve are formed into a circle, however, the cross sections of the ferrule joining member and the guide sleeve are not limited to the above specific shape. For example, the cross sections may be square or trapezoidal. Further, each module can be mounted on a printed board.

As explained above, in the tenth to the twelfth embodiment, the face light emitting element 31 is arranged in the step portion 12 of the ferrule joining member, and the light receiving element 6 is arranged in the other end portion of the optical fiber 4, however, the light receiving element and the light emitting element may be arranged at positions directed in the following variation.

The light sending and emitting module shown in Fig. 30 is a variation which is composed as follows. The light sending and emitting module shown in Fig. 30 uses the ferrule joining member 1A and the guide sleeve 2A explained in the tenth embodiment. The first face light emitting element 31A is attached to the step portion 12 of the ferrule joining member 1A. The second face light emitting element 31B is attached to the other end portion of the ferrule joining member 1A from which an end face of the optical fiber 4 is exposed. In this case, an optical signal, the wavelength of which is λ1, is outputted from the first face light emitting element 31A, and an optical signal, the wavelength of which is λ2, is outputted from the second face light emitting element 31B.

These optical signals outputted are synthesized by the optical filter 5 composed of a wavelength filter and sent to the optical fiber 4. When the first face light emitting element 31A and the second face light emitting element 31 B, which respectively output optical signals of different wavelengths, are integrated into one body, a light source for sending optical signals can be provided at a low cost. Therefore, when this light source for sending optical signals is used for WDM system, the manufacturing cost of WDM system can be reduced.

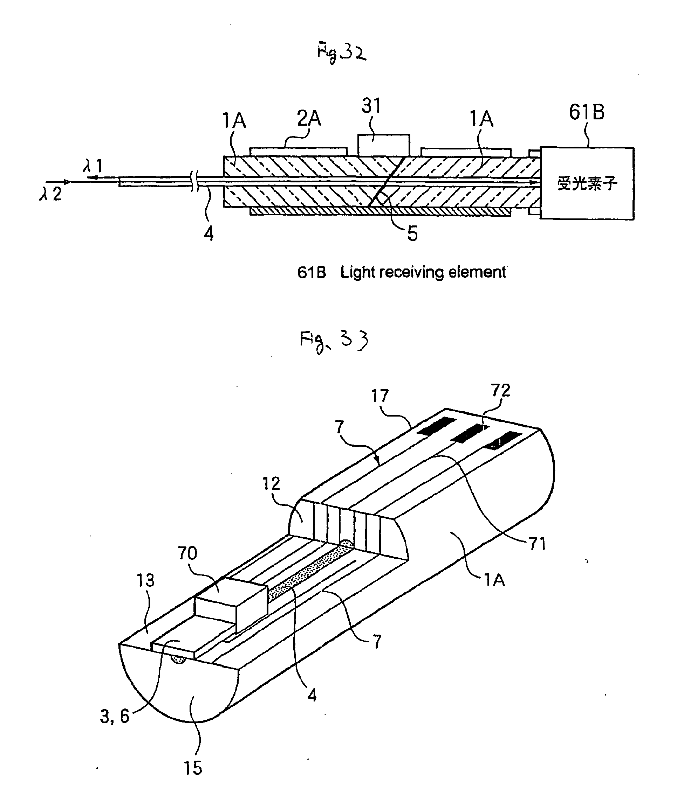

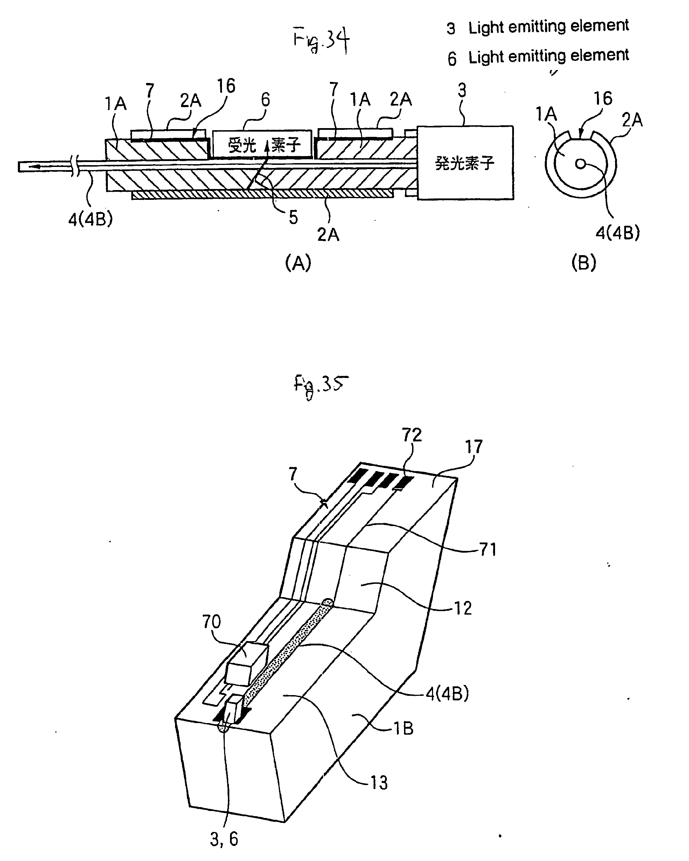

The optical sending and receiving module shown in Fig. 31 is composed in the same manner as that of the optical sending and receiving module shown in Fig. 30. The light sending and emitting module shown in Fig. 31 is a variation which is composed as follows. The light sending and emitting module shown in Fig. 30 uses the ferrule joining member 1A and the guide sleeve 2A explained in the tenth embodiment. The first face light emitting element 61A is attached to the step portion 12 of the ferrule joining member 1A. The second face light emitting element 61B is attached to the end portion of the ferrule joining member 1A from which an end face of the optical fiber 4 is exposed. In this case, when the wavelength division multiplexing optical signals of different wavelengths λ1, λ2 are inputted from the optical fiber 4, the optical filter 5 composed of a wavelength division filter reflects the optical signal of the wavelength λ1 onto the first face light receiving element 61A side and transmits the optical signal of the wavelength λ2 and inputs it into the second face light receiving element 61B.

Due to the foregoing, only the optical signal of a desired wavelength can be separated and received by the first and the second face light receiving element 61A, 61B, and the first and the second face light receiving element 61A, 61B, into which the optical signals of different wavelengths are inputted, are integrated into one body. In this way, a receiving set used for optical correspondence can be obtained. When this receiving set is used for the wavelength division multiplexing system, the manufacturing cost of the wavelength division multiplexing system can be reduced.

In this connection, in the same manner as that of the tenth embodiment, when a bare chip is used for the face light receiving element 61 and the face light emitting element 31 in either variation, the face light receiving element 61 and the face light emitting element 31 can be downsized and strongly coupled with the optical fiber 4.

In any of the tenth to the twelfth embodiment and the variations, when the ferrule joining member 1A is made of transparent glass, it becomes unnecessary to form the step portion 12 in each ferrule joining member 1A.

Fig. 32 is a view showing a variation in which the ferrule joining member 1A is made of glass and the face light emitting element 31 (or the face light receiving element) is provided without forming a step portion in the ferrule joining member 1A. This face light emitting element 31 is fixed onto an outer circumferential face of the joining portion of each ferrule joining member 1A by a fixing means such as adhesion.

According to this variation, an optical signal outputted from the face light emitting element 31 transmits through the ferrule joining member 1A made of glass and reaches the optical filter 5. Then, the optical signal is reflected on the optical filter 5 and sent out to the optical fiber 4. Therefore, it is unnecessary to form the step portion 12 in the ferrule joining member 1A by machining, and when the bare chip is used for the face light emitting element 31, the diffusion of light can be reduced. Therefore, a transmission loss of the optical signal, which is caused when it transmits in the ferrule joining member 1A, can be greatly reduced, and the efficiency is enhanced.

In this connection, in any of the tenth to the twelfth embodiment and the variations described before, the face light emitting element 31 (or the face light receiving element 61) is inserted from the window portion 21 into the guide sleeve 2A, and the face light emitting element 31 (or the face light receiving element 61) is fixed onto the flat face 3 by adhesive. In the light sending and receiving module manufactured in this way, the optical fiber 4 and the face light emitting element 31 (or the face light receiving element 61) are arranged close to each other. Therefore, the optical signal can be sent and received before the diffusion of light. Accordingly, the coupling efficiency can be enhanced. Further, since the face light emitting element 31 (or the face light receiving element 61) can be provided in a small space, the light sending and receiving module by ferrules can be downsized.

As explained above, in the tenth to the twelfth embodiment and the variations described before, the small face light emitting element or the face light receiving element is arranged in the optical coupling portion of the optical fiber. Therefore, the light sending and receiving module by ferrules can be downsized. Further, the optical fiber and the light emitting face of the light emitting element can be arranged close to each other, and the optical fiber and the light receiving face of the light receiving element can be also arranged close to each other. Therefore, the optical signal can be sent and received before the diffusion of light. Due to the foregoing, the coupling efficiency can be enhanced, and no gap is formed on the butted face of the optical fibers between the optical fibers and the optical filter or between the optical fibers and the half mirror. Accordingly, irregular reflection can be prevented and deterioration of the optical characteristic can be prevented.

In these embodiments and the variations, the optical filter is arranged between the end faces of the optical fibers without being embedded. Therefore, it is unnecessary to provide a ferrule for embedding the optical filter. Due to the foregoing, the manufacturing cost of the light sending and receiving module can be reduced. Further, when a bare chip, the electric power consumption of which is small, is used for the face light emitting element or the face light receiving element, the manufacturing cost and the running cost of the light sending and receiving module can be reduced. Further, since the ferrule is made of transparent glass, the face light emitting element and the face light receiving element can be provided on an outer circumferential face of the ferrule, and it becomes unnecessary to form a step portion in the ferrule.

Further, in these embodiments and the variations, when at least one of the light emitting element and the light receiving element is composed of a face light emitting element such as a bare chip, the coupling property of coupling with the optical fiber can be enhanced, and the diffusion of light is decreased at the same time. Therefore, an optical signal can be effectively sent and received, and the light emitting element and the light receiving element can be downsized.

Further, in these embodiments and variations, when an end portion of the ferrule, which is fitted into a portion of the optical fiber from which the cover portion has been removed, is cut out, a step portion is formed. A ferrule joining member, which is formed by obliquely cutting an end face of the step portion, is inserted into the guide sleeve, and end faces of the optical fibers are butted to each other. In this way, the ferrule joining members are optically connected to each other, and a face light emitting element or a face light receiving element such as a bare chip is provided in the step portion. In this way, a light sending and receiving module by ferrules is manufactured. Therefore, the manufacturing process can be shortened and the manufacturing cost can be reduced.

### (Thirteenth Embodiment)

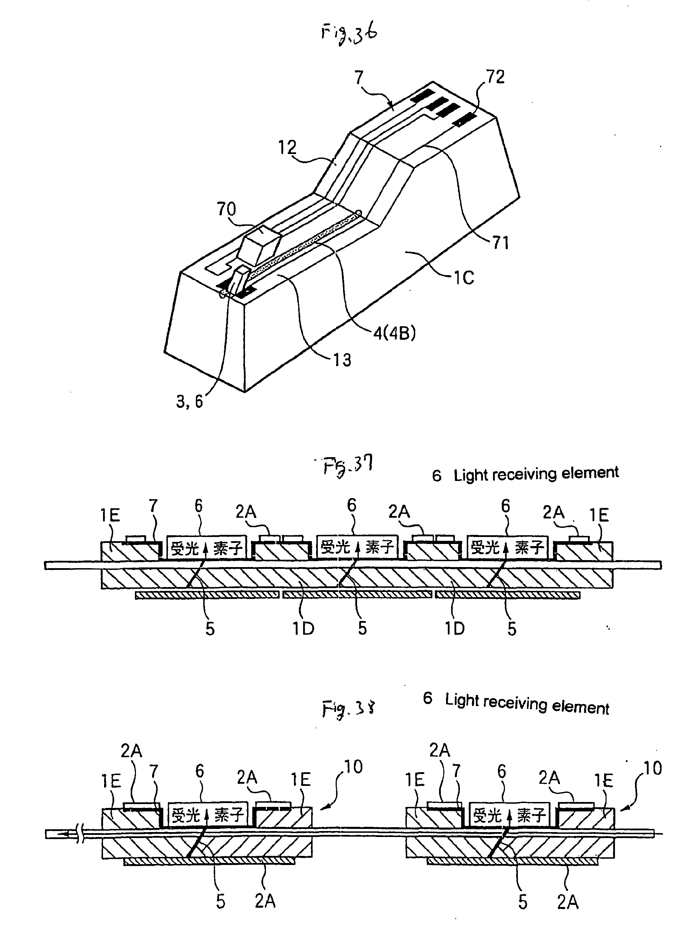

Referring to Figs. 33 and 34, a light sending and receiving module by ferrules of the thirteenth embodiment of the present invention will be explained in detail below. In this connection, like reference numerals and signs are used to indicate like parts in the first and the thirteenth embodiment, and duplicate explanations are omitted here.
As shown in Fig. 33, when the ferrule joining member 1A of this embodiment is composed as follows. When an upper portion of the columnar ferrule, in which the optical fiber 4 (the optical fiber core wire 4B) is embedded, is cut out by a predetermined depth from the outer circumferential face of the columnar ferrule, the flat portion (the flat face) 17 is formed. In this ferrule in which the flat portion (the flat face) 17 is formed by cutting out, an upper half portion on one end portion side is further cut out so as to form a step portion 12. This cutting process is performed so that the optical fiber 4 can be somewhat exposed from the flat portion (the flat face) 13 of the step portion 12. In this connection, in the same manner as that of the first embodiment, after the ferrule joining members 1A have been butted to each other, the butted face is bonded by adhesive which is melted when it is exposed to ultraviolet rays. This butted face is located at the substantial center of the guide sleeve 2A and in an upper portion of the butted face of the window portion 21.

The printed wiring 7 is formed all over the flat portion 17, the step portion 12 and the flat portion 13 by means of etching. As shown in Fig. 33, this printed wiring 7 is formed out of a plurality of wiring pattern 71 which are exposed to the flat portion 13 of the step portion 12.
Onto one end side of the wiring pattern 71, which is located on the flat portion 13 side of the step portion 12, the light receiving element 6 or the light emitting element 3, which is composed of a bare chip formed by cutting out a wafer, and the amplifier 70 are directly attached by an appropriate means such as soldering. On the other hand, on the other end portion side of the wiring pattern 71 which is located at a position on the flat portion 17 side formed on an outer circumferential face of the ferrule joining member 1A, the terminal 72 is formed which is connected to a connector not shown.

On the other hand, as shown in Fig. 34, the guide sleeve 2A for positioning, into which the ferrule joining member 1A is inserted, is formed into a C-shaped cylindrical shape, the cross section of which is directed upward, corresponding to the cross section of the ferrule joining member 1A in the same manner as that of the first embodiment. It is preferable that a central upper portion of this guide sleeve 6 is cut out into an upward U-shape so that the window portion 7 can be formed.

In the same manner as that of the first embodiment, examples of the optical filter 5 are: a polarization filter having a characteristic of making plane polarization by selectively absorbing some components of the electromagnetic waves that are transmitted; an extinction filter having a characteristic of reducing a quantity of light; and a wave-length division filter described later.

In this connection, the other end portion of the ferrule joining member 1A is attached with the light emitting element 3 capable of emitting an optical signal to the optical fiber 4, however, the light receiving element 6 may be provided instead of this light emitting element 3.

### (Variation of the Thirteenth Embodiment)

In the thirteenth embodiment shown in Figs. 33 and 34, in the light sending and receiving module by ferrules of the embodiment, the ferrule joining member 1A is composed of a columnar ferrule. However, for example, it is possible to use a ferrule joining member 1B, the cross section of which is a square pole, shown in Fig. 35 when the columnar ferrule is cut out into the square pole. Alternatively, for example, it is possible to use a ferrule joining member 1C, the cross section of which is a trapezoid, shown in Fig. 36 when the ferrule is cut out into a trapezoid.

As shown in these two variations, when the ferrule joining members 1B, 1C and the guide sleeves 2B, 2C are formed into a square and trapezoid, the ferrule joining members 1B, 1C are prevented from being rotated with respect to the guide sleeves 2B, 2C. Therefore, when the ferrule joining members are butted to each other, there is no possibility that the inclined faces are dislocated in the circumferential direction. Accordingly, positioning can be positively performed. Due to the foregoing, the optical filter 5 can be easily interposed between the ferrule joining members 1B, 1C. From this viewpoint, the cross section is not necessarily limited to the above square and trapezoid. As long as the cross section is polygonal, any shape can provide the same operational effect.

### (Fourteenth Embodiment)

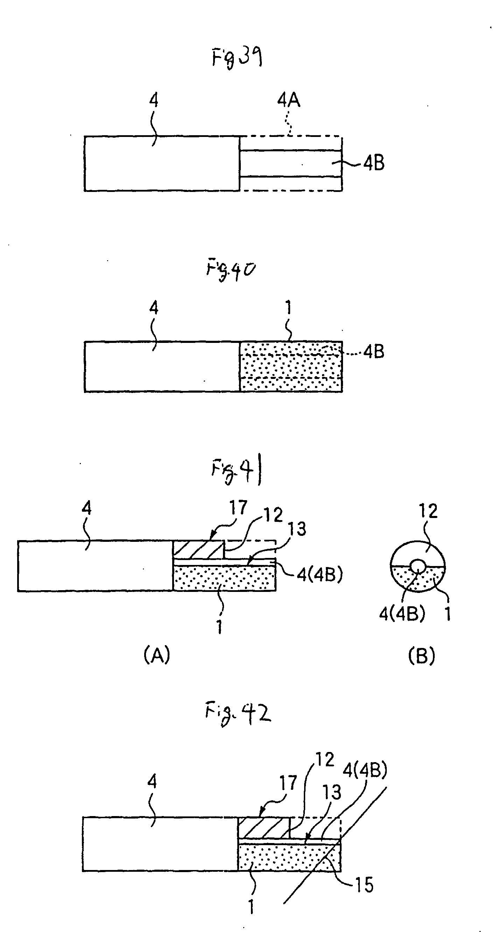

Referring to Fig. 37, a light sending and receiving module by ferrules of the fourteenth embodiment of the present invention will be explained in detail below. In this connection, like reference numerals and signs are used to indicate like parts in the second and the fourteenth embodiment, and duplicate explanations are omitted here.

Fig. 37 is a view showing a light sending and receiving module by ferrules of the fourteenth embodiment in which a plurality of ferrule joining members are arranged in series. In this light sending and receiving module, the ferrule joining members 1D for joining both faces, both end portions of which are respectively formed into a step portion, are arranged in series and located at the center, and the ferrule joining members 1E for joining one face, the one end portion of which is formed into a step portion, are arranged at both end portions of the ferrule joining members 1D for joining both faces. The guide sleeve 2A are inserted into the ferrule joining members 1D, 1E for joining which are adjacent to each other. Due to the above structure, when end faces of the optical fibers 4 are butted to each other via the optical filter 5, the optical fibers 4 can be optically coupled to each other.

### (Fifteenth Embodiment)

Referring to Fig. 38, a light sending and receiving module by ferrules of the fifteenth embodiment of the present invention will be explained in detail below. In this connection, like reference numerals and signs are used to indicate like parts in the third and the fifteenth embodiment, and duplicate explanations are omitted here.

In the fifteenth embodiment, when a pair of ferrule joining members 1E for joining one face, one end portion of which is cut out and formed into a step portion, are inserted into the guide sleeves 2A and when end faces of the optical fibers 4 are butted to each other via the optical filter 5, the units 10 are formed. The thus formed units 10 are arranged in series, so that the optical fibers 4 of the units 10 adjacent to each other can be optically coupled to each other. Due to the above structure, the present embodiment can be utilized for WDM system in which three or more wavelengths such as four wavelengths or eight wavelengths can be transmitted being multiplexed.

In this connection, in the fourteenth and the fifteenth embodiment shown in Figs. 37 and 38, the printed wiring 7 is formed in the ferrule joining member 1D, 1E (the flat portions 13, 17 and step portion 12) in the same manner as that of the thirteenth embodiment.

### (Sixteenth Embodiment)

Referring to Figs. 39 to 43, a method of manufacturing a light sending and receiving module by ferrules of the sixteenth embodiment of the present invention will be explained in detail below.
(1) First of all, in the first step, the covering portion 4A is peeled off from the optical fiber 4 in the same manner as that of the fourth embodiment as shown in Fig. 39. Two optical fibers 4, from which the covering portions 4A have been peeled off, are prepared.
(2) In the second step, as shown in Fig. 40, a pair of optical fibers 4 (optical fiber core wires 4B), which have been uncovered by peeling off the covering portions 4A, are inserted from one end portion into the central holes of the ferrules 1. In this case, only one (left) optical fiber 4 and the ferrule 1 are illustrated in the drawing, however, the same is also formed.
(3) In the third step, as shown in Fig. 41, the flat portion 17 is formed on an upper outer circumferential face of the ferrule 1, and the step portion 12 is formed in one end portion of the ferrule 1. At this time, a saw referred to as a blade, to which pieces of diamond are attached, is used as a cutting blade. There are provided a wide blade and narrow blade. The wide blade is used for rough cutting and the narrow blade is used for polishing with high accuracy.
   (i) First, after the flat face 17 has been formed on an outer circumferential face of the ferrule 1, an upper portion of the ferrule 1 is cut in the radial direction by a wide blade, and then the blade is moved in the axial direction so as to cut out the ferrule. In this way, the step portion 12 is roughly formed. In the process of cutting out, the optical fiber 4 is somewhat exposed from the flat portion 13 of the step portion 12. In this case, even when the clad of the optical fiber 4 is somewhat shaved, no problems are caused as long as the blade does not reach the core.
   (ii) Next, the step portion 12 is accurately polished by the narrow blade.
(4) In the fourth step, as shown in Fig. 42, cutting is obliquely conducted downward on the end face of the step portion 12 so that the inclined face 15 can be formed. After that, the inclined face 5 is polished. In this way, the ferrule joining member 1A is formed.
(5) In the fifth step, the printed wiring 7 (shown in Figs. 33 and 34), which is formed on an outer circumferential face of the ferrule 1, is formed all over the flat portion 17, the step portion 12 and the flat portion 13 of the step portion 12 by means of etching. The thus formed ferrules are prepared, that is, a pair of ferrule members 1A, which are formed in the first to the fifth step, are prepared. In this connection, the inclined faces 15 of both ferrules 1A are opposed to each other being inversely directed to each other.

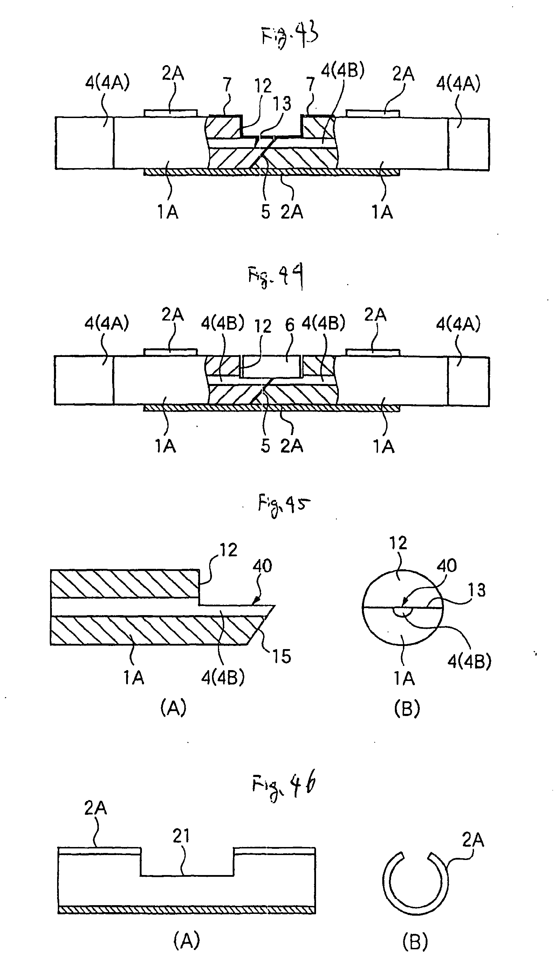

In the sixth step, as shown in Fig. 43, the pair of ferrule joining members 1A are inserted into the guide sleeves 2A for positioning, and end faces of the optical fibers 4 are butted to each other via the optical filter 5. In this way, the light sensing and receiving module can be manufactured.

As described above, in the fifth step, when the printed wiring 7 (shown in Figs. 33 and 34) is previously formed on the ferrule 1, it becomes unnecessary to provide a printed board in addition. Therefore, the number of parts and the number of mandays for assembling can be reduced.

As described above in detail, according to the thirteenth to the sixteenth embodiment, the printed wiring for connecting the light emitting element or light receiving element, which is arranged close to the optical coupling portion, with an external device is provided in the step portion and flat portion of the ferrule. Therefore, it become unnecessary to conduct such a complicated work that a focus of the light emitting element or the light receiving element is adjusted to the center of the optical filter while the printed board is being moved along the optical fiber. Accordingly, the working efficiency can be enhanced at the time of assembling. Further, it become unnecessary to provide a printed board in addition to the ferrule. For the above reasons, the number of parts can be decreased and the manufacturing cost can be reduced.

When a bare chip is used for the light emitting element or the light receiving element and this bare chip is directly attached onto the printed board, the light emitting element or the light receiving element can be mounted on the ferrule joining member in a short period of time. Further, the light sending and receiving module by ferrules can be downsized. Since terminals to be connected to the connectors are provided at the end portion of the printed board, the light emitting element or the light receiving element can be easily connected to an external device.

Further, when positioning is conducted in such a manner that the ferrule joining member is inserted into the guide sleeve and the window portion is formed by cutting out the guide sleeve so that this guide portion can be located in an upper portion of the optical coupling portion of the optical fiber, centering of the axes of the optical fibers can be accurately performed. Further, in the case of deterioration of the light emitting element or the light receiving element, parts can be replaced from the window portion. Therefore, the maintenance work can be easily conducted.

Further, concerning the ferrule joining member in which an end portion of the ferrule, which is fitted into a portion of the optical fiber from which the covering portion has been removed, is cut out so as to form a step portion and an end face of the step portion is obliquely cut off, when end faces of the optical fibers are butted to each other via the optical filter or the half mirror, the light sending and receiving module can be manufactured. Therefore, the manufacturing process can be shortened. Accordingly, the manufacturing cost can be reduced.

### (Seventeenth Embodiment)

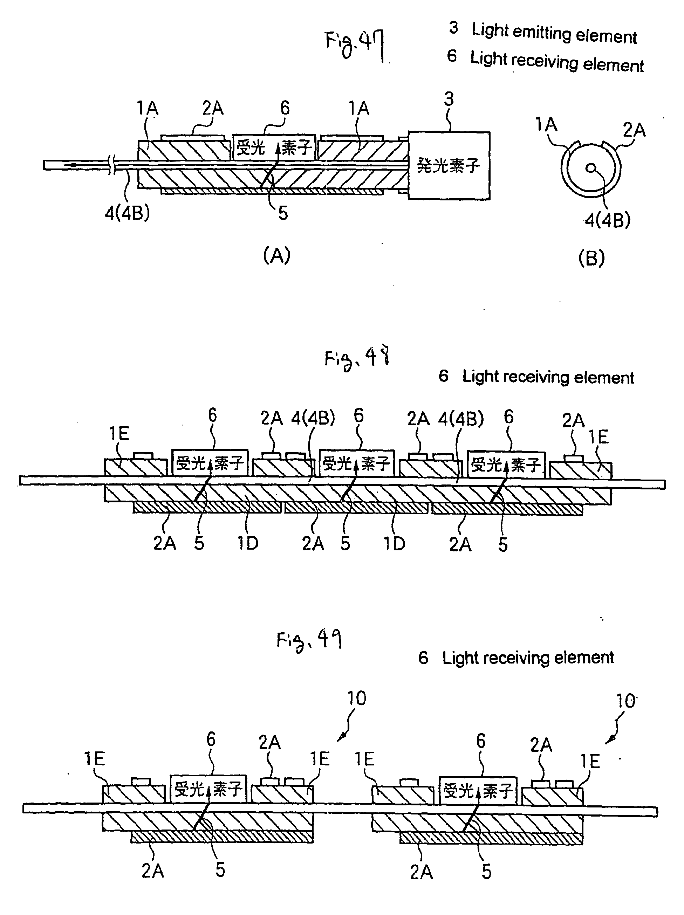

Referring to Figs. 44 to 47, a light sending and receiving module by ferrules of the seventeenth embodiment of the present invention will be explained below. In this connection, like reference numerals and signs are used to indicate like parts in the first and the seventeenth embodiment, and duplicate explanations are omitted here.

In the same manner as that of the first embodiment, the ferrule joining member 1A shown in Fig. 44 is composed in such a manner that an upper half portion of one end portion of the columnar ferrule not shown, in which the optical fiber 4 (the optical fiber core wire 4B) from which the covering has been peeled off, is embedded, is cut out so as to form the step portion 12. At the time of cutting out the upper half portion of one end portion of the columnar ferrule, cutting is conducted in such a manner that an outer circumferential face of the optical fiber core wire 4B is cut out so that the cutting action can not reach the core.

In the ferrule joining member 1A of this embodiment, cutting is conducted so that the flat portion (the flat face) 13 of the step portion 12 and the cutout face 40 of the optical fiber core wire 4B can be on the same plane; and then the flat face 13 and the cutout face 40 are polished.

In the ferrule joining member 1A, the end face of each optical fiber core wire 4B including the step portion 12 and the cutout face 40 is inclined and formed into an inclined face 15. Concerning the direction of the inclination, one face is inclined obliquely upward, and the other face is inclined obliquely downward. Therefore, when both the inclined faces 15 are butted to each other, no gaps are formed between them. In this connection, it is preferable that the inclination angle θ is approximately 60° so that the inclination angle θ can agree with an inclination angle of the optical filter described later.

In this connection, in the same manner as that of the first embodiment, it is preferable that the guide sleeve 2A for positioning shown in Fig. 46 is formed in such a manner that the cross section of the guide sleeve 2A is an upward C-shaped cylindrical shape corresponding to the cross section of the ferrule joining member 1A. It is preferable that the window portion 21 is formed in this guide sleeve 2A by cutting out the upper central portion of the guide sleeve 2A into an upward C-shape.

As shown in Fig. 47, the light receiving element 6 is provided in the window portion 21 of the guide sleeve 2A. This light receiving element 6 is fixed to the flat portion 13 by adhesive under the condition that the light receiving element 6 is joined to the cutout face 40 of the optical fiber core wire 4B, for example, the light receiving element 6 is directly attached to the cutout face 40 of the optical fiber core wire 4B.

On the other hand, the other end portion of the ferrule joining member 1A is attached with the light emitting element 3 capable of sending out a signal to the optical fiber core wire 4B. However, it is possible to provide the light receiving element 6 instead of this light emitting element 3.

As described above, when the step portion 12 and the flat portion 13 are formed in the end portion of the ferrule end portion, a portion of the optical fiber core wire 4B is cut away, and the light receiving face of the light receiving element 6 is directly attached to this cutout face 40. Therefore, no adhesive layer exists between the optical fiber core wire 4B and the light receiving element 6. Accordingly, the light receiving element 6 can be fixed to the flat portion 13 by adhesive, the transparency property of which is not so high. Due to the foregoing, it is possible to provide a wide selection of usable adhesive. Further, since the optical fiber core wire 4B and the light receiving face of the light receiving element 6 come close to each other and optical signals can be sent and received before the diffusion of light, the coupling efficiency can be enhanced. In this connection, in the case where a distance between the core of the optical fiber core wire 4B and the light receiving face of the light receiving element 6 is 80 µ, the frequency of the optical signal capable of being sent and received is approximately 1 GHz. In the case where a distance between the core of the optical fiber core wire 4B and the light receiving face of the light receiving element 6 is 40 µ, the frequency of the optical signal capable of being sent and received is approximately 20 GHz.

### (Variation of the Seventeenth Embodiment)

In the seventeenth embodiment shown in Figs. 44 to 47, in the light emitting and receiving module by ferrules, the ferrule joining member 1A is formed into a columnar ferrule. However, for example, the ferrule joining member 1A may be formed into a square pole shape or a trapezoidal shape.

### Eighteenth Embodiment

Next, a light sending and receiving module by ferrules of the eighteenth embodiment of the present invention will be explained below. In this connection, like reference numerals and signs are used to indicate like parts in the second and the eighteenth embodiment, and duplicate explanations are omitted here.

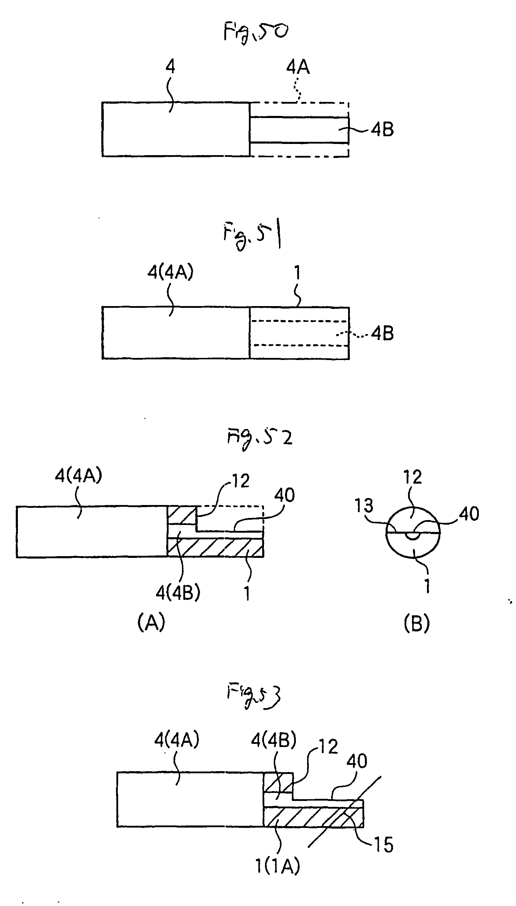

Fig. 48 is a view showing a light sending and receiving module by ferrules of the eighteenth embodiment in which a plurality of ferrule joining members are arranged in series. In this light sending and receiving module, the ferrule joining members 1D for joining both faces, both end portions of which are respectively formed into a step portion, are arranged in series and located at the center, and the ferrule joining members 1E for joining one face, the one end portion of which is formed into a step portion, are arranged at both end portions of the ferrule joining members 1D for joining both faces.

When this ferrule joining member for joining is inserted into the guide sleeve 2A, the end faces of the optical fibers are butted to each other via the optical filter 5, and the optical fibers can be optically coupled to each other.

### (Nineteenth Embodiment

Next, a light sending and receiving module by ferrules of the nineteenth embodiment of the present invention will be explained below. In this connection, like reference numerals and signs are used to indicate like parts in the third and the nineteenth embodiment, and duplicate explanations are omitted here.

In this embodiment, as shown in Fig. 49, when a pair of ferrule joining members 1E for joining one face, one end portion of which is cut out and formed into a step portion, are inserted into the guide sleeves 2A and when end faces of the optical fibers 4 (the optical fiber core wire 4B) are butted to each other via the optical filter 5, the units 10 are formed. The thus formed units 10 are arranged in series as shown in the nineteenth embodiment, so that the optical fiber core wires 4B of the units 10 adjacent to each other can be optically coupled to each other. Due to the above structure, the present embodiment can be utilized for WDM system in which three or more wavelengths such as four wavelengths or eight wavelengths can be transmitted being multiplexed.

### (Twentieth Embodiment)

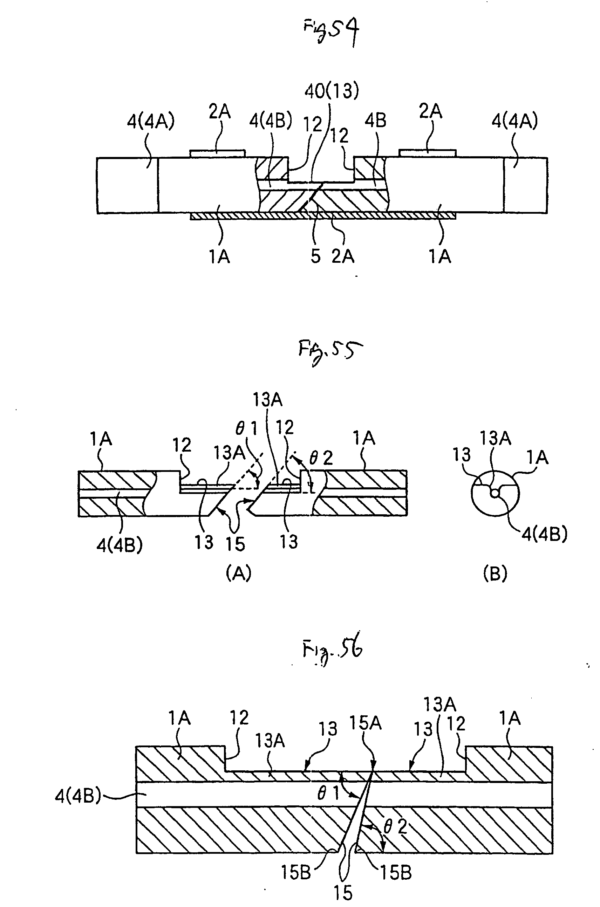

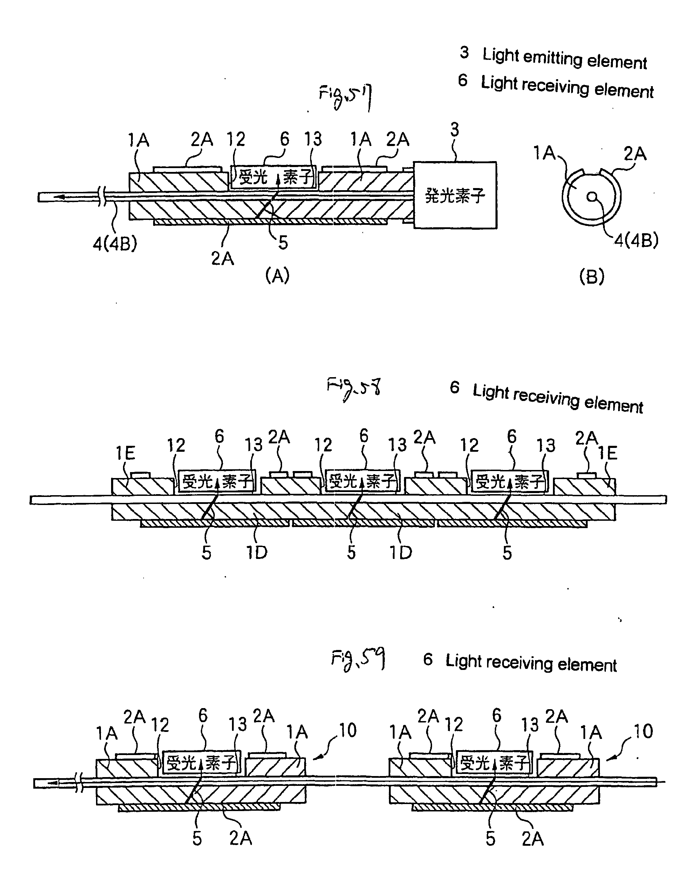

Referring to Figs. 50 and 54, explanations will be made into a method of manufacturing a light sending and receiving module by ferrules of the twentieth embodiment of the present invention.
(1) First of all, in the first step, the covering portion 4A is peeled off from the optical fiber 4 as shown in Fig. 50.
(2) In the second step, as shown in Fig. 51, the cylindrical ferrule 1 is fitted to a portion of the optical fiber 4 (the optical fiber core wire 4B), the covering portion of which has been peeled off so that the portion of the optical fiber 4 has been uncovered.
(3) In the third step, as shown in Fig. 52, the step portion 12 is formed in one end portion of the ferrule 1. At this time, a saw referred to as a blade, to which pieces of diamond are attached, is used as a cutting blade. There are provided a wide blade and narrow blade. The wide blade is used for rough cutting and the narrow blade is used for polishing with high accuracy. Specifically, operation is conducted as follows.
   (i) First, an upper end portion of the ferrule 4c is cut in the radial direction by the wide blade. At this time, the cutting motion is conducted so that the forward end portion of the blade can reach an outer circumferential face of the optical fiber core wire 4B, however, the cutting motion must be conducted so that the forward end portion of the blade can not reach the core.
   (ii) After that, the blade is moved in the axial direction, and an end portion of the ferrule 1 and a portion of the optical fiber 4B are simultaneously cut, so that the step portion 12 can be roughly formed.
   (iii) Next, when the flat portion 13 of the step portion 12 and the cutout face 40 of the optical fiber core wire 4B are simultaneously polished so as to enhance the dimensional accuracy.
(4) In the fourth step, as shown in Fig. 53, an end face of the step portion 12 is cut obliquely downward together with the optical fiber core wire 4B to form the inclined face 15. After that, the inclined face 15 is polished. In this way, a pair of ferrule joining members 1A are formed.
(5) In the fifth step, as shown in Fig. 54, the ferrule joining member 1A is inserted into the guide sleeve 2A used for positioning. In this way, end faces of the optical fiber core wires 4B are butted to each other via the optical filter 5.
(6) In the sixth step, as shown in Fig. 44, the light receiving element 6 is inserted from the window portion 21 of the guide sleeve 2A, and the light receiving face of the light receiving element 6 is coupled to the cutout face 40 of the optical fiber core wire 4B. For example, the light receiving face of the light receiving element 6 is directly attached to the cutout face 40 of the optical fiber core wire 4B, and the light receiving element 6 is fixed to the flat portion 13 by adhesive.

In the light sending and receiving module obtained in this way, no adhesive layer exists between the optical fiber core wire 4B and the light receiving element 6. Accordingly, the light receiving element 6 can be fixed to the flat portion 13 by adhesive, the transparency property of which is not so high. Due to the foregoing, it is possible to provide a wide selection of usable adhesive. Further, since the optical fiber core wire 4B and the light receiving face of the light receiving element 6 come close to each other and optical signals can be sent and received before the diffusion of light, the coupling efficiency can be enhanced.

In this connection, even when the light emitting element 3 is directly attached to the cutout face 40 of the optical fiber core wire 4B, the same effect can be provided.

As explained above, according to the seventeenth to the nineteenth embodiment of the present invention, when one end side of the ferrule is cut out, a portion of the optical fiber is also cut out to form a cutout face, and the light receiving element or the light emitting element is joined to the cutout face. Therefore, no adhesive layer is provided between the optical fiber and the light receiving element or between the optical fiber and the light emitting element. As a result, the light receiving element can be fixed onto the flat face by adhesive, the transparency property of which is low. Accordingly, it is possible to provide a wide selection of usable adhesive. Therefore, the cost of adhesive can be reduced by using inexpensive adhesive. Further, when the optical fiber is located close to the light receiving face of the light receiving element or the light emitting face of the light emitting element and when an optical signal can be sent and received before the diffusion of light, the coupling efficiency can be enhanced.

According to these embodiments, positioning is conducted by inserting the ferrule joining member into the guide sleeve, and the window portion is formed by cutting out the guide sleeve and the window portion is located at an upper position of the optical coupling portion of the optical fiber. Therefore, centering of the optical fibers can be accurately conducted. Further, when the light receiving element or the light emitting element is deteriorated, parts can be replaced from the window portion. Accordingly, the maintenance work can be easily performed. Further, according to the twentieth embodiment, a module is manufactured by a manufacturing method comprising: a first step of removing a covering portion from the optical fiber; a second step of fitting a ferrule into a portion of the optical fiber from which the covering portion has been removed; a third step of forming a step portion and a flat portion in the end portion of the ferrule and also forming a cutout face in the optical fiber by cutting out an end portion of the ferrule and a portion of the optical fiber; a fourth step of forming an inclined face in each ferrule joining member by obliquely cutting away an end face of the step portion; a fifth step of butting end faces of the optical fibers to each other via an optical filter or a half mirror by positioning the ferrule joining member; and the sixth step of joining the light receiving element of the light emitting element to the cutout face of the optical fiber. Therefore, the manufacturing process can be shortened, and the manufacturing cost can be reduced.

### (Twenty-first Embodiment)

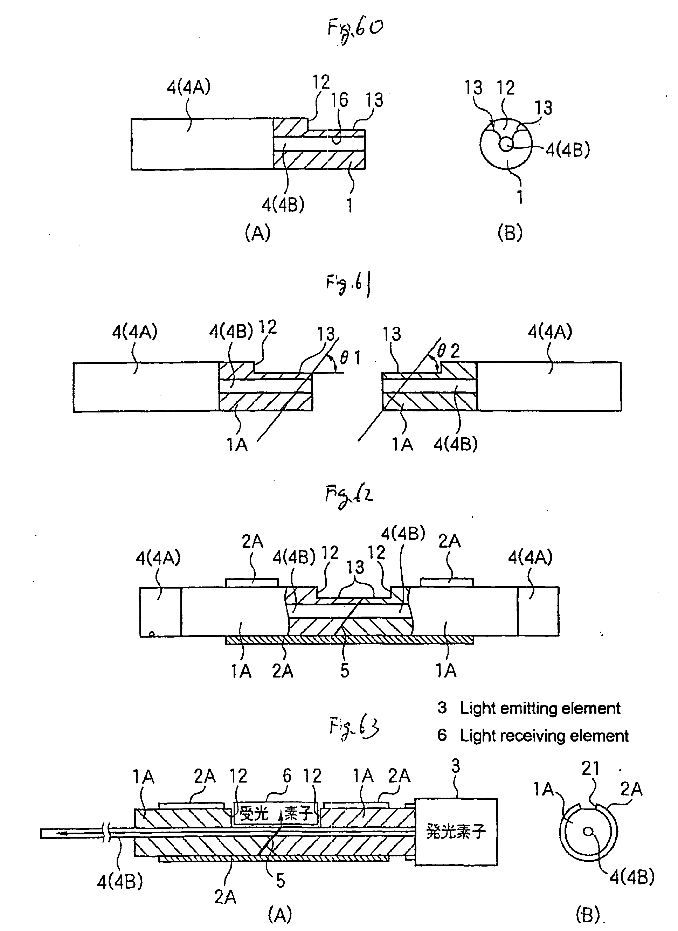

Referring to Figs. 55 to 57, a light sending and receiving module by ferrules of the twenty-first embodiment of the present invention will be explained below. In this connection, like reference numerals and signs are used to indicate like parts in the first and the twenty-first embodiment, and duplicate explanations are omitted here.

Each ferrule joining member 1A of the twenty-first embodiment shown in Fig. 55 is composed as follows. In a columnar ferrule not shown in which the optical fiber 4 (the optical fiber core wire 4B) from which the covering portion has been peeled off, in the same manner as that of the first embodiment, an upper half portion of one end portion is cut out to form the step portion 12. In this twenty-first embodiment, the cutting operation is conducted so that the flat portion 13 of the step portion 12 can be somewhat higher than an upper outer circumferential face of the optical fiber core wire 4B as shown in Fig. 55(B).

Further, in this twenty-first embodiment, a portion located from the flat portion 13 of each ferrule joining member 1A to the outer circumferential face of the optical fiber core wire 4B is further cut out into a V-shape so that the groove 13A can be formed.

In this twenty-first embodiment, when end faces of the ferrule joining member 1A and the optical fiber core wire 4B are obliquely cut, the inclined face 15 is formed. Especially, in this twenty-first embodiment, as shown in Fig. 56, concerning one inclined face 15, an inclination angle of the upper comer portion 15A on the optical fiber core wire 4B side is set at θ1, and concerning the other inclined face 15, an inclination angle of the lower corner portion 15B on the lower side is set at θ2. In this case, θ1 and θ2 are determined to satisfy the inequality of θ1 ≤ θ2 so that the inclination angles θ1 and θ2 can be equal to each other or θ1 can be a little smaller than θ2 for the object of preventing the generation of a gap between both the inclined faces when they are butted to each other especially for the object of preventing the generation of a gap in a portion where the optical fibers 4B are butted to each other. It is preferable that the inclination angles θ1 and θ2 are approximately 60° so that the inclination angles θ1 and θ2 can conform to the inclination angle of the optical filter 5 described later. In this case, the tolerance is 60° ± 1 °.

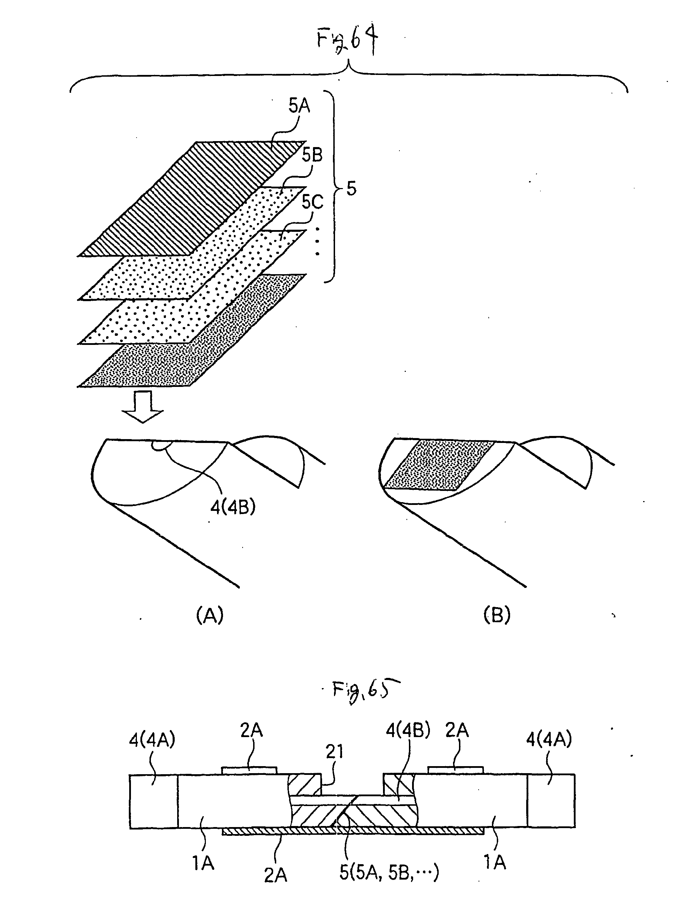

As shown in Fig. 57, the guide sleeve 2A for positioning, into which the ferrule joining member 1A is inserted, is formed into a shape, the cross section of which is an upward C-shaped cylinder, in the same manner as that of the first embodiment. In this connection, it is preferable that the window portion 21 is formed in this guide sleeve 2A by cutting out the upper central portion into an upward U-shape.

Into the guide sleeve 2A, one ferrule joining member 1A is inserted from one end face and the other ferrule joining member 1A is inserted from the other end face being respectively opposed to the step portion 12. In this case, the optical filter 5 is interposed between the inclined faces 15 of both the ferrule joining members 1A.

When both the ferrule joining members 1A are butted to each other in this state, both end faces of the optical fiber core wires 4B can be optically joined to each other via the optical filter 5. In this case, the inclination angles θ1 and θ2 of the inclined faces 15 are previously determined so that θ1 and θ2 can satisfy the inequality of θ1 ≤ θ2. Accordingly, when the inclined faces 15 of the ferrule joining members 1A are butted to each other as shown in Fig. 56, the upper corner portion 15A formed by the flat portion 13 of each step portion 12 and each inclined face 15 comes into contact first, and stress concentration caused by the manufacturing errors of the inclination angles θ1 and θ2 of the inclined faces 15 can be absorbed by each upper corner portion 15A. Therefore, no stress concentration is generated on the end face of the optical fiber core wire 4B. Due to the foregoing, the end face of the optical fiber core wire 4B can be previously prevented from being damaged.

### (Variation of the Twenty-first Embodiment)

In the twenty-first embodiment shown in Figs. 55 to 57, in the light emitting and receiving module by ferrules, the ferrule joining member 1A is formed into a columnar ferrule. However, for example, the ferrule joining member 1A may be formed into a square pole shape or a trapezoidal shape.

The light sending and receiving module of this twenty-first embodiment can be mounted on a printed board.

As shown in Fig. 58, in this twenty-first embodiment, the ferrule joining members 1D for joining both faces, both end portions of which are respectively formed into a step portion 12, are arranged in series and located at the center, and the ferrule joining members 1E for joining one face, the one end portion of which is formed into the step portion 12, are arranged at both end portions of the ferrule joining members 1D for joining both faces.

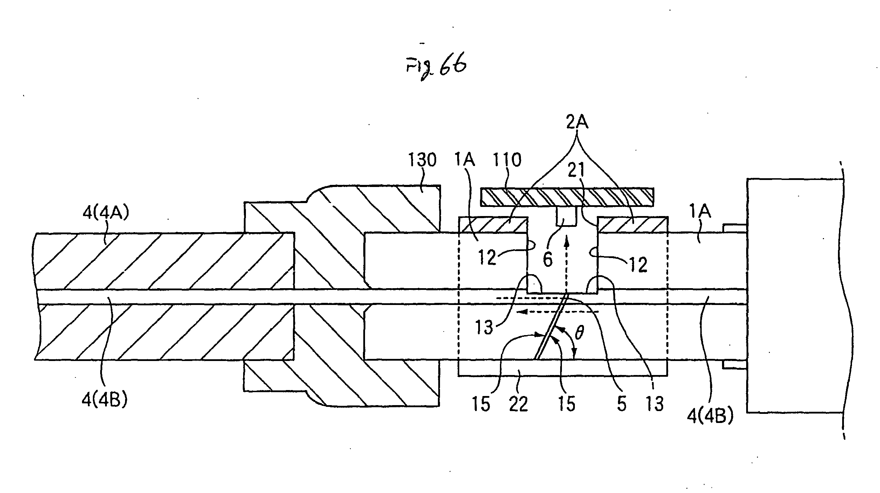

As shown in Fig. 59, a pair of ferrule joining members 1E for joining one face in which the step portion 12 is formed by cutting out one end portion of the ferrule are inserted into the guide sleeves 2A, and the end faces of the optical fibers 4 are butted to each other via the optical filter 5, so that the unit 10 can be formed.

### (Twenty-second Embodiment)

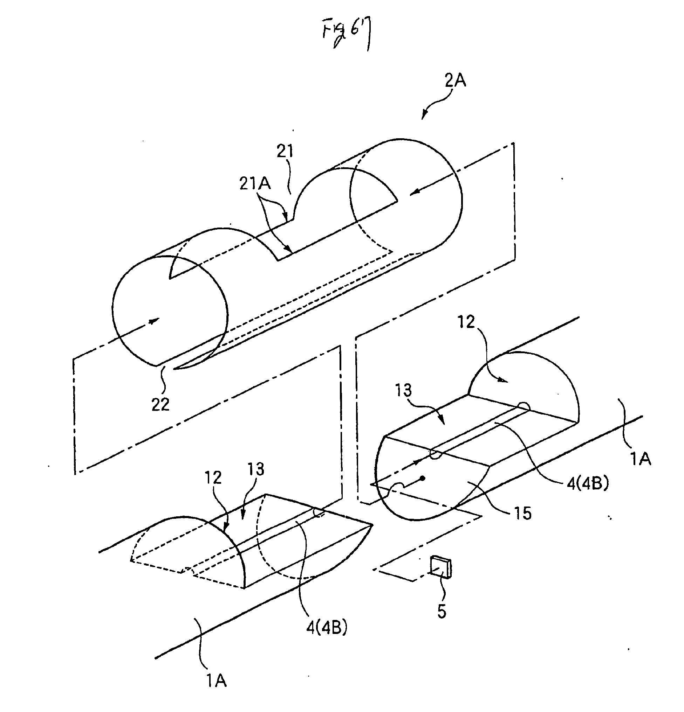

Referring to Figs. 60 and 62, explanations will be made into a method of manufacturing a light sending and receiving module by ferrules of the twenty-second embodiment of the present invention. In this connection, in this embodiment, concerning the same steps as those of the method of manufacturing a light sending and receiving module by ferrules of the fourth embodiment, the drawings and explanations will be omitted here.
(1) First, the first and the second step are performed in the same manner as those of the fourth embodiment.
(2) In the third step, as shown in Fig. 60, the step portion 12 is formed in an end portion of the ferrule 1. At this time, after the ferrule 1 has been cut out so that the cutout portion can be a little higher than the upper outer circumferential face of the optical fiber core wire 4B, that is, after the flat portion 13, which does not reach the insertion pore (the central hole) 16 into which the optical fiber core wire 4B is inserted, has been formed, a portion located from the flat portion 13 to the outer circumferential face of the optical fiber core wire 4B is cut out into a substantial V-shaped groove 13A so that a portion or all of the upper outer circumferential face of the optical fiber core wire 4B can be exposed. In this connection, concerning the cutting blade to be used, the same cutting blade as that of the fourth embodiment is used.
   In this case, even when the clad of the optical fiber core wire 4B is somewhat shaved, no problems are caused as long as the blade does not reach the core. Next, the step portion 12 and the flat portion 13 are is accurately polished by the narrow blade.
(3) In the fourth step, as shown in Fig. 61, cutting is obliquely conducted downward on the end face of the step portion 12 together with the optical fiber core wire 4B, and the inclined faces 15 of the inclination angles θ1 and θ2 (θ1 ≤ θ2) are respectively formed. After that, the inclined faces 15 are polished. In this way, a pair of ferrule joining members 1A can be formed.
(4) In the fifth step, as shown in Fig. 62, the ferrule joining members 1A are inserted into the guide sleeves 2A used for positioning, and end faces of the optical fiber core wires 4b are butted to each other via the optical filter 5.

In this case, the inclination angles θ1 and θ2 are previously determined so that θ1 and θ2 can satisfy the inequality of θ1 ≤ θ2. Accordingly, when the inclined faces 15 of the ferrule joining members 1A are butted to each other, the upper corner portion 15A (sown in Fig. 56) formed by the flat portion 13 of each step portion 12 and each inclined face 15 first comes into contact with each other. Therefore, it becomes possible to obtain a light sending and receiving module having the following advantages. Stress concentration caused by the manufacturing errors of the inclination angles θ1 and θ2 of the inclined faces 15 can be absorbed by the upper corner portions 15A. Therefore, no stress concentration is generated on the end face of the optical fiber core wire 4. Further, no gaps are generated between the optical fibers 4 and the optical filter 5 or the half mirror interposed between the butted faces of the optical fibers 4.

As explained above, in the twenty-first embodiment, when the inclined faces 15 of the ferrule joining members 1A, from which the end portions have been cut away, are butted to each other, end portions of the flat portions (the flat faces) 13, which are located at positions a little higher than the outer circumferential faces of the optical fiber core wires 4B, first come into contact with each other. Therefore, the occurrence of stress concentration on the end faces of the optical fiber core wires 4B can be prevented.

Therefore, when the ferrule joining members 1A are joined to each other, there is no possibility that the optical fiber core wires 4B are damaged. Further, no gaps are generated between the cutout faces of the optical fiber core wires 4B. Due to the foregoing, deterioration of the optical characteristic of the optical coupling portion can be previously prevented. Furthermore, when the step portion is formed in the ferrule, it is sufficient that the flat portion is made to be a little higher than the outer circumferential face of the optical fiber core wire 4B. Therefore, the module can be easily manufactured at a low cost.

In the twenty-second embodiment, a module is manufactured by a method comprising: a first step of removing a covering portion from the optical fiber 4; a second step of fitting a ferrule into a portion of the optical fiber from which the covering portion has been removed; a third step of exposing a portion of the circumferential face of the optical fiber core wire 4B from the flat portion 13 when the step portion 12 having the flat portion 13, which is a little higher than the outer circumferential face of the optical fiber core wire 4B, is formed by cutting out an end portion of the ferrule; a fourth step of forming an inclined face in each ferrule joining member 1A by obliquely cutting away an end face of the step portion 12; and a fifth step of butting the end faces of the optical fiber core wires 4B via an optical filter or a half mirror when the ferrule joining members 1A are positioned. Therefore, the manufacturing process can be shortened and the manufacturing cost can be reduced.

### (Twenty-third Embodiment)

Referring to Figs. 63 to 64, a light sending and receiving module by ferrules of the twenty-third embodiment of the present invention will be explained below. In this connection, like reference numerals and signs are used to indicate like parts in the first and the twenty-third embodiment, and duplicate explanations are omitted here.

In the same manner as that of the first embodiment, a light sending and receiving module by ferrules of the twenty-third embodiment is composed as follows. A pair of ferrule joining members 1A to be optically coupled to each other are composed in such a manner that an upper half portion of one end portion is cut out and the step portion 2 is formed in the columnar ferrule in which the optical fiber 4 is embedded. When the upper half portion of one end portion is cut out, the optical fiber 4 is a little exposed from the flat face 3 of the step portion 12.

In the light sending and receiving module by ferrules of this twenty-third embodiment, in the same manner as that of the first embodiment, end faces of the step portions 12 and the optical fibers 4 are inclined and the inclined faces 15 are formed. One inclined face is inclined obliquely upward, and the other inclined face is inclined obliquely downward. Therefore, when both the inclined faces are butted to each other, no gaps are generated between them. It is preferable that the inclination angle θ is approximately 60° in this embodiment so that the inclination angle θ can conform to the inclination angle of the optical filter 5 described later.

In this connection, the guide sleeve 2A of this twenty-third embodiment is formed in such a manner that the cross section is formed into an upward C-shaped cylinder corresponding to the cross section of the ferrule joining member 1A. It is preferable that an upward C-shaped window portion 21 is formed by cutting out in the upper central portion of the guide sleeve 2A.

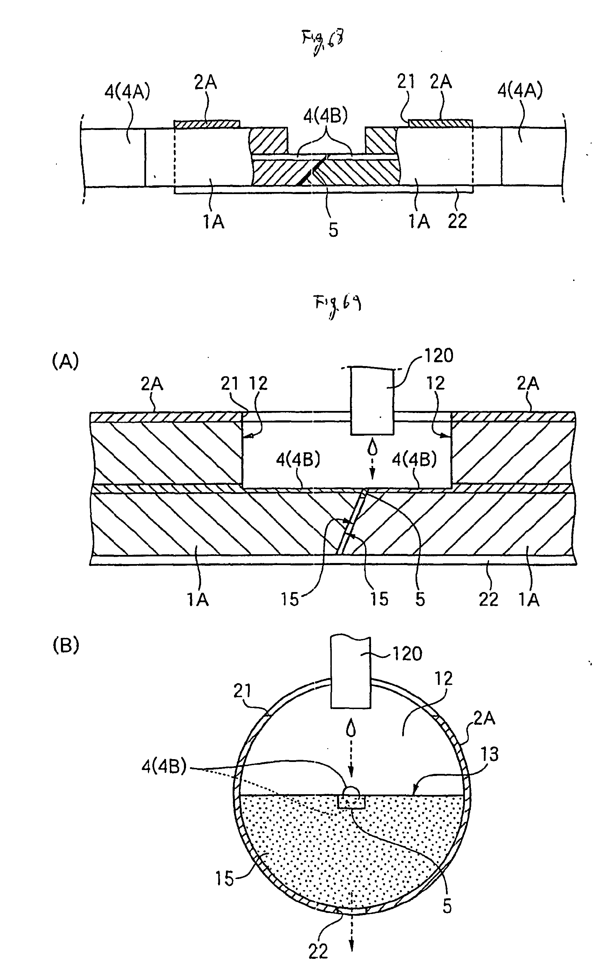

Fig. 64 is a schematic illustration showing a state in which the optical filter 5 is mounted on one ferrule joining members 1A. As shown in Fig. 64(A), the optical filter 5 is composed in such a manner that a plurality of thin film filters 5A, 5B, ···, which are formed into small pieces so that the thin film filters can cover the end face of the optical fiber 4, are successively laminated and mounted on the inclined face 15 of the ferrule joining member 1A as shown in Fig. 64(B).

Examples of the optical filter 5 are: a polarization filter having a characteristic of making plane polarization by selectively absorbing some components of the electromagnetic waves that are transmitted; an extinction filter having a characteristic of reducing a quantity of light; and a wave-length division filter described later.

In the light sending and receiving module by ferrules of this twenty-third embodiment, the optical filter 5 is interposed between the inclined faces 15 of the ferrule joining members 1A. Under this condition, both the ferrule joining members 1A are butted to each other, both end faces of the optical fibers are joined to each other via the optical filter 5.

After both the ferrule joining members 1A have been butted to each other, the butted faces are bonded to each other by adhesive which is melted when it is exposed to ultraviolet rays. In this embodiment, the butted face is located at the substantial center of the guide sleeve 2A, and the window portion 21 is located in an upper portion of the butted face.

In this connection, in this twenty-third embodiment, in the case of forming the window portion 21 in the guide sleeve 2A, the light receiving element 6 is attached to this window portion 21. The window portion 21 is used for arranging the light receiving element 6. When the light receiving element 6 is arranged in this way, a wavelength division filter is used for the optical filter 5.

This wavelength division filter is characterized in that a specific signal in the signals of different wavelengths spreading in the optical fiber is reflected or diffracted so that the specific signal can be separated. When the thus separated optical signal is received by the light receiving element 6, the specific signal can be branched, that is, a light branching filter can be composed.

When a half mirror is used as the optical filter 5, since the half mirror is characterized in that a substantial half of signals in the signals of the same wavelength spreading in the optical fiber 4 are reflected or diffracted so that the signals can be separated. Therefore, when the thus separated optical signal is received by the light receiving element 6, the specific signal can be turned out, that is, a light turnout can be composed.

In this connection, the other end portion of the ferrule joining member 1A is attached with the light emitting element 3 capable of sending out a signal to the optical fiber 4. However, it is possible to provide a light receiving element instead of this light emitting element.

### (Variation of the Twenty-third Embodiment)

In the twenty-third embodiment shown in Figs. 63 and 54, the ferrule joining member 1A of the light sending and receiving module by ferrules is composed of a columnar ferrule. However, it is possible to use a ferrule joining member, the cross section of which is a square pole, or a ferrule joining member, the cross section of which is a trapezoid.

The light sending and receiving module by ferrules shown in this twenty-third embodiment can be mounted on a printed board.

In this twenty-third embodiment, the ferrule joining members for joining both faces, both end portions of which are respectively formed into a step portion, are arranged in series and located at the center, and the ferrule joining members for joining one face, the one end portion of which is formed into the step portion, are arranged at both end portions of the ferrule joining members for joining both faces. A pair of ferrule joining members for joining one face in which the step portion is formed by cutting out one end portion of the ferrule are inserted into the guide sleeves, and the end faces of the optical fibers are butted to each other via the optical filter, so that the unit can be formed.

### (Twenty-fourth Embodiment)

Referring to Fig. 65, explanations will be made into a method of manufacturing a light sending and receiving module by ferrules of the twenty-fourth embodiment of the present invention. In this connection, in this embodiment, concerning the same steps as those of the method of manufacturing a light sending and receiving module by ferrules of the fourth embodiment, the drawings and explanations will be omitted here.
(1) First of all, the first to the fourth step are performed in the same manner as those of the first to the fourth step of the fourth embodiment.
(2) In the fifth step, as shown in Fig. 65, a pair of ferrule joining members 1A are respectively inserted into the guide sleeve 2A used for positioning, and end faces of the optical fibers 4 are butted to each other via the optical filter 5 which is formed when a plurality of thin film filters 5A, 5B, ··· (shown in Fig. 64(A)) are laminated and mounted on one end face.
(3) In the sixth embodiment, after both the ferrule joining members 1A have been butted to each other, the butted faces are bonded to each other by adhesive melted when it is exposed to ultraviolet rays. These butted faces are located at the substantial center of the guide sleeve 2A, and the window portion 21 is located at an upper position of the butted faces.

Consequently, according to the light sending and receiving module by ferrules of these embodiments, the optical filter is interposed between the butted faces without being embedded, so that no gaps are formed between the optical fiber and the optical filter. Therefore, the occurrence of irregular reflection can be prevented, and the optical characteristic can be prevented from being deteriorated. Further, without being embedded, the optical filter is arranged between the end faces of the optical fibers. Therefore, it is unnecessary to provide a ferrule used for embedding the optical filter. Accordingly, the manufacturing cost can be reduced.

According to these embodiments, an end portion of the ferrule, which is fitted into the portion of the optical fiber from which the cover portion has been removed, is cut out and the step portion is formed, and an end face of this step portion is obliquely cut off. The thus composed ferrule joining member is inserted into the guide sleeve, and the end faces of the optical fibers are butted to each other via the optical filter. Since the light sending and receiving module is manufactured in this way, the manufacturing step can be shortened, and the manufacturing cost can be reduced.

Further, according to these embodiments, the optical filter or the half mirror is formed in such a manner that a plurality of thin films are laminated at the end portion of the ferrule joining member so that the thin films can cover an end face of the optical fiber. Since the plurality of thin films are directly laminated at the end portion of the ferrule joining member, assembling can be easily performed as compared with the conventional embedding method. Further, it is possible to reduce a lamination area, in which the thin films of the filter are laminated, to be the substantially same as the area of the end portion of the ferrule joining member. Therefore, the manufacturing cost can be reduced.

### (Twenty-fifth Embodiment)

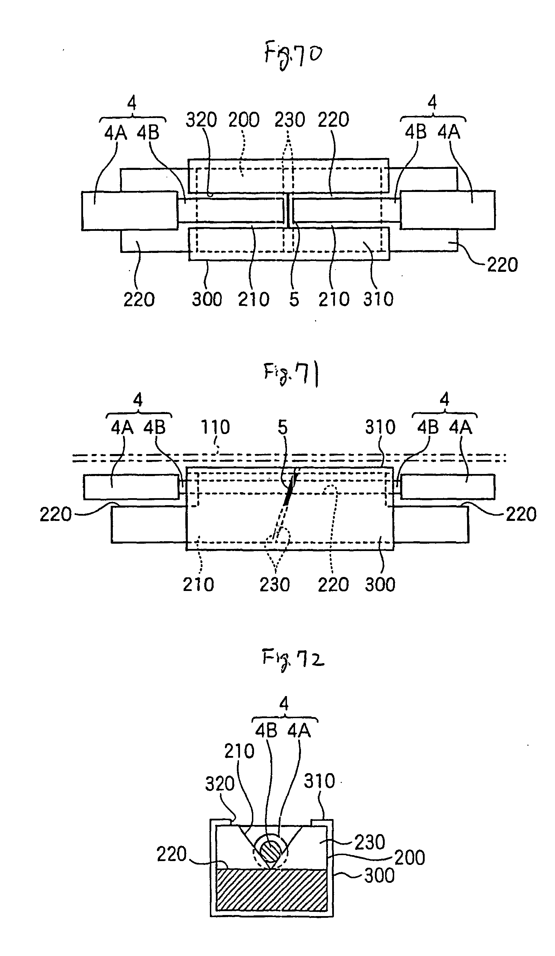

Referring to Figs. 66 and 67, a light sending and receiving module by ferrules of the twenty-fifth embodiment of the present invention will be explained below. In this connection, like reference numerals and signs are used to indicate like parts in the first and the twenty-fifth embodiment, and duplicate explanations are omitted here. In the same manner as that of the first embodiment, a light sending and receiving module by ferrules of the twenty-fifth embodiment is composed as follows. A pair of ferrule joining members 1A to be optically connected to each other are composed in such a manner that an upper half portion of one end portion is cut out and the step portion 12 is formed in the columnar ferrule in which the optical fiber 4 (the optical fiber core wire 4B) is embedded. When the upper half portion of one end portion is cut out, the optical fiber core wire 4B is a little exposed from the flat face 13 of the step portion 12. In this connection, in this Fig. 66, reference numeral 130 represents a graph.

In this twenty-fifth embodiment, the optical fiber 4 of the single mode (SM) is used. However, the optical fiber 4 is not limited to the above specific embodiment. For example, the optical fiber of the multiple mode (MM) such as a step index (SI) type or a grated index (GI) type can be used.

In this twenty-fifth embodiment, near infrared rays of 1.3 µm and 1.55 µm are used as signal rays by using glass material such as quartz. However, in the case of conducting correspondence of a relatively short distance, signal rays of wavelengths, which are shorter than the wavelengths of the above signal rays, such as visible rays may be used by using plastic optical fiber (POF) to which plastic materials such as PMMA (poly methyl metha acrylate) is applied.

The ferrule joining member 1A is formed into a substantially columnar shape made of appropriate materials of ceramics such as zirconia, glass, plastics or metal such as stainless steel. This columnar-shaped material is machined into an appropriate shape, for example, by cutting away an end portion on the connecting portion side.

As shown in Fig. 67, this ferrule joining member 1A is composed as follows. In the same manner as that of the first embodiment, a substantial half of the predetermined region arranged on the one end side of the ferrule joining member 1A facing the inclined face (the butted face) 15 is cut away in the axial direction under the condition that the optical fiber core wire 4B fixed at the center is included, and the optical fiber core wire 4B is uncovered and exposed. Due to the foregoing, the step portion 12 and the flat portion 13 are provided.

On the other hand, concerning the guide sleeve 2A, as shown in Fig. 66, end faces of the joining portions of the ferrule joining members 1A are butted to each other, and the guide sleeves 2A are externally inserted onto the outer circumferential faces of the ferrule joining members 1A. Due to the foregoing, in the same manner as that of the first embodiment, the guide sleeves 2A can be fixed and held while integrally covering these ferrule joining members 1A. Therefore, in the guide sleeve 2A of this embodiment, by using an appropriately thin material having a relatively high flexibility, for example, by using ceramics such as zirconia or various metals, as shown in Fig. 67, the cross section of the guide sleeve 2A is formed into a substantial C-shape having a slit 22 which is formed by cutting out the guide sleeve 2A from one end to the other end in the direction of the central axis. By the spring force of the guide sleeve 2A, the guide sleeve 2A can be tightly contacted with the outer circumferential faces of both the ferrule joining members 1A.

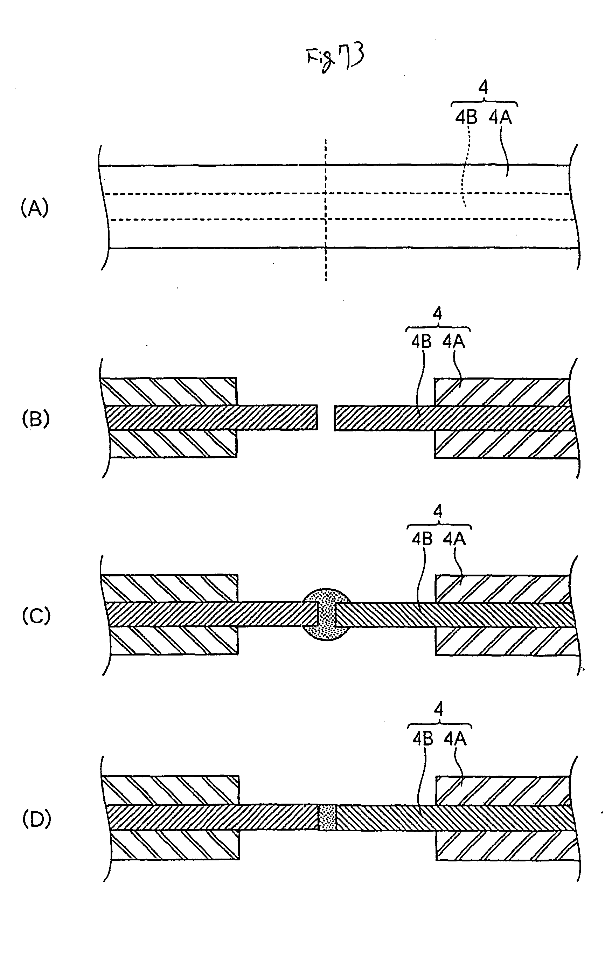

In this guide sleeve 2A, the window portion 21 is provided into which the dripping means 120 (shown in Fig. 69) for dripping adhesive in the case of joining the ferrule joining members 1A described later is inserted, and this window portion 21 becomes an installation space for inserting and arranging the light receiving element (the light receiving portion) 6. This window portion 21 is provided by means of cutting out, at a position of the reverse phase to the position where the slit 22 is formed. Alternatively, this window portion 21 is provided at a position in the neighborhood of the position where the slit 22 is formed.

In the guide sleeve 2A of this embodiment, the window portion 21 is provided for dripping and filling adhesive onto the inclined face 15 of the ferrule joining member 1A, however, the function of the guide sleeve 2A of this embodiment is not limited to the above function. The guide sleeve 2A of this embodiment also has a function of discharging the surplus adhesive.

As shown in Fig. 69, in this guide sleeve 2A, the window portion 21 and the slit 22 are arranged being opposed to each other as follows. In order to prevent the surplus adhesive, which has dripped from the dripping means 120 arranged in an upper portion of the guide sleeve 2A and has permeated onto the inclined face 15 of the ferrule joining member 1a, from dropping by its self weight from the lowermost portion of the ferrule joining member 1A and from accumulating in the bottom portion in the guide sleeve 2A, the slit is arranged in the lowermost portion of the guide sleeve 2A which is dislocated from the window portion 21, which is arranged in the uppermost portion, by 180°.

Due to the foregoing, adhesive flowing downward from the inclined face 15 of the ferrule joining member 1A passes through the lowermost slit 22 by the action of gravity and drops and discharges outside.

In this case, concerning the adhesive to be used, the ultraviolet-ray-setting (UV) resin is used. When the adhesive is irradiated with ultraviolet rays, it is solidified, so that the ferrules can be joined and bonded to each other. An appropriate adhesive can be used for this adhesive. However, in order to prevent the occurrence of Fresnel reflection which is unnecessary, it is preferable that the index of refraction of the adhesive is the same as the index of refraction of the core.

In this connection, in the case of the guide sleeve 2A of this embodiment, a relative positional relation between the window portion 21 and the slit 22 is determined in such a manner that the phase of the window portion 21 and the phase of the slit 22 are shifted from each other by 180°, so that the surplus adhesive can be most easily discharged outside. However, the relative positional relation between the window portion 21 and the slit 22 may be somewhat shifted from 180°. In other words, it is sufficient that a surplus portion of adhesive, which has dripped from the window portion 21, is effectively discharged outside. Therefore, the guide sleeve 2A may be rotated and adjusted in the circumferential direction so that the slit 22 can come to the lowermost portion when adhesive is dripped. In this case, when a position of the dripping means 120 is adjusted in the longitudinal and the lateral direction, the dripping position can be adjusted. Therefore, no problems are caused even when the window portion 21 is somewhat dislocated from the uppermost portion.

Cross sections of the ferrule joining member 1A and the guide sleeve 2A of this embodiment are respectively formed into a circular shape or a C-shape. However, the cross sections may be a polygon such as a square.

In the same manner as that of the first embodiment, various thin films (for example, dielectric multiple-layer films) are used for the optical filter 5. Examples of the optical filter 5 are: a polarization filter having a characteristic of making plane polarization by selectively absorbing some components of the electromagnetic waves that are transmitted; an extinction filter having a characteristic of reducing a quantity of light; and a wave-length division filter. As shown in Fig. 67, before both the ferrule joining members 1A are joined to each other, the optical filter 5 is fixed onto the inclined face 15 of one optical fiber core wire 4B and ferrule joining member 1A.

In this connection, for the optical filter 5 of this embodiment, the wavelength division filter is used which is characterized in that a specific signal light in the signal light of different wavelengths spreading in the optical fiber 4 is reflected or diffracted so that the specific signal light can be separated. When the thus separated optical signal light is received by the light receiving element 6, the specific signal light can be branched, that is, a light branching filter can be composed.

When a half mirror is used as the optical filter 5, since the half mirror is
characterized in that a substantial half of signal light in the signal light of the same wavelength spreading in the optical fiber are reflected or diffracted so that the signal light can be separated. Therefore, when the thus separated signal light is received by the light receiving element, the signal light of a specific wavelength can be turned out, that is, a light turnout can be composed.

The light receiving element (the receiving portion) 6 takes out information sent from the opponent in such a manner that a signal ray (For example, wavelength λ1 is 1.3 µm.) spreading in the optical fiber is picked up and converted into an electric signal. In this embodiment, a semiconductor element is used for the light receiving element 6. PIN photo diode (PIN-PD) is used for the light receiving element 6 of this embodiment. An amplifier not shown is connected to this PIN photo diode. In this connection, instead of PIN photo diode, for example, an avalanche photo diode (APD) may be used for this light receiving element 6.

This light receiving element 6 and the amplifier are mounted on the printed board 110. This printed board 110 may be integrally fixed to the guide sleeve 2A under the condition that the printed board 110 is put on both flat sides 21A (shown in Fig. 67) of the window portion 21 which is formed in the guide sleeve 2a being cutting out.

On the other hand, the light emitting element (the sending portion) 3 sends out a signal ray to the opponent by converting an electric signal, which is outputted from a communication device according to a piece of desired information, into a signal ray (For example, wavelength λ2 is 1.55 µm.). In this embodiment, a semiconductor laser (LD) is used for the light emitting element 3. In this connection, a light emitting diode (LED) may be used for this light emitting element 3.

### (Twenty-sixth Embodiment)

Referring to Figs. 68 and 69, explanations will be made into a method of manufacturing a light sending and receiving module by ferrules of the twenty-sixth embodiment of the present invention. In this connection, in this embodiment, concerning the same steps as those of the method of manufacturing a light sending and receiving module by ferrules of the fourth embodiment, the drawings and explanations will be omitted here.

First of all, the first to the fifth step are performed in the same manner as those of the first to the fifth step of the fourth embodiment.
(1) Next, as shown in Fig. 68, a pair of ferrule joining members 1A are inserted and engaged into the guide sleeve 2A and butted to each other so that the inclined faces can be rightly opposed to each other as shown in Fig. 69. In this case, the guide sleeve 2A is attached so that the window portion 21 can face the cutout portion of each ferrule joining member 1A having the step portion 12, that is, the guide sleeve 2A is attached so that the window portion 21 can be aligned with the cutout portion of each ferrule joining member 1A in the same direction.
(2) Next, in the seventh step, as shown in Fig. 69, while the window portion 21 of the guide sleeve 2A is being held at the right above position, the dripping means 120 for dripping adhesive is inserted into the window portion 21 so that the dripping means 120 can be arranged right above the inclination faces 15.
(3) In the eighth step, adhesive is supplied and dripped into a gap formed in the butted portion of the inclined faces 15 of the ferrule joining members 1A between which the optical filter 5 is interposed. Due to the foregoing, adhesive is charged onto the inclined faces 15 on which both the ferrules are butted to each other and the gap is filled with adhesive.

Consequently, according to the method of manufacturing a light sending and receiving module by ferrules of this embodiment, surplus adhesive passes through between the inclined faces 15 on which the ferrule 1A are butted to each other. A portion of the surplus adhesive flows and drops on the inclined faces 15 to the lowermost portion of the inner circumferential face of the guide sleeve 2A by its own weight.

On the other hand, in the lowermost portion of the inner circumferential face of this guide sleeve 2A, the slit 22 is formed and opened. Therefore, the surplus adhesive flowing and dropping toward the lowermost portion (the slit 22) of the guide sleeve 2A by its own weight naturally drops out from this slit 22 by the action of gravity. In this way, the surplus adhesive can be automatically discharged outside and removed. Therefore, no surplus adhesive accumulates in the bottom portion of the guide sleeve 2A.

Due to the foregoing, there is no possibility that the surplus adhesive coated on the inclined faces 15 accumulates in the neighborhood of the lowermost portion of the inner circumferential face of the guide sleeve 2A even when the ferrules are pushed and butted to each other at the time of forming the connecting portion. Accordingly, there is no possibility of the occurrence of a conventional problem in which end portions of the ferrule joining members 1A are pushed up toward the window portion 21 of the guide sleeve 2A by the accumulated surplus adhesive and the axes of the optical fibers 4 are dislocated and a connection loss is caused.

In this connection, in this embodiment, the sending portion is provided in the ferrule on one side. However, it is possible to replace the light emitting element with the light receiving element in this embodiment. Alternatively, a plurality of light receiving elements may be arranged in series.

Further, it is possible to adopt a structure in which the light receiving elements are independently arranged at a plurality of positions. This structure is preferably utilized for WDM system in which multiplexed waves such as four multiplexed waves or eight multiplexed waves can be transmitted in two directions being multiplexed.

As explained above, according to the twenty-fifth and the twenty-sixth embodiment, the guide sleeve 2A, which is externally inserted into the ferrule joining members 1A, includes: a slit 22 which is formed by cutting out the guide sleeve 2A from one end to the other end in the axial direction; and a window portion 21, into which the light receiving element or the light emitting element is inserted and the dripping means 120 for bonding and connecting the ferrule joining members 1A is inserted. A positional relation between the slit 22 and the window portion 21 is determined so that they can be respectively arranged at positions, the positional phases of which are inverse to each other.

Therefore, according to this embodiment, in the case where the ferrule joining members 1A, to which the optical fibers 4 (the optical fiber core wires 4B) are respectively attached, are butted and connected to each other, the surplus adhesive can be effectively discharged outside from the slit 22 provided in the bottom portion of the guide sleeve 2A. Therefore, no surplus adhesive accumulates in the bottom portion of the guide sleeve 2A. Accordingly, there is no possibility of the occurrence of the aforementioned problem in which end portions of the ferrule joining members 1A are pushed up by the accumulated surplus adhesive and the optical axes of the optical fibers 4 are dislocated. Accordingly, deterioration of the transmission efficiency, which is caused by the connection loss attributed to the dislocation of the axes, can be prevented. Consequently, it is possible to provide a light sending and receiving module by ferrules of high quality and to provide a method of manufacturing it.

### (Twenty-seventh Embodiment)

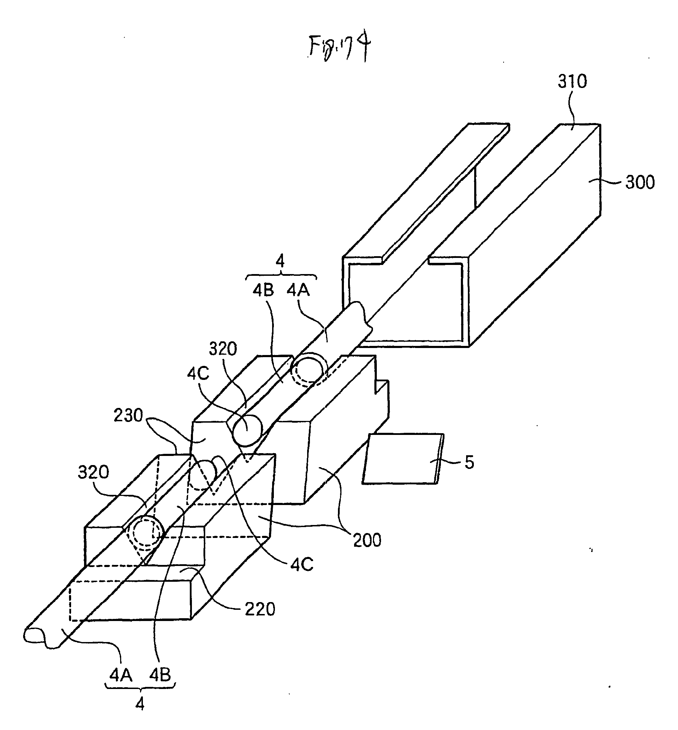

Referring to Figs. 70 to 72, a light sending and receiving module by ferrules of the twenty-seventh embodiment of the present invention will be explained below. In this connection, like reference numerals and signs are used to indicate like parts in the first and the twenty-seventh embodiment, and duplicate explanations are omitted here.

Different from the first embodiment, a light sending and receiving module by ferrules of the twenty-seventh embodiment is composed in such a manner that a pair of ferrule joining members 1A to be optically connected are composed of a rectangular parallelepiped (or plate-shaped) board, for example, a glass board 200.

On a flat upper face of this glass board 200, the V-shaped groove 210 is formed in the longitudinal direction of the upper face. In this V-shaped groove 210, the optical fiber core wire 4B of the optical fiber 4, the covering portion of which has been peeled off, is accommodated.

On the other hand, at one end portion of the glass board 200, the step portion 220, which is lower than the upper face of the glass board 200 by one step, is formed. At the other end portion of the glass board 200 having the V-shaped groove 210, the inclined face 230 is formed, which is obliquely cut in the vertical direction so that the inclined face 230 can obliquely cross the optical fiber 4 accommodated in the V-shaped groove 210. Between these inclined faces 230, the optical filter 5 is interposed so that the optical filter 5 can cross the optical fiber core wire 4B.

In this connection, although the detail of these glass boards 200 will be described later, one rectangular parallelepiped (plate-shaped) glass board is obliquely cut into two pieces so as to form two glass boards.

On the outer circumferences of the glass boards 200 which are formed by cutting one glass board into two pieces, the guide means 300 is engaged which is used for guiding the thus cut glass boards 200 so as to make the optical axes of the optical fiber core wires 4B agree with each other and also used as a fixing means for fixing the light sending and receiving module body to the printed board 110 of a communication device.

This guide means 300 is composed of a split square cylinder formed out of a metallic plate having a light-shielding property. In this guide means 300, at the substantial center on the upper face of the attaching face 310, the slit 320 is formed in the longitudinal direction. The guide means 300 is given an elasticity in the width direction by this slit 320. The guide means 300 is highly accurately formed so that the inner circumferential face of the guide means 300 can be tightly contacted with the outer circumference of the glass board 200.

In this connection, concerning the optical filter 5, in the same manner as that of the first embodiment, usable examples of the optical filter 5 are: a polarization filter having a characteristic of making plane polarization by selectively absorbing some components of the electromagnetic waves that are transmitted; an extinction filter having a characteristic of reducing a quantity of light; and a wave-length division filter characterized in that a specific signal in the signals of different wavelengths spreading in the optical fiber 4 is separated by reflection or diffraction. Alternatively, the optical filter 5 may be replaced with a half mirror characterized in that a substantial half of signals in the signals of the same wavelength spreading in the optical fiber 4 are reflected or diffracted so that the signals can be separated.

### (Twenty-eighth Embodiment)

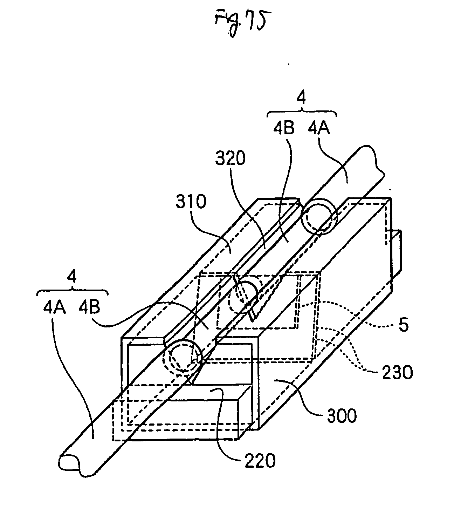

Referring to Figs. 73 to 75, explanations will be made into a method of manufacturing a light sending and receiving module by ferrules of the twenty-eighth embodiment of the present invention. In this connection, in this embodiment, concerning the same steps as those of the method of manufacturing a light sending and receiving module by ferrules of the fourth embodiment, the drawings and explanations will be omitted here.
(1) First, in the first step, the optical fiber core wire 4B of the optical fiber 4, the covering portion 4A of which has been peeled off, is accommodated in the V-shaped groove 210 of the glass board 200, the shape of which has been formed into a predetermined one. However, in the case where the light sending and receiving module is provided in the middle of the optical fiber 4, it is difficult to peel off the covering portion 4A from the middle of the optical fiber 4. Therefore, in this embodiment, as shown in Fig. 73(A), the optical fiber 4 is once cut off as shown in Fig. 73(A).
   Then, the covering portion 4A is peeled off from the end portion of the optical fiber 4 which has been cut as shown in Fig. 73(B). After that, under the condition that the optical fiber core wires 4B are aligned to each other by a jig not shown, the cut faces of the optical fiber core wires 4B are fused to each other as shown in Fig. 73(C). The fused portion is subjected to forming as shown in Fig. 73(D). In this way, it is possible to obtain the optical fiber 4, from the middle portion of which the covering portion 4A has been peeled off. Therefore, even the optical fiber 4 of high reliability, the covering portion of which is difficult to be peeled off because it is hard, can be easily used in this way.
(2) In the second step, after the optical fiber 4 has been formed in this way, the optical fiber core wire 4B, from which the covering portion 4A has been peeled off, is accommodated in the V-shaped groove 210 of the glass board 200, and the glass board 200 and the optical fiber core wire 4B are obliquely cut by a predetermined angle under the above condition so as to divide the glass board 200 and the optical fiber 4 (the optical fiber core wire 4B).
(3) After that, in the third step, the cutting faces of the glass board 200 and the optical fiber core wire 4B are polished, and the inclined faces (the cutting faces) 4C having a high optical characteristic are obtained as shown in Fig. 74. Then, the optical filter 5 is inserted into between the inclined faces 4C so that the optical filter 5 can cross the core wires 4B of the optical fibers 4. After that, the optical filter 5 is interposed between the glass boards 200 and also between the cutting faces of the optical fibers 4.
(4) Next, in the fourth step, in Fig. 74, the guide means 300, into which one of the optical fibers 4 has previously been inserted, is moved toward the glass board 200 and inserted into the outer circumference of the glass board 200. This guide means 300 is highly accurately formed so that the inner circumferential face of the guide means 300 can be tightly contacted with the outer circumference of the glass board 200. Therefore, when the guide means 300 is inserted into the glass board 200, alignment of the optical fibers 4 accommodated in the V-shaped grooves 210 on the divided glass boards 200 can be automatically and accurately conducted.

Due to the foregoing, it becomes unnecessary to provide a step in which the optical axes of the optical fibers 4 are artificially aligned. When the divided glass boards 200 are bonded and integrated into one body by means of bonding such as UV-setting optical adhesive and the optical fiber core wire 4B are fixed into the V-shaped grooves 210, the optical sending and receiving module can be formed. Therefore, the inclined faces 4c of the glass board 200 and the optical fiber core wire 4B can be highly accurately polished. Accordingly, it is possible to provide a light sending and receiving module, the optical characteristic of which is excellent.

When the attaching face 310 of the guide means 300 is fixed onto the printed board 110 of a communication device, the light sending and receiving module can be easily attached to the printed board 110.

As explained above, according to the twenty-seventh and the twenty-eighth embodiment, the optical fiber is accommodated in the V-shaped groove formed on the board, and the board is cut off so that the cutting face can cross the optical fiber. Then, the guide means is inserted into the board under the condition that the optical filter (or the half mirror) is interposed between the board and the cutting face of the optical fiber so as to conduct alignment of the optical fibers. Due to the foregoing, the cutting faces of the board and the optical fibers can be easily polished with high accuracy. Therefore, it is possible to provide a light sending and receiving module, the optical characteristic of which is high.

According to the twenty-seventh and the twenty-eighth embodiment, when the guide means is inserted into the divided boards, it is possible to highly accurately conduct alignment of the optical fibers which have been divided. Therefore, it becomes unnecessary to conduct an adjustment of the optical axis which takes much labor and time. Due to the foregoing, the productivity can be enhanced.

### (Twenty-ninth Embodiment)

Referring to the drawings, explanations will be made into a light sending and receiving module by ferrules of the twenty-ninth embodiment as follows.

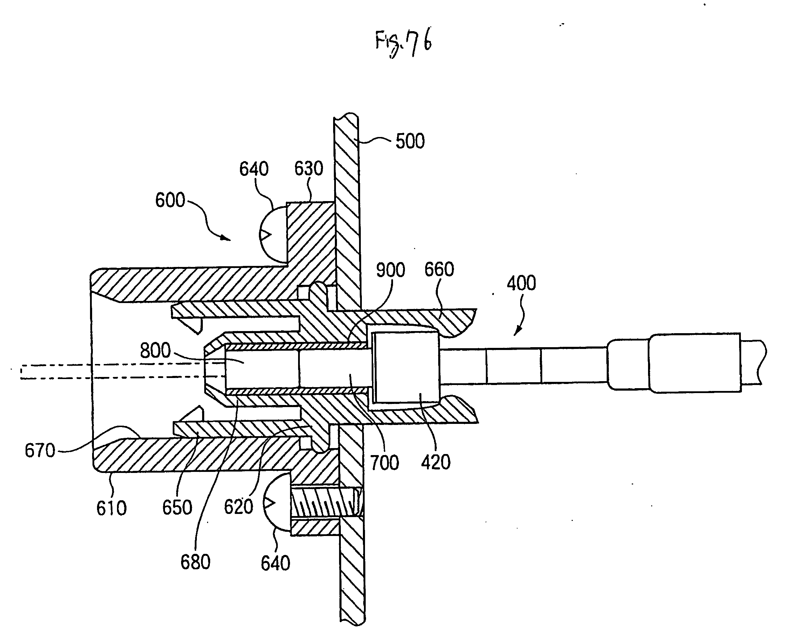

Fig. 76 is a longitudinal sectional view showing a connecting device of the module 400 for sending and receiving light in which the twenty-ninth embodiment of the present invention is adopted. This light sending and receiving module 400 used for the connecting device of the light sending and receiving module by ferrules is composed in such a manner that the female 700 on the module side and the ferrule 800 on the device side are connected to each other by the receptacle 600 attached to the device housing 500.

This receptacle 600 includes a main body portion 610 and a connector portion 620.

The main body portion 610 of the receptacle 600 is formed into a cylindrical shape, and the expanded diameter flange portion 630 is attached to the device housing 500 by screws.

On the other hand, the connector portion 620 indudes a pair of engaging legs 650, 660 which extend onto both sides of the connector portion 620. One engaging leg 650 is engaged with the inner hole 670 of the main body portion 610, and the other engaging leg 660 is engaged with the attaching metal fitting 420 engaging with the ferrule 700 in the light sending and receiving module 400. In this way, the pair of engaging legs 650, 660 attach the light sending and receiving module 400 to the device housing 500.

In this connector section 620, the cylindrical ferrule engaging portion 680 is formed being surrounded by the engaging legs 650. In this engaging portion 680, the module side ferrule 700 and the device side ferrule 800 are engaged with each other while the alignment sleeve 900 is being interposed between them. In other words, the alignment sleeve 900 fixes the module side ferrule 700 and the device side ferrule 800, the end faces of which are butted to each other so that both can be optically coupled to each other.

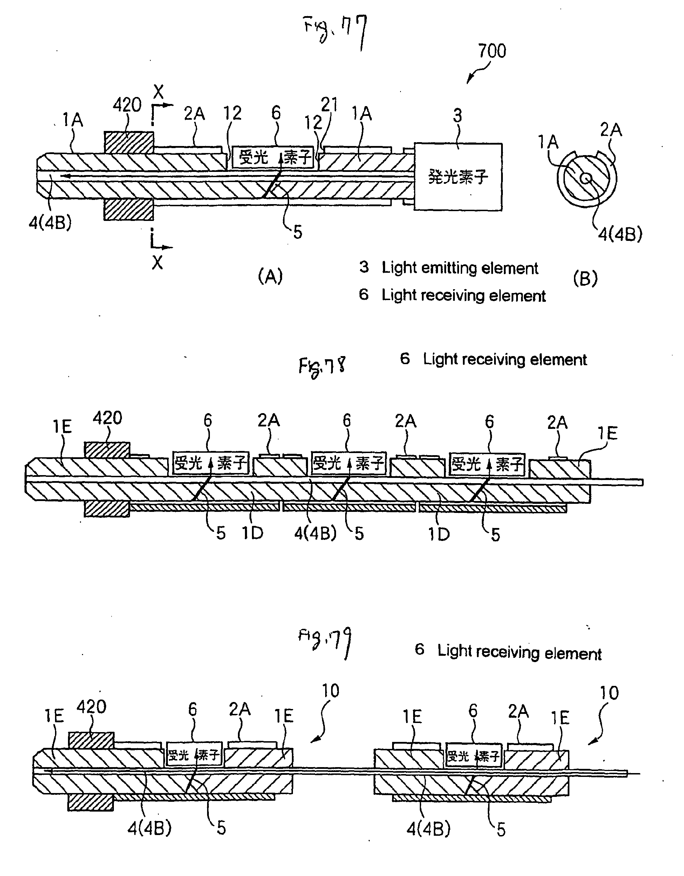

Next, explanations will be made into the structure of the light sending and receiving module 400 used for the connecting device of the light sending and receiving module by ferrules of the twenty-ninth embodiment described before. As shown in Fig. 77, the module side ferrule 700 of the light sending and receiving module 400 has a pair of ferrule joining members 1A to be optically coupled which are the same as those of the first embodiment.

In this ferrule joining member 1A, in the same manner as that of the first embodiment, the step portion 12 is formed by cutting out an upper half portion of one end portion of a columnar ferrule not shown in which the optical fiber 4 is embedded. When the step portion 12 is formed by cutting out, the optical fiber 4 is somewhat exposed from the flat portion 13 of the step portion 12.

In the light sending and receiving module by ferrules of this embodiment, in the same manner as that of the first embodiment, end faces of the step portions 12 and the optical fibers 4 are inclined and the inclined faces 15 are formed. One inclined face is inclined obliquely upward, and the other inclined face is inclined obliquely downward. Therefore, when both the inclined faces are butted to each other, no gaps are generated between them. It is preferable that the inclination angle θ is approximately 60° in this embodiment so that the inclination angle θ can conform to the inclination angle of the optical filter 5.

In this connection, in the same manner as that of the first embodiment, the guide sleeve 2A of this embodiment is formed in such a manner that the cross section is formed into an upward C-shaped cylinder corresponding to the cross section of the ferrule joining member 1A. It is preferable that an upward C-shaped window portion 21 is formed by cutting out in the upper central portion of the guide sleeve 2A.

Fig. 77 is a view showing a state in which the ferrule joining members 1A are inserted into the guide sleeve 2A. From one end face of the guide sleeve 2A, one ferrule joining member 1A is inserted into the guide sleeve 2A. From the other end face of the guide sleeve 2A, the other ferrule joining member 1A is inserted into the guide sleeve 2A. In this way, both the ferrule joining members 1A are respectively inserted into the guide sleeve 2A while the step portions 12 are being opposed to each other.

Between the inclined faces 15 of both the ferrule joining members 1A, the optical filter 5 is interposed. When both the ferrule joining members 1A are butted to each other, both end faces of the optical fibers 4 are joined to each other via the optical filter 5.

Concerning the optical filter 5, in the same manner as that of the first embodiment, usable examples are: a polarization filter having a characteristic of making plane polarization by selectively absorbing some components of the electromagnetic waves that are transmitted; an extinction filter having a characteristic of reducing a quantity of light; and a wave-length division filter described later.

In this embodiment, after both the ferrule joining members 1A have been butted to each other, the inclined faces (the butted faces) are bonded by adhesive which is melted by the exposure to ultraviolet rays. The inclined faces are located at the substantial center of the guide sleeve 2A, and the window portion 21 is located in an upper portion of the butted faces.

In this connection, in the same manner as that of the first embodiment, in the case of forming the window portion 21 in the guide sleeve 2A, the light receiving element 6 is attached to this window portion 21. In other words, the window portion 21 is provided for arranging the light receiving element 6. In the case of arranging the light receiving element 6 in the window portion 21, a wavelength division filter is used as the optical filter 5.

In this connection, the light emitting element 3 capable of sending out a signal to the optical fiber 4 is attached to the other end portion of the ferrule joining member 1A. However, it is possible to attach a light receiving element instead of the light emitting element in this embodiment.

### (Variation of the Twenty-ninth Embodiment)

In the twenty-ninth embodiment shown in Figs. 76 and 77, the ferrule joining member 1A of the light sending and receiving module by ferrules, which is used for the connecting device of the light sending and receiving module, is composed of a columnar ferrule. However, it is possible to use a ferrule joining member, the cross section of which is a square pole, or a ferrule joining member, the cross section of which is a trapezoid.

When the cross sections of the ferrule joining member and the guide sleeve are formed into a square or trapezoid as shown in the above two variations, the ferrule joining members can be prevented from rotating with respect to the guide sleeves. Therefore, in the connecting device of the light sending and receiving module, at the time of butting the ferrule joining members to each other, the inclined faces are not dislocated in the circumferential direction, and positioning can be positively made. Accordingly, the optical filter can be easily interposed between the ferrule joining members. In this case, the cross section is not limited to the square or trapezoid described above. As long as the cross section is polygonal, the same operational effect can be provided.

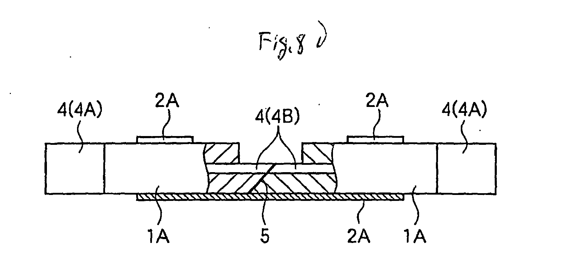

In this twenty-ninth embodiment, as shown in Fig. 78, the ferrules may be arranged as follows. The ferrule joining members 1D for joining both faces, in which the step portions are formed at both end portions of the ferrules, are arranged in the central portion in series, and the ferrule joining members 1E for joining one face, in which the step portion is formed at one end portion of each ferrule, are arranged at both end portions of the ferrule joining members 1D for joining both faces. Alternatively, the following structure may be adopted. As shown in Fig. 79, a pair of ferrule joining members 1E for joining one face, in which the step portion is formed by cutting out one end portion of the ferrule, are inserted into the guide sleeve 2A, and end faces of the optical fibers are butted to each other via the optical filter 5 to form the unit 10.

Due to the foregoing, the present embodiment can be utilized for WDM system in which three or more wavelengths such as four wavelengths or eight wavelengths can be transmitted being multiplexed.

The light sending and receiving module by ferrules in the connecting device of the light sending and receiving module shown in this twenty-ninth embodiment and its variation can be mounted on a printed board.

### Thirtieth Embodiment

Next, referring to the drawings, a method of manufacturing a light sending and receiving module by ferrules in the connecting device of the light sending and receiving module of the thirtieth embodiment of the present invention will be explained as follows. In this connection, in this embodiment, concerning the same steps as those of the method of manufacturing a light sending and receiving module by ferrules of the fourth embodiment, the drawings and explanations will be omitted here.
(1) The first to the fourth step are performed in the same manner as those of the first to the fourth step of the fourth embodiment.
(2) In the fifth step, as shown in Fig. 80, the ferrule joining member 1A is inserted into the guide sleeve 2A used for positioning, and end faces of the optical fibers 4 are butted to each other via the optical filter 5 which is formed when a plurality of thin film filters are laminated and mounted on one end face.
(3) In the sixth embodiment, after both the ferrule joining members 1A have been butted to each other, the butted faces are bonded to each other by adhesive melted when it is exposed to ultraviolet rays. These butted faces are located at the substantial center of the guide sleeve 2A, and the window portion 21 is located at an upper position of the butted faces.

As explained above, according to the twenty-ninth embodiment, the ferrule on the light sending and receiving module side and the ferrule on the device side are directly optically coupled to each other by the alignment sleeve, and the alignment sleeve is attached to the ferrule engaging portion provided in the receptacle arranged on the device housing side. Therefore, the optical fiber cords connected to the ferrule on the light sending and receiving module side and also connected to the ferrule on the device side can be abolished. According to that, the lengthening means for lengthening the optical fiber cord can be abolished. Therefore, the entire device can be downsized. For example, the entire device can be downsized to about 1/10 compared with the conventional device.

Further, the conventional ferrule on the pigtail side can be abolished. At the same time, the optical fiber cord, the cost of which is so high that the cost of the entire device is mainly occupied by the cost of the optical fiber cord together with the cost of the ferrule on the light sending and receiving module side and that of the ferrule on the device side, can be abolished. Therefore, the number of parts can be decreased and the manufacturing cost can be reduced.

According to the twenty-ninth embodiment, in the light sending and receiving module, the optical filter is interposed between the butted faces of the optical fibers without being embedded. Therefore, no gaps are generated between the optical fiber and the optical filter. Accordingly, the occurrence of irregular reflection can be prevented and the deterioration of the optical characteristic can be prevented. Since the optical filter is arranged between the end faces of the optical fibers without being embedded, it becomes unnecessary to provide a ferrule for embedding the optical filter, and the manufacturing cost can be reduced.

According to the thirtieth embodiment, the light sending and receiving module by ferrules is manufactured as follows. An end portion of the ferrule, which is fitted into a portion from which the covering portion has been removed, is cutout to form the step portion, and a ferrule joining member formed by obliquely cutting out the end face of the step portion is inserted into the guide sleeve. Then, end faces of the optical fibers are butted to each other via an optical filter to manufacture the light sending and receiving module. Therefore, the manufacturing step can be shortened and the manufacturing cost can be reduced.

The present invention has been explained above in detail, referring to the specific embodiments. However, it is apparent that variations can be made by those skilled in the art without departing from the spirit and scope of the present invention.

The present patent application is based on the following ten applications, and the contents of the applications are taken in here as reference.
Japanese Patent Application No. 2002-017359
Application Date: January 25, 2002
Japanese Patent Application No. 2002-021105
Application Date: January 30, 2002
Japanese Patent Application No. 2002-040982
Application Date: February 26, 2002
Japanese Patent Application No. 2002-054393
Application Date: February 28, 2002
Japanese Patent Application No. 2002-056080
Application Date: March 1, 2002
Japanese Patent Application No. 2002-101359
Application Date: April 3, 2002
Japanese Patent Application No. 2002-101484
Application Date: April 3, 2002
Japanese Patent Application No. 2002-101677
Application Date: April 3, 2002
Japanese Patent Application No. 2002-101699
Application Date: April 3, 2002
Japanese Patent Application No. 2002-206978
Application Date: July 16, 2002

### <Industrial Applicability>

According to the present invention, the optical filter is interposed between the butted faces of the optical fibers, and no gaps are generated between the optical fiber and the optical filter. Therefore, irregular reflection can be prevented, and deterioration of the optical characteristic can be prevented.

According to the present invention, the step portion is formed by cutting out the ferrule to which the portion of the optical fiber, from which the covering portion has been removed, is fitted. After the flat portion (the flat face) has been formed in this step portion, a pair of ferrule joining members formed by obliquely cutting away this flat portion (the flat face) are inserted into the guide sleeve so that the end portions can be butted to each other, and the end faces of the optical fibers are butted to each other via the optical filter. In this way, the light sending and receiving module by ferrules is manufactured. Therefore, the manufacturing process can be shortened and the manufacturing cost can be reduced.

## Claims

1. A light sending and receiving module by ferrules formed by optically coupling the ferrules in which optical fibers are embedded, comprising:
a ferrule joining member in which a portion or all of the circumferential face of the optical fiber is exposed from an end portion of each ferrule; and
a guide sleeve used for positioning, into which the ferrule joining member is inserted;
wherein the guide sleeve is composed so that the optical fibers can be optically coupled to each other when the end faces of the optical fibers are butted to each other via an optical filter or half mirror so as to conduct light-branching.

2. The light sending and receiving module by ferrules according to claim 1 or 2, wherein an end portion of the joining member of each ferrule is cut off, a step portion is formed in the end portion of each ferrule, and a portion or all of the circumferential face of the optical fiber is exposed from a flat face of the step portion.

3. The light sending and receiving module by ferrules according to claim 1 or 2, wherein a window portion is formed by cutting out the guide sleeve, and the window portion is located in an upper portion of the optical coupling portion of the optical fiber.

4. The light sending and receiving module by ferrules according to claim 3, wherein a light receiving element capable of receiving an optical signal which is optically branched by the optical filter or capable of receiving an optical signal optically turned out by the half mirror is attached to the window portion.

5. The light sending and receiving module by ferrules according to one of claims 1 to 4, wherein a light emitting element or light receiving element is attached to the other end portion of the ferrule joining member.

6. The light sending and receiving module by ferrules according to one of claims 1 to 5, wherein laterally sectional shapes of the ferrule joining member and the guide sleeve are respectively formed circular or polygonal.

7. The light sending and receiving module by ferrules according to one of claims 1 to 6, wherein the ferrule joining member includes ferrule joining members for joining one face in which one end portion of the ferrule is formed into a step portion and also includes ferrule joining members for joining both faces in which both end portions of the ferrule are formed into a step portion, the ferrule joining members for joining both faces are arranged in series and located at the central portion, the ferrule joining members for joining one face are arranged at both end portions of the ferrule joining members for joining both faces, and the optical fibers are optically coupled to each other when the ferrule joining members for joining, which are adjacent to each other, are inserted into the guide sleeve.

8. The light sending and receiving module by ferrules according to one of claims 1 to 7, wherein units are arranged in series which are formed in such a manner that a pair of ferrule joining members for joining one face, in which one end portion of the ferrule is formed into a step portion, are inserted into the guide sleeve, and the units adjacent to each other are connected in series via the optical fiber.

9. The light sending and receiving module by ferrules according to one of claims 1 to 8, wherein the guide sleeve is mounted on a printed board.

10. The light sending and receiving module by ferrules according to one of claims 1 to 9, wherein the ferrule joining member exposes a portion or all of the circumferential face of the optical fiber embedded.

11. The light sending and receiving module by ferrules according to one of claims 1 to 10, wherein the ferrule joining member includes a substantially flat face, which is not perpendicular to the axial direction, formed at the end portion.

12. The light sending and receiving module by ferrules comprising:
an insertion pore formed in the ferrule joining member so that the insertion pore can penetrate the ferrule joining member in the axial direction; and
a small width groove formed in the ferrule joining member so that the small width groove can cross the axial direction of the ferrule joining member;
wherein the optical fibers are optically coupled to each other when an optical filter of half mirror is inserted into the small width groove and the end faces of the optical fibers are butted to each other via an optical filter or half mirror so as to conduct light-turnout.

13. A light sending and receiving module by ferrules comprising:
an insertion pore formed in the ferrule joining member so that the insertion pore can penetrate the ferrule joining member in the axial direction;
a window portion having a bottom formed in the ferrule joining member so that a portion of the circumferential faces of the pair of optical fibers inserted into the insertion pores can be exposed;
a holding portion for holding the optical fiber when a bottom face of the window portion is formed being located on the opening side of the window portion compared with the axis of the optical fiber; and
a small width groove formed in the ferrule joining member so that the small width groove can cross the axial direction of the ferrule joining member;
wherein the optical fibers are optically coupled to each other when an optical filter of half mirror is inserted into the small width groove and the end faces of the optical fibers are butted to each other via an optical filter or half mirror so as to conduct light-turnout.

14. The light sending and receiving module by ferrules according to claim 12 or 13, wherein the ferrule joining member is made of glass.

15. The light sending and receiving module by ferrules according to one of claims 12 to 14, wherein a light receiving element capable of receiving an optical signal which is optically branched by the optical filter or capable of receiving an optical signal optically branched by the half mirror is attached to the window portion.

16. The light sending and receiving module by ferrules according to one of claims 12 to 15, wherein a light emitting element or light receiving element is attached to one end portion of the ferrule joining member.

17. The light sending and receiving module by ferrules according to one of claims 12 to 16, wherein the ferrule joining member is mounted on a printed board.

18. A light sending and receiving module by ferrules formed by optically coupling the ferrules in which optical fibers are embedded, comprising
a ferrule joining member in which a portion or all of the circumferential face of the optical fiber is exposed from an end portion of each ferrule;
wherein the ferrule joining members are optically coupled to each other when end faces of the optical fibers are butted to each other via an optical filter or half mirror, and
a surface light emitting element or surface light receiving element is provided in the optical coupling portion.

19. The light sending and receiving module by ferrules according to claim 18, wherein a bare chip is used as the surface light emitting element or surface light receiving element.

20. The light sending and receiving module by ferrules according to claim 18 or 19, wherein a can package, in which a bare chip and condenser lens are integrated into one body, or a can package having no lens, in which a bare chip and condenser lens are provided differently from each other, are used as the surface light emitting element or surface light receiving element.

21. The light sending and receiving module by ferrules according to one of claims 18 to 20, wherein the ferrule is made of transparent glass.

22. The light sending and receiving module by ferrules according to one of claims 18 to 21, wherein the ferrule joining member includes ferrule joining members for joining one face in which one end portion of the ferrule is formed into a step portion and also includes ferrule joining members for joining both faces in which both end portions of the ferrule are formed into a step portion, the ferrule joining members for joining both faces are arranged in series and located at the central portion, the ferrule joining members for joining one face are arranged at both end portions of the ferrule joining members for joining both faces and inserted into the guide sleeve, so that the adjoining ferrule joining members are optically coupled to each other.

23. The light sending and receiving module by ferrules according to one of claims 18 to 21, wherein the pair of ferrule joining members for joining one face, in which a step portion is formed at one end of the ferrule, are inserted into the guide sleeve so as to compose a plurality of units, and the adjoining units are connected to each other in series via the optical fiber.

24. A light sending and receiving module by ferrules formed by optically coupling the ferrules in which optical fibers are embedded, comprising
a ferrule joining member in which a portion or all of the circumferential face of the optical fiber is exposed from an end portion of each ferrule;
wherein the optical fibers are optically coupled to each other when end faces of the optical fibers are butted to each other via an optical filter or half mirror, and
a printed wiring for connecting a light emitting element or light receiving element, which is provided close to the optical coupling portion of the optical fiber, with an external device is formed in the ferrule joining member.

25. The light sending and receiving module by ferrules according to claim 24, wherein a bare chip is used as the light emitting element or light receiving element, and the bare chip is directly attached to the printed wiring.

26. The light sending and receiving module by ferrules according to claim 24 or 25, wherein an amplifier is mounted on the printed wiring.

27. The light sending and receiving module by ferrules according to one of claims 24 to 26, wherein a terminal connected to the connector is provided at the end portion of the printed wiring.

28. The light sending and receiving module by ferrules according to one of claims 24 to 27, wherein the ferrule joining member is inserted into the guide sleeve so as to conduct positioning, a window portion is formed by cutting out the guide sleeve and the window portion is located in an upper portion of the optical coupling portion of the optical fiber.

29. A light sending and receiving module by ferrules **characterized in that**: when one end side of the ferrule, in which an optical fiber is embedded, is cut out, a plurality of ferrule joining members having a flat face, from which at least a portion of the optical fiber is exposed, are formed; an inclined face is formed on one end side of each ferrule joining member; when the inclined faces are butted to each other via the optical filter or the half mirror, the optical fibers are optically coupled; and when one end side of the ferrule is cut out, a portion of the optical fiber is cut out so as to form a cutout face, and a light receiving element or a light emitting element is joined to the cutout face.

30. The light sending and receiving module by ferrules according to claim 29, wherein the ferrule joining member is inserted into a guide sleeve to conduct positioning, the guide sleeve has a window portion which has been cut out, and the window portion.is located in an upper portion of the optical coupling portion of the optical fiber.

31. A light sending and receiving module by ferrules in which a plurality of ferrule joining members are formed, each ferrule joining member has a flat face, from which at least a portion of an optical fiber is exposed, the flat face is formed when one end side of the ferrule in which the optical fiber is embedded is cut out, an inclined face is formed on one end side of each ferrule joining member, the optical fibers are optically coupled to each other by butting the inclined faces via an optical filter or a half mirror, and the flat face is formed higher than an outer circumferential face of the optical fiber.

32. The light sending and receiving module by ferrules according to claim 31, wherein the inclination angle θ1 of the inclined face of one ferrule joining member and the inclination angle θ2 of the inclined face of the other ferrule joining member, one ferrule joining member and the other ferrule joining member are adjacent to each other, are set so that they can satisfy the inequality θ1 ≤ θ2.

33. The light sending and receiving module by ferrules according to claim 31 or 32, wherein a light receiving element or a light emitting element is provided on a flat face in an upper portion of the optical coupling portion of the optical fibers.

34. A light sending and receiving module by ferrules according to one of claims 31 to 33, wherein the ferrule joining member is positioned when it is inserted into a guide sleeve, a window portion is formed by cutting out the guide sleeve, and the window portion is located in an upper portion of the optical coupling portion of the optical fiber.

35. A light sending and receiving module by ferrules which is formed when a pair of ferrules, in which an optical fiber is embedded, are optically coupled to each other, comprising:
a ferrule joining member from which a portion or all of the circumferential face of the optical fiber is exposed from an end portion of each ferrule; and
a guide sleeve for positioning into which the ferrule joining member is inserted;
wherein the guide sleeve is composed so that the optical fibers can be optically coupled to each other when the end faces of the optical fibers are butted to each other via an optical filter or a half mirror in the guide sleeve so as to branch light, and
the optical filter or the half mirror is formed in an end portion of the ferrule joining member by laminating a plurality of thin filter films or thin mirror films so that the thin filter films or thin mirror films can cover an end face of the optical fiber.

36. The light sending and receiving module by ferrules according to claim 35 or 36, wherein an end portion of each ferrule is cut away so as to form a step portion in the end portion of each ferrule, and
a portion or all of the circumferential face of the optical fiber is exposed from the flat face of the step portion.

37. The light sending and receiving module by ferrules according to claim 35 or 36, wherein a window portion is formed in the guide sleeve by cutting out, and the window portion is located in an upper portion of the optical coupling portion of the optical fiber.

38. The light sending and receiving module by ferrules according to claim 37, wherein the window portion is attached with a light receiving element capable of receiving an optical signal which is optically branched by the optical filter or an optical signal which is optically turned out by the half mirror.

39. The light sending and receiving module by ferrules according to one of claims 35 to 38, wherein a light emitting element or a light receiving element is attached to the other end portion of the ferrule.

40. The light sending and receiving module by ferrules according to one of claims 35 to 39, wherein a lateral cross section of the ferrule and that of the guide sleeve are circular or polygonal.

41. The light sending and receiving module by ferrules according to one of claims 35 to 40, wherein the ferrule joining member includes a ferrule joining member for joining one face, in which one end portion of the ferrule is formed into a step portion, and also includes a ferrule joining member for joining both faces in which both end portions of the ferrule are formed into a step portion;
the ferrule joining members for joining both faces are arranged in series and located in the central portion, the ferrule joining members for joining one face are arranged at both end portions of the ferrule joining member for joining both faces, and when the adjoining ferrule joining members are inserted into the guide sleeve, the optical fibers are optically coupled to each other.

42. The light sending and receiving module by ferrules according to one of claims 35 to 41, wherein units formed by inserting a pair of ferrule joining members for joining one face, in which one end portion of the ferrule is formed into a step portion, into the guide sleeve are arranged in series, and the adjoining units are connected in series via an optical fiber.

43. The light sending and receiving module by ferrules according to one of claims 35 to 42, wherein a substantial plane not perpendicular to the axial direction is formed in the end portion of the ferrule.

44. The light sending and receiving module by ferrules according to one of claims 35 to 43, wherein the guide sleeve is mounted on a printed board.

45. The light sending and receiving module by ferrules comprising:
a connecting portion in which the ferrules to which each end portion of a pair of optical fibers is fixed are butted to each other; and
a receiving portion for taking out a signal ray from the optical fiber butting face composing the connecting portion via an optical filter or a half mirror, or a sending portion for sending out a signal ray from the connecting portion to the optical fiber;
further comprising:
a ferrule joining portion in which a portion or all of the outer circumferential face of the optical fiber is exposed from the end portion side composing the connecting portion of the pair of ferrules; and
adhesive for bonding the end faces of the ferrule joining portion after the end faces are butted to each other,
wherein a guide sleeve having a slit, which is formed by cutting the guide sleeve from one end to the other end in the axial direction, is externally inserted into an outer circumferential face of the ferrule, and surplus adhesive is discharged from the slit at the time of bonding the ferrule butting faces when the pair of ferrules are integrally covered and held; and
a window portion is provided in the guide sleeve at a position, the positional phase of which is inverse to the position where the slit is formed, so that the receiving portion or the sending portion can be inserted and arranged from the window portion.

46. The light sending and receiving module by ferrules according to claim 45, wherein the butting face of each ferrule joining portion is inclined by not a right angle but a predetermined angle with respect to the axial direction.

47. The light sending and receiving module by ferrules according to claim 45 or 46, wherein the ferrule joining portion is composed in such a manner that an end portion side of the ferrule is cut away so as to form a step portion and a flat portion on the end portion side of each ferrule, and
a portion or all of the outer circumferential face of the optical fiber is exposed from a flat face of the flat portion.

48. The light sending and receiving module by ferrules according to one of claims 45 to 47, wherein the receiving portion is provided with a light receiving element, which is arranged in the window portion of the guide sleeve, for receiving a signal ray which has been branched or turned out by an optical filter or a half mirror.

49. The light sending and receiving module by ferrules according to one of claims 45 to 48, wherein the sending portion is provided with a light emitting element arranged on one end of the sending portion which is located on the side opposite to the other end composing the butting face of the ferrule joining portion.

50. The light sending and receiving module by ferrules according to one of claims 45 to 48, wherein a lateral cross section of the ferrule joining portion and that of the guide sleeve are substantially circular or polygonal.

51. The light sending and receiving module by ferrules according to one of claims 45 to 50, wherein a printed board is arranged in the guide sleeve, and the light receiving element or the light emitting element is mounted on the printed board.

52. A light sending and receiving module by ferrules **characterized in that**: the board is cut off by a predetermined angle so that the optical fiber can be crossed under the condition that the optical fiber is accommodated in a V-shaped groove formed on the board;
alignment is conducted on the optical fiber by inserting the guide means to the board under the condition that an optical filter or a half mirror is interposed between the cutting faces of the board and the optical fiber; and
the board, the optical fiber and the optical filter or the half mirror are bonded and integrated into one body by means of adhesion.

53. The light sending and receiving module by ferrules according to claim 52, wherein the optical fiber is cut off in the intermediate portion and the covering portion is peeled off from the end portion so as to expose the optical fiber core wires, and
the thus exposed optical fiber core wires are connected to each other and accommodated in the V-shaped groove of the board.

54. The light sending and receiving module by ferrules according to claim 52 or 53, wherein the guide means includes a split sleeve having a light-shielding property.

55. A connecting device of a light sending and receiving module by ferrules comprising:
a module side ferrule composing a light sending and receiving module by ferrules;
a device side ferrule provided on the device housing side;
an alignment sleeve for fixing the module side ferrule and the device side ferrule under the condition that the end faces of the module side ferrule and the device side ferrule are butted and optically coupled to each other; and
a ferrule engaging portion provided in the receptacle arranged on the device housing side so that the alignment sleeve can be attached.

56. The connecting device of a light sending and receiving module by ferrules according to claim 55, wherein the module side ferrule composing the light sending and receiving module includes a pair of ferrule joining members, from the end portion of which a portion or all of the circumferential face of the optical fiber is exposed so as to optically couple the embedded optical fiber and also includes a guide sleeve for positioning into which the ferrule joining member is inserted, and
the optical fibers are optically coupled to each other when the end faces of the optical fibers are butted to each other via the optical filter or the half mirror by the guide sleeve so as to branch light.

57. The connecting device of a light sending and receiving module by ferrules according to claim 56, wherein the ferrule joining member is composed in such a manner that an end portion of the ferrule joining member is cut away so as to form a step portion on the end portion of each ferrule joining member, and
a portion or all of the circumferential face of the optical fiber is exposed from a flat face of the step portion.

58. The connecting device of a light sending and receiving module by ferrules according to claim 56 or 57, wherein a window portion is formed in the guide sleeve by cutting out, and the window portion is located in an upper portion of the optical coupling portion of the optical fiber.

59. The connecting device of a light sending and receiving module by ferrules according to claim 58, wherein the window portion is attached with a light receiving element capable of receiving an optical signal which is optically branched by the optical filter or an optical signal which is optically turned out by the half mirror.

60. The connecting device of a light sending and receiving module by ferrules according to one of claims 56 to 59, wherein a light emitting element or a light receiving element is attached to the other end portion of the ferrule on the module side.

61. A connecting device of a light sending and receiving module by ferrules according to one of claims 56 to 60, wherein a lateral cross section of the module side ferrule and that of the guide sleeve are circular or polygonal.

62. A connecting device of a light sending and receiving module by ferrules according to one of claims 56 to 61, wherein the female joining member includes a ferrule joining member for joining one face, in which one end portion of the ferrule is formed into a step portion, and also includes a ferrule joining member for joining both faces in which both end portions of the ferrule are formed into a step portion,
the ferrule joining members for joining both faces are arranged in series and located in the central portion, the ferrule joining members for joining one face are arranged at both end portions of the ferrule joining member for joining both faces, and when the adjoining ferrule joining members are inserted into the guide sleeve, the optical fibers are optically coupled to each other.

63. The connecting device of a light sending and receiving module by ferrules according to one of claims 56 to 61, wherein units are formed by inserting a pair of ferrule joining members for joining one face, in which one end portion of the ferrule is formed into a step portion, into the guide sleeve, and arranged in series, and
the adjoining units are connected in series via an optical fiber.

64. The connecting device of a light sending and receiving module by ferrules according to one of claims 56 to 63, wherein the guide sleeve is mounted on a printed board.

65. The connecting device of a light sending and receiving module by ferrules according to one of claims 56 to 64, wherein a portion or all of the circumferential face of the optical fiber embedded in the ferrule is exposed.

66. The connecting device of a light sending and receiving module by ferrules according to one of claims 56 to 65, wherein a substantial plane not perpendicular to the axial direction is formed in the ferrule end portion on the module side.

67. A method of manufacturing a light sending and receiving module by ferrules comprising:
a first step of removing a covering portion from an optical fiber;
a second step of fitting a ferrule into a portion from which the covering portion has been removed;
a third step of cutting out an end portion of the ferrule to form a step portion and exposing a portion of the circumferential face of the optical fiber from a flat face of the step portion;
a fourth step of obliquely cutting away an end face of the step portion to form an inclined face so that a ferrule joining member can be formed; and
a fifth step of inserting the ferrule joining member into a guide sleeve for positioning and butting end faces of the optical fibers to each other via an optical filter.

68. A method of manufacturing a light sending and receiving module by ferrules comprising:
a first step of forming a window portion having a bottom in the ferrule joining member so that an insertion pore penetrating in the axial direction of the ferrule joining member can be opened;
a second step of forming a small width groove, which crosses the axial direction of the insertion pore, on a bottom face of the window portion in the ferrule joining member; and
a third step of inserting the pair of optical fibers into the insertion pore, a third step of inserting an optical filter, which conducts light turnout when end faces of the optical fibers are butted to each other, into the small width groove, alternatively inserting a half mirror which conducts light branching when end faces of the optical fibers are butted to each other so that the optical fibers can be optically coupled to each other, and a third step of holding the optical fibers by a holding portion formed so that the bottom face of the window portion can be located on the opening side of the window portion compared with the axis of the optical fibers when the optical fibers are inserted into the insertion pore.

69. A method of manufacturing a light sending and receiving module by ferrules comprising:
a first step of inserting an optical fiber into an insertion pore penetrating in the axial direction of the ferrule joining member;
a second step of forming a window portion in the ferrule joining member, the cross section of which is a substantial C-shape, so that a portion of the circumferential face of the optical fiber can be exposed, and a second step of forming a holding portion for holding the optical fiber while a bottom face of the window portion is being located on the opening side of the window portion compared with the neutral point of the optical fiber;
a third step of forming a small width groove in the ferrule joining member so that the small width groove can cross the axial direction of the ferrule joining member; and
a fourth step of inserting an optical filter, which conducts light turnout when end faces of the optical fibers are butted to each other, into the small width groove, alternatively inserting a half mirror which conducts light branching when end faces of the optical fibers are butted to each other so that the optical fibers can be optically coupled to each other, and a fourth step of holding the optical fibers by a holding portion formed so that a bottom face of the window portion can be located on the opening side of the window portion compared with the axis of the optical fibers when the optical fibers are inserted into the insertion pore.

70. A method of manufacturing a light sending and receiving module by ferrules comprising:
a first step of removing a covering portion from an optical fiber;
a second step of fitting a ferrule into a portion from which the covering portion has been removed;
a third step of cutting out an end portion of the ferrule to form a step portion and exposing a portion of the circumferential face of the optical fiber from a flat face of the step portion;
a fourth step of forming an inclined face on the end face of the ferrule joining member by obliquely cutting away an end face of the step portion;
a fifth step of inserting the ferrule joining member into a guide sleeve for positioning and butting end faces of the optical fibers to each other via an optical filter or a half mirror; and
a sixth step of providing a face light emitting element or a face light receiving element on the optical coupling portion of the optical fibers.

71. A method of manufacturing a light sending and receiving module by ferrules comprising:
a first step of removing a covering portion from an optical fiber;
a second step of fitting a ferrule into a portion from which the covering portion has been removed;
a third step of cutting out an end portion of the ferrule to form a step portion and exposing a portion of the circumferential face of the optical fiber from a flat face of the step portion;
a fourth step of forming a printed board on the step portion and the flat face;
a fifth step of obliquely cutting away an end face of the step portion to form an inclined face so that a ferrule joining member can be formed; and
a sixth step of positioning the ferrule joining member and butting end faces of the optical fibers to each other via an optical filter or a half mirror.

72. A method of manufacturing a light sending and receiving module by ferrules comprising:
a first step of removing a covering portion from an optical fiber;
a second step of fitting a ferrule into a portion from which the covering portion has been removed;
a third step of forming a step portion and a flat face in the end portion of the ferrule and also forming a cutout face in the optical fiber by cutting out an end portion of the ferrule and by cutting out a portion of the optical fiber;
a fourth step of forming an inclined face in each ferrule joining member by obliquely cutting away an end face of the step portion;
a fifth step of positioning the ferrule joining member and butting end faces of the optical fibers to each other via an optical filter or a half mirror; and
a sixth step of coupling a light receiving element or a light emitting element to the cutout face of the optical fiber.

73. A method of manufacturing a light sending and receiving module by ferrules comprising:
a first step of removing a covering portion from an optical fiber;
a second step of fitting a ferrule into a portion from which the covering portion has been removed;
a third step of exposing a portion of the circumferential face of the optical fiber from the flat face when a step portion having a flat face a little higher than the outer circumferential face of the optical fiber is formed by cutting out the end portion of the ferrule;
a fourth step of forming an inclined face in each ferrule joining member by obliquely cutting away an end face of the step portion; and
a fifth step of positioning the ferrule joining member and butting end faces of the optical fibers to each other via an optical filter or a half mirror.

74. A method of manufacturing a light sending and receiving module by ferrules comprising:
a first step of removing a covering portion from an optical fiber;
a second step of fitting a ferrule into a portion from which the covering portion has been removed;
a third step of cutting out an end portion of the ferrule to form a step portion and exposing a portion of the circumferential face of the optical fiber from a flat face of the step portion;
a fourth step of forming an inclined face by obliquely cutting away an end face of the step portion so as to form a ferrule joining member; and
a fifth step of inserting the ferrule joining member into a guide sleeve for positioning and butting end faces of the optical fibers to each other via an optical filter which is formed by laminating a plurality of thin film filters on one end face, or via a half mirror which is formed by laminating a plurality of thin film mirrors.

75. A method of manufacturing a light sending and receiving module by ferrules, the light sending and receiving module by ferrules including a connecting portion in which the ferules to which end portions of a pair of optical fibers are fixed are butted to each other and also including a receiving portion for taking out a signal ray from an optical fiber butting face composing the connecting portion or including a sending portion for sending out a signal ray from the connecting portion to the optical fiber,
the method of manufacturing the light sending and receiving module by ferrules comprising the steps of:
forming a ferrule joining portion for fixing the optical fiber, in the pair of ferrules while a portion or all of the outer circumference of the optical fiber is being exposed from the end portion side composing the connecting portion;
providing an optical filter or a half mirror on the end face from which the optical fiber fixed to the ferrule joining portion is exposed;
inserting outwardly a guide sleeve having a slit, which is cut out from one end to the other end in the central axis direction, onto an outer circumferential face of the ferrule joining portion when end faces of the ferrule joining members are butted and fixed to each other via the optical filter or the half mirror;
dripping adhesive from a window portion, which is formed being cut out in the guide sleeve at a position of an inverse positional phase to the positional phase of the slit or being cut out in the neighborhood of this position in order to insert and arrange the receiving portion, to between the end faces on which the ferrule joining members corresponding to the connecting portion are butted to each other; and
discharging and removing the surplus adhesive outside from the slit arranged at a lower position of the guide sleeve.

76. A method of manufacturing a light sending and receiving module by ferrules according to claim 75, wherein the butting faces of the ferrule joining portion, which are butted to each other and coupled in the connecting portion, are inclined faces which are inclined by a predetermined angle not perpendicular to the axial direction.

77. A method of manufacturing a light sending and receiving module by ferrules comprising the steps of:
cutting off a board by a predetermined angle so that an optical fiber can be crossed by the cutting face under the condition that the optical fiber is accommodated in a V-shaped groove formed on the board;
conducting alignment on the optical fiber by inserting a guide means onto the board under the condition that a filter is interposed between the cutting faces of the board and the optical fiber after the cutting faces of the board and the optical fiber have been polished; and
bonding and integrating the board, optical fiber and filter by means of adhesion.

## Amended claims

### Amended claims under Art. 19.1 PCT

**1.** (Amended)
A light sending and receiving module by ferrules formed by optically coupling the ferrules to each other in which optical fibers are embedded, comprising:
a ferrule joining member in which a ferrule having a step portion is engaged with a portion of the optical fibers from which a covering portion of the optical fibers has been removed, a portion or all of the circumferential face of the portion of the optical fibers from which a covering portion of the optical fibers has been removed are exposed from a flat face of the step portion, and an end face of the step portion is obliquely cut away so as to form an inclined face; and
a guide sleeve used for positioning, into which the ferrule joining member is inserted, wherein
the guide sleeve is composed so that the optical fibers can be optically coupled to each other when the end faces of the optical fibers are butted to each other via an optical filter or half mirror so as to conduct light-branching.

**2.** (Deleted)

**3.** A light sending and receiving module by ferrules according to claim 1 or 2, wherein a window portion is formed by cutting out the guide sleeve, and the window portion is located in an upper portion of the optical coupling portion of the optical fiber.

**4.** (Deleted)

**5.** (Deleted)

**6.** (Deleted)

**7.** (Deleted)

**8.** (Deleted)

**9.** (Deleted)

**10.** (Deleted)

**11.** (Deleted)

**12.** A light sending and receiving module by ferrules comprising:
an insertion pore formed in the ferrule joining member so that the insertion pore can penetrate the ferrule joining member in the axial direction; and
a small width groove formed in the ferrule joining member so that the small width groove can cross the axial direction of the ferrule joining member, wherein
the optical fibers are optically coupled to each other when an optical filter of half mirror is inserted into the small width groove and the end faces of the optical fibers are butted to each other via an optical filter or half mirror so as to conduct light-turnout.

**13.** A light sending and receiving module by ferrules comprising:
an insertion pore formed in the ferrule joining member so that the insertion pore can penetrate the ferrule joining member in the axial direction;
a window portion having a bottom formed in the ferrule joining member so that a portion of the circumferential faces of the pair of optical fibers inserted into the insertion pores can be exposed;
a holding portion for holding the optical fiber when a bottom face of the window portion is formed being located on the opening side of the window portion compared with the axis of the optical fiber; and
a small width groove formed in the ferrule joining member so that the small width groove can cross the axial direction of the ferrule joining member, wherein
the optical fibers are optically coupled to each other when an optical filter of half mirror is inserted into the small width groove and the end faces of the optical fibers are butted to each other via an optical filter or half mirror so as to conduct light-turnout.

**14.** (Deleted)

**15.** (Deleted)

**16.** (Deleted)

**17.** (Deleted)

**18.** (Deleted)

**19.** (Deleted)

**20.** (Amended)
A light sending and receiving module by ferrules formed by optically coupling the ferrules to each other in which optical fibers are embedded, comprising
a ferrule joining member in which a portion or all of the circumferential face of the optical fiber is exposed from an end portion of each ferrule, wherein
the ferrule joining members are optically coupled to each other when end faces of the optical fibers are butted to each other via an optical filter or half mirror, and
a surface light emitting element or surface light receiving element is provided in the optical coupling portion, and
a can package, in which a bare chip and condenser lens are integrated into one body, or a can package having no lens, in which a bare chip and condenser lens are provided differently from each other, are used as the surface light emitting element or surface light receiving element.

**21.** (Deleted)

**22.** (Deleted)

**23.** (Deleted)

**24.** A light sending and receiving module by ferrules formed by optically coupling the ferrules in which optical fibers are embedded, comprising
a ferrule joining member in which a portion or all of the circumferential face of the optical fiber is exposed from an end portion of each ferrule, wherein
the optical fibers are optically coupled to each other when end faces of the optical fibers are butted to each other via an optical filter or half mirror, and
a printed wiring for connecting a light emitting element or light receiving element, which is provided close to the optical coupling portion of the optical fiber, with an external device is formed in the ferrule joining member.

**25.** (Deleted)

**26.** (Deleted)

**27.** (Amended)
A light sending and receiving module by ferrules according to claim 24, wherein a terminal connected to the connector is provided at the end portion of the printed wiring.

**28.** (Deleted)

**29.** (Deleted)

**30.** (Amended)
A light sending and receiving module by ferrules **characterized in that**: when one end side of the ferrule, in which an optical fiber is embedded, is cut out, a plurality of ferrule joining members having a flat face, from which at least a portion of the optical fiber is exposed, are formed; an inclined face is formed on one end side of each ferrule joining member; when the inclined faces are butted to each other via the optical filter or the half mirror, the optical fibers are optically coupled to each other; when one end side of the ferrule is cut out, a portion of the optical fiber is cut out so as to form a cutout face, and a light receiving element or a light emitting element is joined to the cutout face; the ferrule joining member is inserted into a guide sleeve to conduct positioning; the guide sleeve has a window portion which has been cut out; and the window portion is located in an upper portion of the optical coupling portion of the optical fiber.

**31.** A light sending and receiving module by ferrules in which a plurality of ferrule joining members are formed, each ferrule joining member has a flat face, from which at least a portion of an optical fiber is exposed, the flat face is formed when one end side of the ferrule in which the optical fiber is embedded is cut out, an inclined face is formed on one end side of each ferrule joining member, the optical fibers are optically coupled to each other by butting the inclined faces via an optical filter or a half mirror, and the flat face is formed higher than an outer circumferential face of the optical fiber.

**32.** A light sending and receiving module by ferrules according to claim 31, wherein the inclination angle θ1 of the inclined face of one ferrule joining member and the inclination angle θ2 of the inclined face of the other ferrule joining member, one ferrule joining member and the other ferrule joining member are adjacent to each other, are set so that they can satisfy the inequality θ1 ≤ θ2.

**33.** (Deleted)

**34.** (Amended)
A light sending and receiving module by ferrules according to one of claim 31 or 32, wherein the ferrule joining member is positioned when it is inserted into a guide sleeve, a window portion is formed by cutting out the guide sleeve, and the window portion is located in an upper portion of the optical coupling portion of the optical fiber.

**35.** (Deleted)

**36.** (Deleted)

**37.** (Deleted)

**38.** (Deleted)

**39.** (Deleted)

**40.** (Deleted)

**41.** (Deleted)

**42.** (Deleted)

**43.** (Deleted)

**44.** (Deleted)

**45.** A light sending and receiving module by ferrules comprising: a connecting portion in which the ferrules to which each end portion of a pair of optical fibers is fixed are butted to each other; and a receiving portion for taking out a signal ray from the optical fiber butting face composing the connecting portion via an optical filter or a half mirror, or a sending portion for sending out a signal ray from the connecting portion to the optical fiber,
further comprising: a ferrule joining portion in which a portion or all of the outer circumferential face of the optical fiber is exposed from the end portion side composing the connecting portion of the pair of ferrules; and adhesive for bonding the end faces of the ferrule joining portion after the end faces are butted to each other, wherein
a guide sleeve having a slit, which is formed by cutting the guide sleeve from one end to the other end in the axial direction, is externally inserted into an outer circumferential face of the ferrule, and surplus adhesive is discharged from the slit at the time of bonding the ferrule butting faces when the pair of ferrules are integrally covered and held, and
a window portion is provided in the guide sleeve at a position, the positional phase of which is inverse to the position where the slit is formed, so that the receiving portion or the sending portion can be inserted and arranged from the window portion.

**46.** (Deleted)

**47.** (Deleted)

**48.** (Deleted)

**49.** (Deleted)

**50.** (Deleted)

**51.** (Deleted)

**52.** A light sending and receiving module by ferrules **characterized in that**: the board is cut off by a predetermined angle so that the optical fiber can be crossed under the condition that the optical fiber is accommodated in a V-shaped groove formed on the board;
alignment is conducted on the optical fiber by inserting the guide means to the board under the condition that an optical filter or a half mirror is interposed between the cutting faces of the board and the optical fiber; and
the board, the optical fiber and the optical filter or the half mirror are bonded and integrated into one body by means of adhesion.

**53.** (Deleted)

**54.** (Amended)
A light sending and receiving module by ferrules according to claim 52, wherein the guide means includes a split sleeve having a light-shielding property.

**55.** A connecting device of a light sending and receiving module by ferrules comprising:
a module side ferrule composing a light sending and receiving module by ferrules;
a device side ferrule provided on the device housing side;
an alignment sleeve for fixing the module side ferrule and the device side ferrule under the condition that the end faces of the module side ferrule and the device side ferrule are butted and optically coupled to each other; and
a ferrule engaging portion provided in the receptacle arranged on the device housing side so that the alignment sleeve can be attached.

**56.** A connecting device of a light sending and receiving module by ferrules according to claim 55, wherein the module side ferrule composing the light sending and receiving module includes a pair of ferrule joining members, from the end portion of which a portion or all of the circumferential face of the optical fiber is exposed so as to optically couple the embedded optical fiber and also includes a guide sleeve for positioning into which the ferrule joining member is inserted, and
the optical fibers are optically coupled to each other when the end faces of the optical fibers are butted to each other via the optical filter or the half mirror by the guide sleeve so as to branch light.

**57.** (Deleted)

**58.** (Amended)
A connecting device of a light sending and receiving module by ferrules according to claim 56, wherein a window portion is formed in the guide sleeve by cutting out, and the window portion is located in an upper portion of the optical coupling portion of the optical fiber.

**59.** (Deleted)

**60.** (Deleted)

**61.** (Deleted)

**62.** (Deleted)

**63.** (Deleted)

**64.** (Deleted)

**65.** (Deleted)

**66.** (Deleted)

**67.** A method of manufacturing a light sending and receiving module by ferrules comprising:
a first step of removing a covering portion from an optical fiber;
a second step of fitting a ferrule into a portion from which the covering portion has been removed;
a third step of cutting out an end portion of the ferrule to form a step portion and exposing a portion of the circumferential face of the optical fiber from a flat face of the step portion;
a fourth step of obliquely cutting away an end face of the step portion to form an inclined face so that a ferrule joining member can be formed; and
a fifth step of inserting the ferrule joining member into a guide sleeve for positioning and butting end faces of the optical fibers to each other via an optical filter.

**68.** A method of manufacturing a light sending and receiving module by ferrules comprising:
a first step of forming a window portion having a bottom in the ferrule joining member so that an insertion pore penetrating in the axial direction of the ferrule joining member can be opened;
a second step of forming a small width groove, which crosses the axial direction of the insertion pore, on a bottom face of the window portion in the ferrule joining member; and
a third step of inserting the pair of optical fibers into the insertion pore, a third step of inserting an optical filter, which conducts light turnout when end faces of the optical fibers are butted to each other, into the small width groove, alternatively inserting a half mirror which conducts light branching when end faces of the optical fibers are butted to each other so that the optical fibers can be optically coupled to each other, and a third step of holding the optical fibers by a holding portion formed so that the bottom face of the window portion can be located on the opening side of the window portion compared with the axis of the optical fibers when the optical fibers are inserted into the insertion pore.

**69.** A method of manufacturing a light sending and receiving module by ferrules comprising:
a first step of inserting an optical fiber into an insertion pore penetrating in the axial direction of the ferrule joining member;
a second step of forming a window portion in the ferrule joining member, the cross section of which is a substantial C-shape, so that a portion of the circumferential face of the optical fiber can be exposed, and a second step of forming a holding portion for holding the optical fiber while a bottom face of the window portion is being located on the opening side of the window portion compared with the neutral point of the optical fiber;
a third step of forming a small width groove in the ferrule joining member so that the small width groove can cross the axial direction of the ferrule joining member; and
a fourth step of inserting an optical filter, which conducts light turnout when end faces of the optical fibers are butted to each other, into the small width groove, alternatively inserting a half mirror which conducts light branching when end faces of the optical fibers are butted to each other so that the optical fibers can be optically coupled to each other, and a fourth step of holding the optical fibers by a holding portion formed so that a bottom face of the window portion can be located on the opening side of the window portion compared with the axis of the optical fibers when the optical fibers are inserted into the insertion pore.

**70.** (Amended)
A method of manufacturing a light sending and receiving module by ferrules comprising:
a first step of removing a covering portion from an optical fiber;
a second step of forming a step portion by cutting out an end portion of the ferrule;
a third step of engaging a ferrule having the step portion with a portion of the optical fibers from which a covering portion of the optical fibers has been removed so that a portion or all of the circumferential face of the portion of the optical fibers from which the covering portion of the optical fibers has been removed can be exposed from a flat face of the step portion;
a fourth step of forming an inclined face on the end face of the ferrule joining member by obliquely cutting away an end face of the step portion;
a fifth step of inserting the ferrule joining member into a guide sleeve for positioning and butting end faces of the optical fibers to each other via an optical filter or a half mirror; and
a sixth step of providing a face light emitting element or a face light receiving element on the optical coupling portion of the optical fibers.

**71.** A method of manufacturing a light sending and receiving module by ferrules comprising:
a first step of removing a covering portion from an optical fiber;
a second step of fitting a ferrule into a portion from which the covering portion has been removed;
a third step of cutting out an end portion of the ferrule to form a step portion and exposing a portion of the circumferential face of the optical fiber from a flat face of the step portion;
a fourth step of forming a printed board on the step portion and the flat face;
a fifth step of obliquely cutting away an end face of the step portion to form an inclined face so that a ferrule joining member can be formed; and
a sixth step of positioning the ferrule joining member and butting end faces of the optical fibers to each other via an optical filter or a half mirror.

**72.** (Deleted)

**73.** A method of manufacturing a light sending and receiving module by ferrules comprising:
a first step of removing a covering portion from an optical fiber;
a second step of fitting a ferrule into a portion from which the covering portion has been removed;
a third step of exposing a portion of the circumferential face of the optical fiber from the flat face when a step portion having a flat face a little higher than the outer circumferential face of the optical fiber is formed by cutting out the end portion of the ferrule;
a fourth step of forming an inclined face in each ferrule joining member by obliquely cutting away an end face of the step portion; and
a fifth step of positioning the ferrule joining member and butting end faces of the optical fibers to each other via an optical filter or a half mirror.

**74.** A method of manufacturing a light sending and receiving module by ferrules comprising:
a first step of removing a covering portion from an optical fiber;
a second step of fitting a ferrule into a portion from which the covering portion has been removed;
a third step of cutting out an end portion of the ferrule to form a step portion and exposing a portion of the circumferential face of the optical fiber from a flat face of the step portion;
a fourth step of forming an inclined face by obliquely cutting away an end face of the step portion so as to form a ferrule joining member; and
a fifth step of inserting the ferrule joining member into a guide sleeve for positioning and butting end faces of the optical fibers to each other via an optical filter which is formed by laminating a plurality of thin film filters on one end face, or via a half mirror which is formed by laminating a plurality of thin film mirrors.

**75.** A method of manufacturing a light sending and receiving module by ferrules, the light sending and receiving module by ferrules including a connecting portion in which the ferules to which end portions of a pair of optical fibers are fixed are butted to each other and also including a receiving portion for taking out a signal ray from an optical fiber butting face composing the connecting portion or including a sending portion for sending out a signal ray from the connecting portion to the optical fiber,
the method of manufacturing the light sending and receiving module by ferrules comprising the steps of:
forming a ferrule joining portion for fixing the optical fiber, in the pair of ferrules while a portion or all of the outer circumference of the optical fiber is being exposed from the end portion side composing the connecting portion;
providing an optical filter or a half mirror on the end face from which the optical fiber fixed to the ferrule joining portion is exposed;
inserting outwardly a guide sleeve having a slit, which is cut out from one end to the other end in the central axis direction, onto an outer circumferential face of the ferrule joining portion when end faces of the ferrule joining members are butted and fixed to each other via the optical filter or the half mirror;
dripping adhesive from a window portion, which is formed being cut out in the guide sleeve at a position of an inverse positional phase to the positional phase of the slit or being cut out in the neighborhood of this position in order to insert and arrange the receiving portion, to between the end faces on which the ferrule joining members corresponding to the connecting portion are butted to each other; and
discharging and removing the surplus adhesive outside from the slit arranged at a lower position of the guide sleeve.

**76.** (Deleted)

**77.** (Deleted)

**78.** (Added)
A method of manufacturing a light sending and receiving module by ferrules comprising:
a first step of removing a covering portion from the optical fiber;
a second step of forming a step portion by cutting out an end portion of the ferrule;
a third step of engaging the ferrule having the step portion with a portion of the optical fiber from which a covering portion has been removed so that a portion of the portion from which the covering portion has been removed can be exposed from a flat face of the step portion;
a fourth step of forming a ferrule joining member when an inclined face is formed by obliquely cutting away an end face of the step portion; and
a fifth step of inserting the ferrule joining member into a guide sleeve for positioning so that end faces of the optical fibers can be butted to each other via an optical filter.

Statement under Art. 19.1 PCT
Explanation According to Article 19, Paragraph 1 of the Convention
According to claim 1, when a light sending and receiving module is manufactured, a portion of the covering portion of the optical fiber is removed, however, a core layer and clad layer, which are element wire portions, are not eliminated. Therefore, it has been made clear that the diffusion caused by the elimination of the clad layer can be avoided.
   - In the cited reference (JP 6-75137A; Hitachi, Ltd.), the clad layer of the optical fiber is eliminated.
   - In the cited reference (JP 2000-284152A; The Tohoku Electric Power Co., Inc.), a ferrule to be externally attached to the optical fiber is made of material having a light transmitting property, and the light sent from the optical fiber is transmitted through this transparent ferrule and taken out.

   According to the present invention, when the clad layer is eliminated, no diffusion is caused. Therefore, the present invention provides an effect that the transmitted light can be effectively taken out from the optical fiber. The transmitted light emergent from the clad layer, which is sent from optical fiber, can be taken outside from a step portion open to the ferrule. Therefore, it is possible to provide an effect that the light of low attenuation can be taken out.
According to claim 70, when a light sending and receiving module is manufactured, a portion of the covering portion of the optical fiber is removed, however, a core layer and clad layer, which are element wire portions, are not eliminated. Therefore, it has been made clear that the diffusion caused by the elimination of the clad layer can be avoided.
